# EUROPEAN PATENT APPLICATION

(11) **EP 4 745 799 A1**
(43) Date of publication of application: **20.05.2026**
(21) Application number: 24881212.5
(22) Date of filing: 16.08.2024
(51) Int. Cl.: G06F 16/538

(54) **VIDEO CREATION METHOD AND ELECTRONIC DEVICE**

(30) Priority: 27.10.2023 CN 202311418278; 10.01.2024 CN 202410046038
(71) Applicant: Honor Device Co., Ltd., Shenzhen, Guangdong 518040 (CN)
(72) Inventor: YI, Jie, Shenzhen, Guangdong 518040 (CN); WANG, Di, Shenzhen, Guangdong 518040 (CN); LUO, Lan, Shenzhen, Guangdong 518040 (CN)
(74) Representative: Isarpatent
(86) International application number: PCT/CN2024/112885
(87) International publication number: WO 2025/086844

(57) **Abstract**

A video creation method and an electronic device are provided, and relate to the field the terminal technologies. The method includes: displaying a first search result in response to a first image search request, where the first search result includes first thumbnails of a plurality of first image materials; displaying a first video in response to a video generation operation, where the first video includes the plurality of first image materials; displaying a second search result in response to a second image search request, where the second search result includes options of a plurality of first photo albums and a first control, the plurality of first photo albums include a second photo album, and the second photo album includes a plurality of second image materials; and displaying a second video in response to a selection operation on an option of the second photo album and a video generation operation, where the second video includes the plurality of second image materials. In view of this, the electronic device can intelligently search for image materials, and present search results in different forms for different image search requests, to facilitate video creation, thereby improving efficiency of human-machine interaction.

## Description

This application claims priority to Chinese Patent Application No. 202311418278.6, filed with the China National Intellectual Property Administration on October 27, 2023 and entitled " LARGE MODEL BASED VIDEO MANUFACTURING METHOD AND ELECTRONIC DEVICE", which is incorporated herein by reference in its entirety.

This application claims priority to Chinese Patent Application No. 202410046038.6, filed with the China National Intellectual Property Administration on January 10, 2024 and entitled "VIDEO CREATION METHOD AND ELECTRONIC DEVICE", which is incorporated herein by reference in its entirety.

### TECHNICAL FIELD

Embodiments of this application relate to the field of terminal technologies, and in particular, to a video creation method and an electronic device.

### BACKGROUND

In an electronic device such as a mobile phone or a tablet, a video may be usually created by using a video edit application. For example, a plurality of images in a gallery application of the electronic device are manufactured into a video clip. In the foregoing video creation solution, a user first needs to select images, and then the electronic device generates a video based on the images selected by the user.

However, a quantity of images included in the electronic device is usually large, and it is quite troublesome for the user to select images from the electronic device, resulting in extremely low efficiency of human-computer interaction in a video creation process.

### SUMMARY

This application provides a video creation method and an electronic device, so that images in the electronic device can be intelligently searched for, and can be used for video creation. Further, search results are presented in different forms for different requirements, to facilitate video creation, thereby improving efficiency of human-computer interaction.

To achieve the foregoing objective, embodiments of this application use the following technical solutions.

According to a first aspect, this application provides a video creation method, applied to an electronic device. The electronic device may present search results in different forms for different image search requests (for example, denoted as a first image search request and a second image search request).

Specifically, a first search result is displayed in response to the first image search request, where the first search result includes first thumbnails of a plurality of first image materials and a first control. To be specific, for the first image search request, the electronic device presents found image materials in a form of thumbnails. A first video is displayed in response to a trigger operation on the first control in the first search result, where the first video includes the plurality of first image materials.

In addition, a second search result is displayed in response to the second image search request, where the second search result includes options of a plurality of first photo albums and the first control. Each photo album includes image materials of a type that are found, for example, image materials of types such as group photo type and a building type. To be specific, for the second image search request, the electronic device presents found image materials in a form of photo albums. The plurality of first photo albums include a second photo album, and the second photo album includes a plurality of second image materials. The second photo album is selected in response to a selection operation on an option of the second photo album. To be specific, image materials in the second photo album are selected to create a video. A second video is displayed in response to a trigger operation on the first control in the second search result, where the second video includes the plurality of second image materials.

In conclusion, in this application, first, the electronic device may search based on the image search request, and provide a search result, and the user does not need to manually search for images from the electronic device, to improve image obtaining efficiency. In addition, the electronic device may provide search results in corresponding forms for different image search requests, to facilitate video creation. In addition, the electronic device further provides the first control in the search result, for quick video creation. In this way, efficiency of human-computer interaction in the entire video creation process is improved.

In a possible design manner of the first aspect, the second image search request includes a selection operation on an option of a second topic, or the second image search request includes a trigger operation on a second creation recommendation card. The second topic is a topic of a video creation type, the second creation recommendation card is a creation recommendation card of video creation, and topic content of the second topic and a recommendation theme of the second creation recommendation card include at least one of the following: birthday, holiday, anniversary, trip, and growth record. In other words, the second image search request is a request related to a search requirement with a long timeline such as the birthday, the holiday, the anniversary, the trip, or the growth record. For example, the second image search request is a selection operation on the following topic options "birthday blessing" and "growth record", or a trigger operation on the following creation recommendation card of a birthday blessing video, a creation recommendation card of an anniversary video, a creation recommendation card of a journey 1, and a creation recommendation card of a revisited destination 2.

In view of this, for the search requirement with a long timeline, the electronic device may present the search result in a form of photo albums, so that a large quantity of image materials can be presented by types, for the user to select photo albums for video creation.

In a possible design manner of the first aspect, the first image search request includes a selection operation on an option of a first topic, or the first image search request includes a trigger operation on a first creation recommendation card. The first topic is a topic of the video creation type, the first creation recommendation card is a creation recommendation card of video creation, and topic content of the first topic and a recommendation theme of the first creation recommendation card do not include the birthday, the holiday, the anniversary, the trip, or the growth record. In other words, the first image search request is not a request related to the foregoing search requirement with a long timeline. For example, the first image search request is a selection operation on the following topic option "spring outing", or a trigger operation on the following creation recommendation card of newly created images.

In view of this, for a search requirement with a short timeline, the electronic device may present the search result in a form of thumbnails, so that some or all materials in the search result can be presented intuitively, for the user to determine to use these image materials for video creation.

In a possible design manner of the first aspect, the electronic device may further present a search result in a corresponding form based on a quantity (denoted as less than a first quantity, or greater than or equal to the first quantity) of found image materials.

Specifically, displaying the first search result in response to the first image search request includes: displaying the first search result in response to the first image search request when a quantity of image materials that are found by the electronic device and that match the first image search request is less than a first quantity (namely, the following quantity 1). In other words, when the quantity of the found image materials is relatively small, the electronic device presents the search result in the form of the thumbnails.

In addition, displaying the second search result in response to the second image search request includes: displaying the second search result in response to the second image search request when a quantity of image materials that are found by the electronic device and that match the second image search request is greater than or equal to a second quantity. In other words, when the quantity of the found image materials is relatively large, the electronic device presents the search result in the form of the photo albums, so that the found image materials can be presented by types, for the user to view and create a video.

In view of this, in this design manner, quantities of image materials found by the electronic device may be different for different image search requests (for example, the first image search request and the second image search request), and the search results are presented in different forms. Further, at different time points, quantities of image materials found by the electronic device may also be different even for a same image search request. Correspondingly, the electronic device also presents the search results in different forms.

In a possible design manner of the first aspect, in a scenario in which the search result is presented in the form of the photo albums, when search objects (for example, search for image materials of people or search for image materials of trips) are different, photo albums presented by the electronic device may also be different.

Specifically, displaying the second search result in response to the second image search request, where the second search result includes the options of the plurality of first photo albums includes: the plurality of first photo albums including photo albums of at least two of the following types: a group photo type, a portrait photo type, a birthday type, a festival type, and a trip type in response to the second image search request when the second image search request includes searching for image materials of people, to be specific, a search object of the second image search request is the image materials of people; or the plurality of first photo albums including photo albums of at least two of the following types: a portrait type, a building type, a scenery type, and a group photo type in response to the second image search request when the second image search request includes searching for image materials of trips, to be specific, a search object of the second image search request is the image materials of trips.

In other words, in this design manner, the electronic device may present different photo albums in the search result for different search objects, so that the found image materials can be presented in photo albums matching the current image search requirement, for the user to view and create a video.

In a possible design manner of the first aspect, in a scenario in which the search result is presented in the form of the photo albums, the electronic device may further provide an add entry for a custom photo album (namely, the following entry 3, such as "custom"), for the user to add the custom photo album for video creation.

Specifically, the second search result further includes an add entry for a custom photo album. Before displaying the second video in response to the trigger operation on the first control in the second search result, the method further includes: displaying thumbnails of a plurality of image materials in a gallery application of the electronic device in response to a trigger operation on the add entry for the custom photo album, to be specific, the image materials in the gallery application are provided to a user for selection; and displaying the second search result in response to a selection operation and an add confirmation operation on at least one second thumbnail, where the add entry for the custom photo album in the second search result is updated as the custom photo album, and the custom photo album is selected. The at least one second thumbnail corresponds to at least one third image material in the gallery application. In other words, if the user selects the at least one second thumbnail, the user selects at least one third image material in the gallery application. In addition, after adding image materials through the add entry for the custom photo album, the electronic device presents the custom photo album in the second search result, and selects the custom photo album by default for video creation. Correspondingly, the second video not only includes the plurality of second image materials, but also includes the at least one third image material in the custom photo album.

In view of this, the electronic device may not only provide the photo albums corresponding to the found image materials for selection by the user for video creation, but also provide the add entry for the custom photo album, for the user to add the custom photo album. In this way, the electronic device can create a video by combining the found image materials and the image materials added by the user.

In a possible design manner of the first aspect, the electronic device may provide different edit controls for different search requirements (for example, search requirements meeting or not meeting a first condition).

Specifically, the method further includes: displaying a first edit control (namely, "text blessing" below) of the second video in response to the trigger operation on the first control in the second search result when the second image search request meets a first condition; and displaying a second edit control (namely, "smart caption" below) of the second video in response to the trigger operation on the first control in the second search result when the second image search request does not meet the first condition. The first condition includes: the image search request includes a selection operation on an option of a third topic, where the third topic is a topic of the video creation type; or the image search request includes a trigger operation on a third creation recommendation card, where the third creation recommendation card is a creation recommendation card of video creation; and topic content of the third topic and a recommendation theme of the third creation recommendation card include at least one of the following: the birthday, the holiday, and the anniversary.

In other words, when the image search request is a request related to a search requirement of a special day such as the birthday, the holiday, or the anniversary, for example, the selection operation on the following topic option "birthday blessing" or the trigger operation on the following creation recommendation card of the birthday blessing video or the creation recommendation card of the anniversary video, the electronic device may provide the first edit control. When the search request is a request not related to the search requirement of a special day such as the birthday, the holiday, or the anniversary, for example, the selection operation on the following topic option "spring outing" or the trigger operation on the following creation recommendation card of the journey 1 or the creation recommendation card of the revisited destination 2, the electronic device may provide the second edit control. In this way, the edit controls provided by the electronic device can meet requirements of editing a video under different search requirements.

It should be noted that, the first image search request is also similar. To be specific, if the first condition is met, the first edit control is provided, or if the first condition is not met, the second edit control is provided.

In a possible design manner of the first aspect, the first edit control may be used for adding a text blessing for a video.

Specifically, after displaying the first edit control of the second video, the method further includes: displaying a first blessing in response to a trigger operation on the first edit control of the second video; and displaying a third video in response to a confirmation operation (for example, a tap operation on "OK" in a blessing card), where the third video includes the plurality of second image materials and the first blessing.

In other words, by providing the first edit control, the electronic device may provide an entry for adding a text blessing for a video created under a search requirement of a special day such as the birthday, the holiday, or the anniversary, so as to conveniently add a blessing for a video having a requirement.

In a possible design manner of the first aspect, for all image search requests that meet the first condition (the second image search request, a third image search request, and the like), after obtaining a video through creation, the electronic device provides the first edit control to add a blessing for the video. However, for different image search requests and/or different photo albums selected by the user, the electronic device provides different blessings.

Specifically, after displaying the third video response to the confirmation operation or before displaying the second search result in response to the second image search request, the method further includes: displaying a third search result in response to a third image search request, where the third search result includes options of a plurality of third photo albums and the first control, the plurality of third photo albums include a fourth photo album, and the fourth photo album includes a plurality of fourth image materials; selecting the fourth photo album in response to a selection operation on an option of the fourth photo album; and displaying a fourth video and the first edit control of the fourth video in response to a trigger operation on the first control in the third search result when the third image search request meets the first condition, where the fourth video includes the plurality of fourth image materials. The third image search request is different from the second image search request. For example, the second image search request is a requirement corresponding to a birthday related search request, and the third image search request is a request corresponding to an anniversary related search request. And/or, the fourth photo album is a photo album of a type different from that of the first photo album. To be specific, photo albums selected by the user are different. For example, the first photo album is a photo album of a group photo type, and the fourth photo album is a photo album of birthdays over the years. Correspondingly, a second blessing is displayed in response to a trigger operation on the first edit control of the fourth video, where the second blessing is different from the first blessing. A fifth video is displayed in response to a confirmation operation, where the fifth video includes the plurality of fourth image materials and the second blessing.

In other words, the electronic device may provide a targeted blessing, to make the blessing match the image search request and a photo album that is selected by the user.

In a possible design manner of the first aspect, a video obtained through editing by using various edit controls (including the first edit control and the second edit control) is additionally displayed after the original video, to achieve an add dialog effect.

Specifically, displaying the third video in response to the confirmation operation includes: displaying the third video after the second video in response to the confirmation operation. To be specific, the electronic device additionally displays, after the original second video, the third video to which the blessing is added.

In a possible design manner of the first aspect, a difference from obtaining the video through editing by using an edit control is as follows: After editing a video after entering a video edit interface through a trigger operation on the video, the electronic device replaces the original video with the video obtained through editing (denoted as a sixth video), rather than continuing to add the video obtained through editing.

Specifically, after displaying the second video, the method further includes: displaying an edit interface (for example, a video edit interface below) of the second video in response to a trigger operation on the second video; and replacing the second video with a sixth video in response to a return operation after editing is completed and saved in the edit interface, where the sixth video is a video obtained after the editing is saved.

It should be noted that, a display principle after the first video is edited is also similar, and details are not described herein again.

In other words, the electronic device may ensure to trigger editing from the video (for example, perform a trigger operation on the second video), and the video before editing is replaced with the video obtained after editing; and the electronic device may ensure to trigger editing from the edit control (for example, perform a trigger operation on the first edit control), and the video obtained after editing is additionally displayed.

In a possible design manner of the first aspect, a creation recommendation card, such as a creation recommendation card of a birthday blessing video or a creation recommendation card of an anniversary video is displayed when at least one of a time of the electronic device, a place of the electronic device, and a newly added image material in the gallery application meets a second condition, where the first image search request and/or the second image search request include/includes a trigger operation on the creation recommendation card. For details, refer to the following descriptions about Manner 5, and details are not described herein again.

In other words, the electronic device may intelligently push the creation recommendation card, to trigger image search and create a video.

In a possible design manner of the first aspect, the electronic device may further push a floating image search entry in the gallery application.

Specifically, the method further includes: displaying a first interface of the gallery application (for example, a main interface of the gallery application) in response to starting the gallery application, where the first interface includes the floating image search entry; or displaying the first interface of the gallery application in response to starting the gallery application; and displaying the floating image search entry in the first interface when a sliding speed of the first interface exceeds a first speed and/or a sliding displacement of the first interface exceeds a first displacement, to be specific, the user has a requirement of image search; and displaying a dialog box in response to a trigger operation on the floating image search entry. The first image search request and/or the second image search request include/includes inputting image search voice or image search text in the dialog box.

In other words, through the floating image search entry in the gallery application, the electronic device may provide an entry for quickly searching for image materials in the gallery application, to implement a requirement of quick image search.

According to a second aspect, this application provides a video creation method, applied to an electronic device, where a voice assistant application and a gallery application are installed in the electronic device. Specifically, the voice assistant application is started and a dialog box is displayed. A search result is displayed in the dialog box in response to an image search request, where the search result includes information about at least one image material in image materials found in the gallery application and a first control. A first video is displayed in the dialog box in response to a trigger operation on the first control, where the first video includes one or more found image materials.

In conclusion, in this application, after starting the voice assistant application, the electronic device may provide a function of intelligently searching for the images in the gallery application, to quickly search for images from the gallery application. In addition, the electronic device further provides the first control in the search result, for quick video creation. In this way, efficiency of human-computer interaction in the entire video creation process is improved.

In a possible design manner of the second aspect, starting the voice assistant application includes: starting the voice assistant application in response to a first operation. The first operation includes any one of the following: an operation of waking up the voice assistant application, refer to Manner 1 below for details; a trigger operation on an application icon of the voice assistant application, refer to Manner 2 below for details; a trigger operation on a creation recommendation card, refer to Manner 5 below for details; and a trigger operation on a floating image search entry in the gallery application, refer to Manner 6 below for details.

In a possible design manner of the second aspect, the first operation may further include a trigger operation on a video creation entry. In response to the trigger operation of a user on the video creation entry, such as a tap operation, the mobile phone may respond in the following two cases.

Specifically, starting the voice assistant application and displaying the dialog box includes: starting the voice assistant application in response to the trigger operation on the video creation entry in a first case (for example, Case 1 below), displaying topic options of a plurality of topics of a video creation type, where the topic options of the plurality of topics of the video creation type include a target topic option, and displaying the dialog box in response to a selection operation of a user on the target topic option. The first case includes: the trigger operation on the video creation entry is not received, or an image in the gallery application does not meet a creation condition. In other words, if the trigger operation is performed on the video creation entry for the first time, or the creation condition is not met, the electronic device provides topic options for user selection and video creation.

Alternatively, starting the voice assistant application and displaying the dialog box includes: starting the voice assistant application in response to the trigger operation on the video creation entry in a second case (for example, Case 2 below), and displaying the dialog box, where the dialog box includes guiding script, and the guiding script is used to guide the user to input the image search request. For example, the guiding script is "Try to input "parent and child time" and start to create a video". The second case includes: the trigger operation on the video creation entry is received, and the image in the gallery application meets the creation condition. In other words, if the trigger operation is performed on the video creation entry not for the first time, and the creation condition is met, the electronic device directly guides, in the dialog box, the user to input an image search request.

In a possible design manner of the second aspect, the image search request includes any one of the following: the trigger operation on the creation recommendation card, also refer to Manner 5 below; the selection operation on the target topic option, refer to Manner 3 below for details; and inputting voice or text indicating image search in the dialog box, refer to image search requests input in Manner 1, Manner 2, Manner 4, and Manner 6 below for details.

In a possible design manner of the second aspect, the image search request includes a selection operation on a target topic option of a second topic, or the image search request includes a trigger operation on a second creation recommendation card, and the information about the at least one image material includes a thumbnail of the at least one image material. The second topic is a topic of the video creation type, the second creation recommendation card is a creation recommendation card of video creation, and topic content of the second topic and a recommendation theme of the second creation recommendation card include at least one of the following: birthday, holiday, anniversary, trip, and growth record.

In other words, the image search request is a request related to a search requirement with a long timeline such as the birthday, the holiday, the anniversary, the trip, or the growth record. For example, the image search request is a selection operation on the following topic options "birthday blessing" and "growth record", or a trigger operation on the following creation recommendation card of a birthday blessing video, a creation recommendation card of an anniversary video, a creation recommendation card of a journey 1, and a creation recommendation card of a revisited destination 2. In view of this, for the search requirement with a long timeline, the electronic device may present the search result in a form of photo albums, so that a large quantity of image materials can be presented by types, for the user to select photo albums for video creation.

In a possible design manner of the second aspect, the image search request includes a selection operation on a target topic option of a first topic, or the image search request includes a trigger operation on a first creation recommendation card, the search result further includes options of a plurality of photo albums, one photo album includes one or more image materials, the information about the at least one image material includes option covers of the plurality of photo albums, and the option cover of each photo album is a thumbnail of one image material included in the photo album. The first topic is a topic of the video creation type, the first creation recommendation card is a creation recommendation card of video creation, and topic content of the first topic and a recommendation theme of the first creation recommendation card do not include the birthday, the holiday, the anniversary, the trip, or the growth record.

In other words, the image search request is not a request related to the search requirement with a long timeline. For example, the image search request is a selection operation on the following topic option "spring outing", or a trigger operation on the following creation recommendation card of newly created images. In view of this, for a search requirement with a short timeline, the electronic device may present the search result in a form of thumbnails, so that some or all materials in the search result can be presented intuitively, for the user to determine to use these image materials for video creation.

In a possible design manner of the second aspect, the plurality of photo albums include a second photo album. Before displaying the first video obtained through creation in the dialog box in response to the trigger operation on the first control, the method further includes: selecting the second photo album in response to a selection operation on an option of the second photo album. The first video obtained through creation includes an image material in the second photo album. In other words, the electronic device may create a video based on a photo album selected by the user.

In a possible design manner of the second aspect, the method further includes: displaying a first edit control (namely, "text blessing" below) in response to the trigger operation on the first control when the image search request meets a first condition; and displaying a second edit control (namely, "smart caption" below) in response to the trigger operation on the first control when the image search request does not meet the first condition. The first condition includes: the image search request includes a selection operation on an option of a third topic, where the third topic is a topic of the video creation type; or the image search request includes a trigger operation on a third creation recommendation card, where the third creation recommendation card is a creation recommendation card of video creation; and topic content of the third topic and a recommendation theme of the third creation recommendation card include at least one of the following: the birthday, the holiday, and the anniversary.

In other words, when the image search request is a request related to a search requirement of a special day such as the birthday, the holiday, or the anniversary, for example, the selection operation on the following topic option "birthday blessing" or the trigger operation on the following creation recommendation card of the birthday blessing video or the creation recommendation card of the anniversary video, the electronic device may provide the first edit control. When the search request is a request not related to the search requirement of a special day such as the birthday, the holiday, or the anniversary, for example, the selection operation on the following topic option "spring outing" or the trigger operation on the following creation recommendation card of the journey 1 or the creation recommendation card of the revisited destination 2, the electronic device may provide the second edit control. In this way, the edit controls provided by the electronic device can meet requirements of editing a video under different search requirements.

In a possible design manner of the second aspect, after displaying the first edit control, the method further includes: displaying a first blessing in response to a trigger operation on the first edit control; and displaying a second video in response to a confirmation operation, where the second video includes the one or more found image materials and the first blessing.

In other words, by providing the first edit control, the electronic device may provide an entry for adding a text blessing for a video created under a search requirement of a special day such as the birthday, the holiday, or the anniversary, so as to conveniently add a blessing for a video having a requirement.

In a possible design manner of the second aspect, displaying the second video in response to the confirmation operation includes: displaying the second video after the first video in response to the confirmation operation.

In other words, a video obtained through editing by using various edit controls (including the first edit control and the second edit control) is additionally displayed after the original video, to achieve an add dialog effect.

In a possible design manner of the second aspect, after displaying the first video in the dialog box, the method further includes: displaying an edit interface of the first video in response to a trigger operation on the first video; and replacing the first video with a third video in response to a return operation after editing is completed and saved in the edit interface, where the third video is a video obtained after the editing is saved.

In other words, a difference from obtaining the video through editing by using an edit control is as follows: After editing a video after entering a video edit interface through a trigger operation on the video, the electronic device replaces the original video with the video obtained through editing, rather than continuing to add the video obtained through editing.

According to a third aspect, this application further provides an electronic device, including a display, a memory, and one or more processors. The display, the memory, and the processors are coupled together. The memory is configured to store computer program code, the computer program code includes computer instructions, and when the computer instructions are executed by the processor, the electronic device is enabled to perform the method in any one of the first aspect and the possible designs of the first aspect.

According to a fourth aspect, this application provides a chip system. The chip system is used in an electronic device including a display and a memory. The chip system includes one or more interface circuits and one or more processors. The interface circuits and the processors are interconnected through lines. The interface circuit is configured to: receive a signal from the memory of the electronic device, and send the signal to the processor, where the signal includes computer instructions stored in the memory. When the processor executes the computer instructions, the electronic device performs the method in any one of the first aspect and the possible design manners of the first aspect.

According to a fifth aspect, this application provides a computer storage medium, including computer instructions. When the computer instructions are run on an electronic device, the electronic device is enabled to perform the method in any one of the first aspect and the possible design manners of the first aspect.

According to a sixth aspect, this application provides a computer program product. When the computer program product is run on a computer, the computer is enabled to perform the method in any one of the first aspect and the possible design manners of the first aspect.

It may be understood that, for beneficial effects that can be achieved by the electronic device provided in the third aspect, the chip system provided in the fourth aspect, the computer storage medium provided in the fifth aspect, and the computer program product provided in the sixth aspect, refer to beneficial effects of any one of the first aspect, the second aspect, and the possible design manners of the first aspect and the second aspect. Details are not described herein again.

### BRIEF DESCRIPTION OF DRAWINGS

FIG. 1 is a diagram of a hardware structure of a mobile phone according to an embodiment of this application;
FIG. 2A, FIG. 2B, and FIG. 2C are a diagram of Manner 1 of triggering image search according to an embodiment of this application;
FIG. 3A, FIG. 3B, and FIG. 3C are a diagram of Manner 2 of triggering image search according to an embodiment of this application;
FIG. 4A, FIG. 4B, FIG. 4C, FIG. 4D, and FIG. 4E are a diagram of Manner 3 of triggering image search according to an embodiment of this application;
FIG. 5A and FIG. 5B are a diagram of a first image search entry in Manner 4 of triggering image search according to an embodiment of this application;
FIG. 6A and FIG. 6B are a diagram of a second image search entry in Manner 4 of triggering image search according to an embodiment of this application;
FIG. 7A, FIG. 7B, FIG. 7C, FIG. 7D, FIG. 7E, and FIG. 7F are a diagram of a third image search entry in Manner 4 of triggering image search according to an embodiment of this application;
FIG. 8A, FIG. 8B, FIG. 8C, and FIG. 8D are a diagram of Manner 4 of triggering image search according to an embodiment of this application;
FIG. 9A, FIG. 9B, and FIG. 9C are a diagram of a creation recommendation entry in Manner 5 of triggering image search according to an embodiment of this application;
FIG. 10A and FIG. 10B are a diagram of Manner 5 of triggering image search according to an embodiment of this application;
FIG. 11A, FIG. 11B, and FIG. 11C are a diagram of Manner 6 of triggering image search according to an embodiment of this application;
FIG. 12A, FIG. 12B, and FIG. 12C are a first diagram of a presentation form of a search result according to an embodiment of this application;
FIG. 13A and FIG. 13B are a second diagram of a presentation form of a search result according to an embodiment of this application;
FIG. 14A, FIG. 14B, and FIG. 14C are a third diagram of a presentation form of a search result according to an embodiment of this application;
FIG. 15A, FIG. 15B, FIG. 15C, and FIG. 15D are a fourth diagram of a presentation form of a search result according to an embodiment of this application;
FIG. 16A, FIG. 16B, FIG. 16C, and FIG. 16D are a diagram of adjusting image materials and creating a video according to an embodiment of this application;
FIG. 17A, FIG. 17B, FIG. 17C, FIG. 17D, and FIG. 17E are a diagram of adjusting photo albums according to an embodiment of this application;
FIG. 18A, FIG. 18B, and FIG. 18C are a diagram of creating a video by using photo albums according to an embodiment of this application;
FIG. 19 is a diagram of a blessing card according to an embodiment of this application;
FIG. 20A, FIG. 20B, FIG. 20C, FIG. 20D, FIG. 20E, and FIG. 20F are a diagram of a blessing according to an embodiment of this application;
FIG. 21A, FIG. 21B, FIG. 21C, and FIG. 21D are a diagram of adding a blessing by using a blessing card according to an embodiment of this application;
FIG. 22 is a diagram of a caption card according to an embodiment of this application;
FIG. 23A, FIG. 23B, FIG. 23C, and FIG. 23D are a diagram of editing a video through a video edit interface according to an embodiment of this application; and
FIG. 24A and FIG. 24B are a diagram of saving a video to a gallery application according to an embodiment of this application.

### DESCRIPTION OF EMBODIMENTS

The following describes technical solutions in embodiments of this application with reference to the accompanying drawings in embodiments of this application. In descriptions of embodiments of this application, terms used in the following embodiments are merely intended to describe specific embodiments, but are not intended to limit this application. The terms "a", "the", and "this" of singular forms used in this specification and the appended claims of this application are also intended to include expressions such as "one or more", unless otherwise specified in the context clearly. It should be further understood that, in the following embodiments of this application, "at least one" and "one or more" mean one or more (including two). The term "and/or" is used to describe an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily refer to a same embodiment, but mean "one or more but not all embodiments", unless otherwise specifically emphasized in another manner. The terms "include", "have", and their variants all mean "include but are not limited to", unless otherwise specifically emphasized in another manner. The term "connection" includes direct connection and indirect connection, unless otherwise specified. The terms "first" and "second" are used only for descriptive purposes, and cannot be understood as indicating or implying relative importance or implicitly indicating a quantity of indicated technical features.

In embodiments of this application, the word "example", "for example", or the like is used to represent giving an example, an illustration, or a description. Any embodiment or design scheme described as "example" or "for example" in embodiments of this application should not be explained as being more preferred or having more advantages than another embodiment or design scheme. Exactly, use of the word "example", "for example", or the like is intended to present a related concept in a specific manner.

The video creation method provided in this application may be applied to a scenario in which an electronic device creates a video. Specifically, the electronic device may receive an image search request of a user. For example, the user may input search key words through text or voice, to trigger the image search request, for example, input "images of Jimmy" or "images of weekend play". In response to the image search request, the electronic device may search for image materials matching the image search request in the electronic device. Using an example in which the search key words "images of Jimmy" are input, in response to inputting "images of Jimmy" by the user, the electronic device may find image materials including "Jimmy" in the electronic device. In this way, the electronic device can quickly find image materials matching the image search request, and the user does not need to manually search for the image materials.

For different image search requests, the electronic device may present the found image materials in different forms, for the user to select image materials and create a video. For example, for the search key words "images of Jimmy", after finding the image materials, the electronic device may divide the image materials into a plurality of photo albums, and then present the found image materials in a form of photo albums, to facilitate the user in selecting one or more photo albums to create a video. For another example, for the search key words "images of weekend play", after finding the image materials, the electronic device may present thumbnails of some high-quality image materials in the found image materials, to facilitate the user in viewing image materials based on the thumbnails and creating a video.

For example, the electronic device may be a mobile phone, a tablet, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR)/virtual reality (virtual reality, VR) device, or another electronic device having a video manufacturing requirement, for example, an electronic device installed with an application (application) having a video manufacturing function. A specific form of the electronic device is not specially limited in embodiments of this application. The following describes solutions of this application by using an example in which the electronic device is a mobile phone.

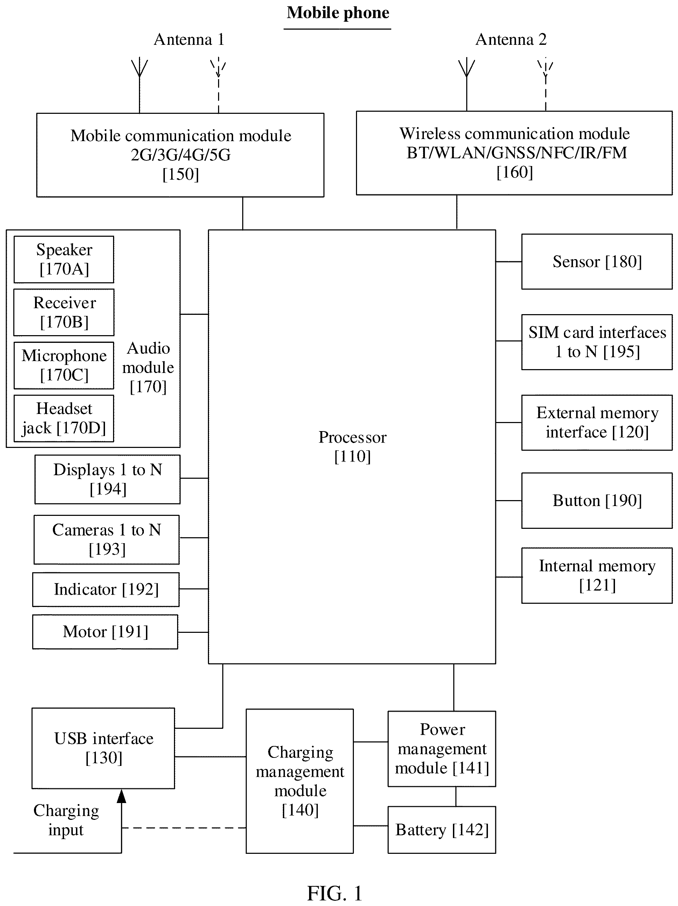

With reference to FIG. 1, the mobile phone may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor 180, a button 190, a motor 191, an indicator 192, a camera 193, a display 194, a subscriber identity module (subscriber identification module, SIM) card interface 195, and the like.

It may be understood that the structure shown in this embodiment of the present invention does not constitute a specific limitation on the mobile phone. In some other embodiments of this application, the mobile phone may include more or fewer components than those shown in the figure, or some components may be combined, or some components may be split, or there may be a different component layout. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processor (neural-network processing unit, NPU), and the like. Different processing units may be independent components, or may be integrated into one or more processors.

In some embodiments, the mobile phone may complete the video creation method by using the processor 110, to intelligently search for image materials matching the image search request, and present the image materials to the user, and may also present the image materials in different forms for different image search requests.

A wireless communication function of the mobile phone may be implemented through the antenna 1, the antenna 2, the mobile communication module 150, the wireless communication module 160, the modem processor, the baseband processor, and the like.

The mobile phone implements a display function by using the GPU, the display 194, the application processor, and the like. The GPU is an image processing microprocessor and is connected to the display 194 and the application processor. The GPU is configured to perform mathematical and geometric computing for graphics rendering. The processor 110 may include one or more GPUs that execute program instructions to generate or change display information.

The display 194 is configured to display an image, a video, and the like. In some embodiments, the mobile phone may display video creation related information such as a search result and a video creation entry by using the display 194.

The mobile phone may implement a shooting function by using the ISP, the camera 193, the video codec, the GPU, the display 194, the application processor, and the like.

The mobile phone may implement an audio function, for example, music playing and recording, through the audio module 170, the speaker 170A, the receiver 170B, the microphone 170C, the headset jack 170D, the application processor, and the like.

The button 190 may include a power button, a volume button, and the like. The button 190 may be a mechanical button, or may be a touch button. The mobile phone may receive a key input, and generate a key signal input related to user settings and function control of the mobile phone. The motor 191 may generate a vibration prompt. The motor 191 may be configured to provide an incoming call vibration prompt, or may be configured to provide a touch vibration feedback. The indicator 192 may be an indicator light, and may indicate a charging status and a power level change, or may indicate a message, a missed call, a notification, and the like. The SIM card interface 195 is configured to connect to a SIM card The SIM card may be inserted into the SIM card interface 195 or removed from the SIM card interface 195, to implement contact with or separation from the mobile phone.

The software system of the mobile phone may use a layered architecture, an event-driven architecture, a microkernel architecture, a microservice architecture, or a cloud architecture. This is not specifically limited in embodiments of this application.

The video creation method provided in this embodiment of this application may be implemented in a mobile phone having the foregoing software and hardware structure. The following further describes, in detail with reference to the accompanying drawings, the video creation method provided in this embodiment of this application.

In some embodiments, the mobile phone may provide image search and video creation functions by using a voice assistant application (a voice assistant for short below), such as YOYO. In reality, this is not limited thereto. For example, the mobile phone may also provide the image search and video creation functions by using other applications such as a dedicated video edit application and a gallery application.

The following describes solutions of this application mainly by using the voice assistant as an example. It may be understood that an implementation principle is also similar for another application, and details are not described herein gain.

The mobile phone may provide the following at least one manner of triggering the mobile phone to start image search.

Manner 1: An image search request is input after the voice assistant is waken up.

Wake-up manners of the voice assistant include but are not limited to at least one of the following manners. A wake-up manner 1 is key word wake-up: The mobile phone recognizes wake-up voice that includes key words and that is input by the user, for example, "Hello YOYO", and the voice assistant can be waken up. In a wake-up manner 2, the mobile phone detects an operation of touching and holding a power button by the user, and the voice assistant can be waken up. A wake-up manner 3 is breath wake-up: The mobile phone detects that the user lifts the mobile phone and aligns the mouth with the microphone, and the voice assistant can be waken up. The wake-up manner is not specifically limited in this embodiment of this application.

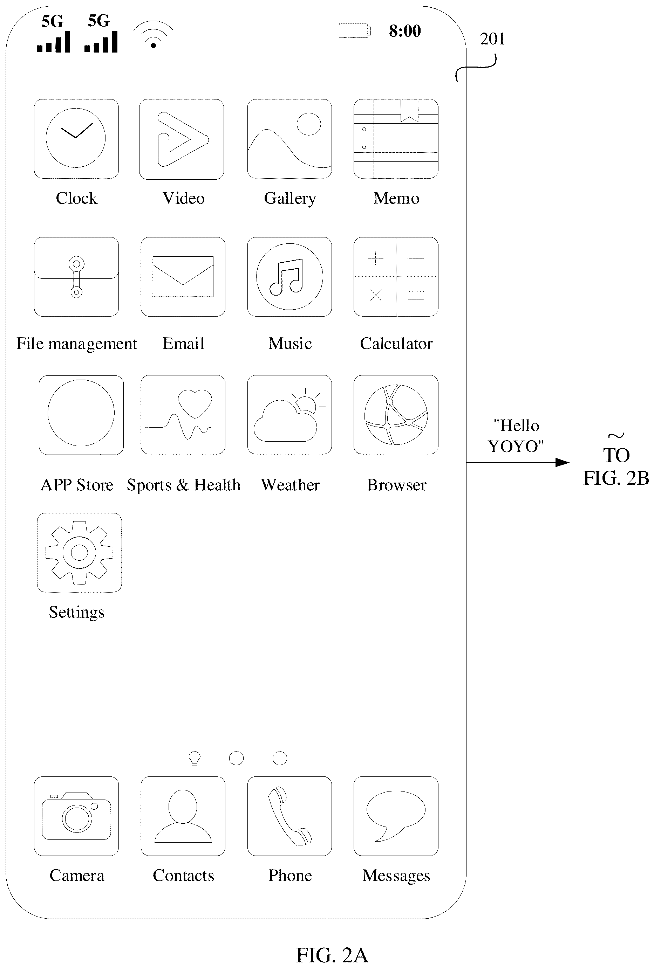

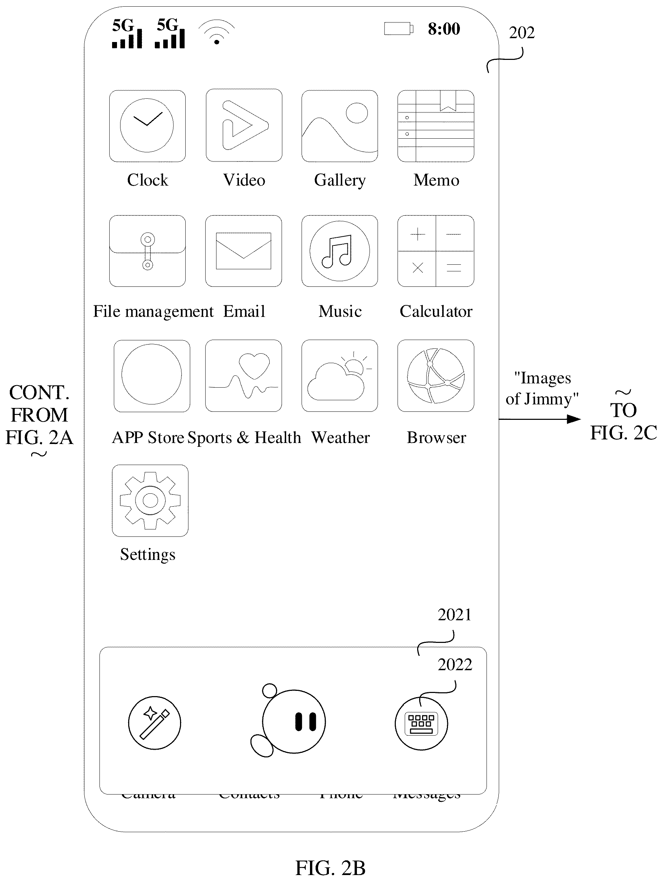

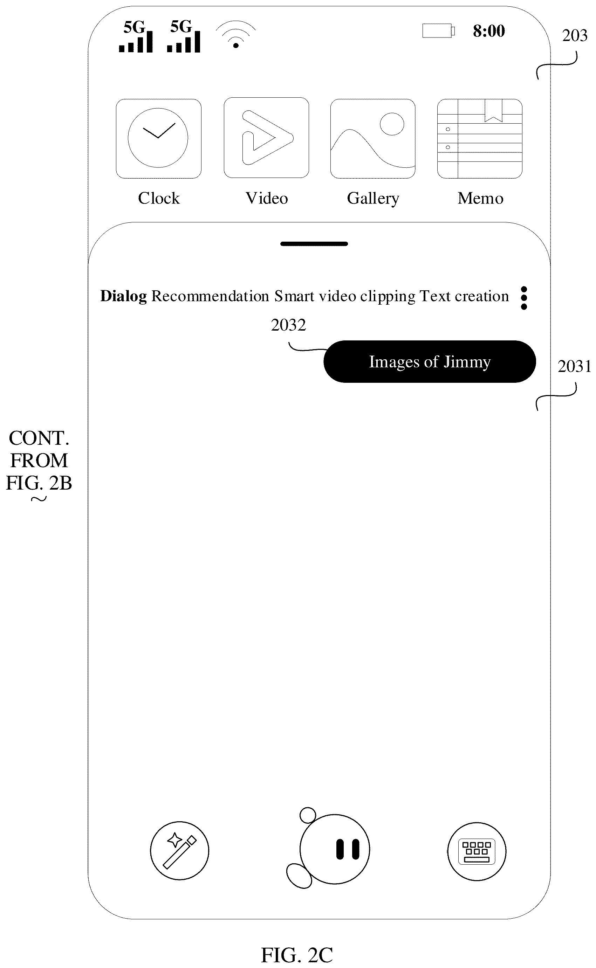

Using an example in which the wake-up manner is inputting the wake-up voice "Hello YOYO", with reference to FIG. 2A, FIG. 2B, and FIG. 2C, when the mobile phone displays an interface 201, the mobile phone may wake up the voice assistant in response to inputting the wake-up voice "Hello YOYO". The user may display an interface 202 after waking up the voice assistant. The interface 202 includes a prompt card 2021 of the voice assistant, to inform that the voice assistant has been waken up.

After the mobile phone wakes up the voice assistant in the foregoing manner, the voice assistant is in a waken-up state. When the voice assistant is in the waken-up state, the mobile phone may receive a voice input of the user. For example, the user may input voice "images of Jimmy". Alternatively, the mobile phone may also receive a text input of the user. The prompt card 2021 in the interface 201 shown in FIG. 2A, FIG. 2B, and FIG. 2C includes a keyboard control 2022. In response to a trigger operation (for example, a tap operation) of the user on the keyboard control 2022, the mobile phone may provide a keyboard for the user to input text.

In response to inputting, by the user, voice or text indicating image search (namely, inputting an image search request), the mobile phone may display a dialog box of the voice assistant (a dialog box for short below), where the dialog box includes the image search request.

Using an example in which the voice indicating image search is "images of Jimmy", still with reference to FIG. 2A, FIG. 2B, and FIG. 2C, when the mobile phone displays the interface 202, the mobile phone may display an interface 203 in response to inputting the voice "images of Jimmy" by the user, where the interface 203 includes a dialog box 2031 of the voice assistant. The dialog box 2031 includes a dialog "images of Jimmy" 2032.

In addition, in response to inputting the image search request by the user, the mobile phone may further search for image materials matching the image search request in the gallery application, namely, trigger to start image search.

At this point, it should be noted that, in this specification, the format of the image search request input by the user through text or voice may be arbitrary. Using searching for images of Jimmy as an example, the search request may be "images of Jimmy", "search for images of Jimmy", "images including Jimmy", or the like. It may be understood that images usually need to be searched for video creation. Therefore, the format of the image search request may also be "generate/create a video of...", for example, generate a birthday blessing video for Jimmy or generate a trip video. In reality, the mobile phone may limit the voice or text image search request to one or more of the foregoing fixed formats, such as a fixed format of "generate a video of...", so as to recognize a requirement of the user. This is not repeated below.

Manner 2: An image search request is input after a dialog box of the voice assistant is entered.

A desktop of the mobile phone displays an icon of the voice assistant. In response to a trigger operation of the user on the icon of the voice assistant, such as a tap operation, the mobile phone may display the dialog box.

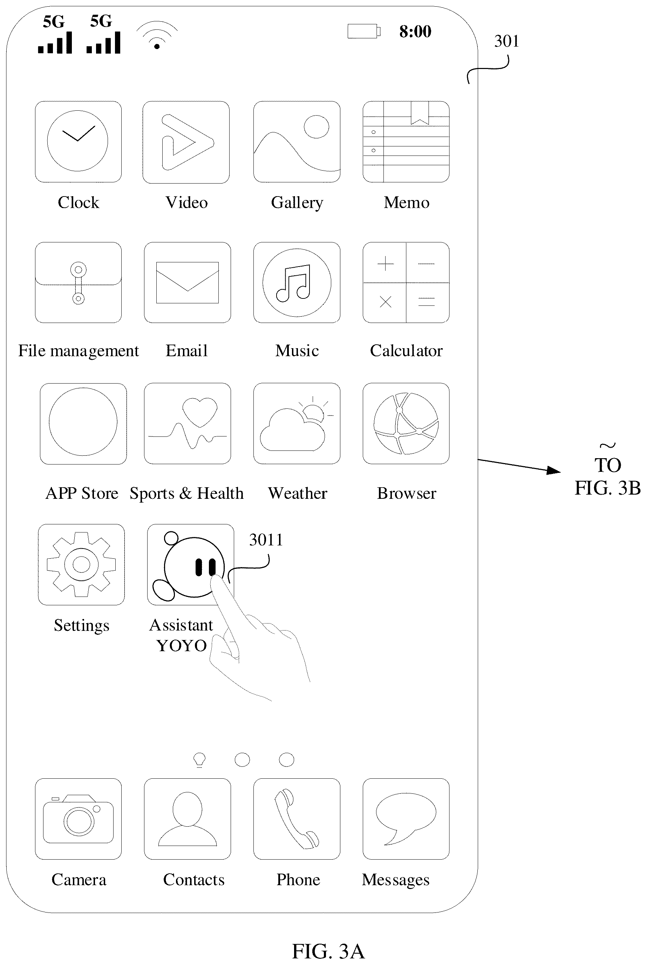

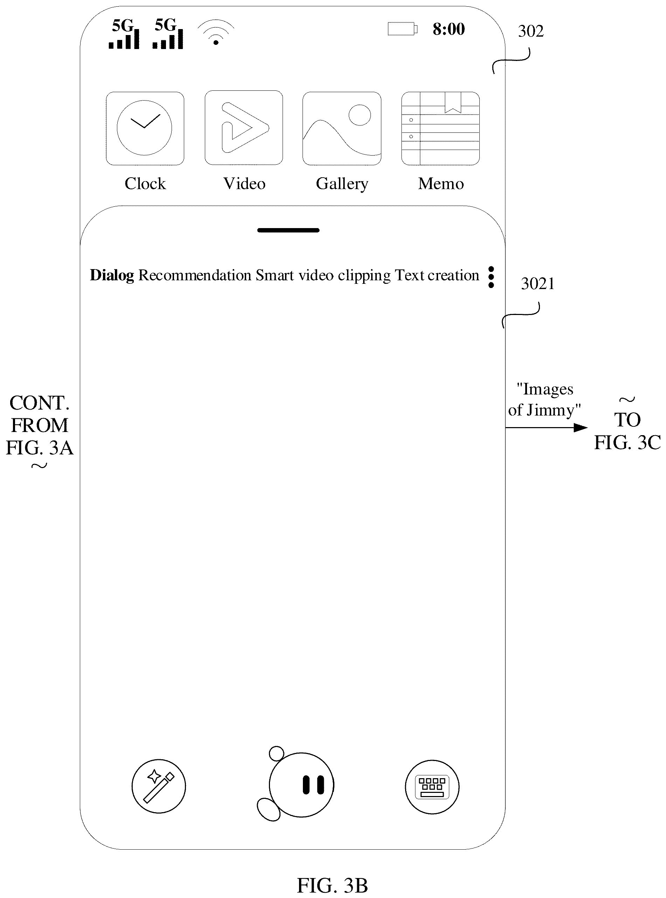

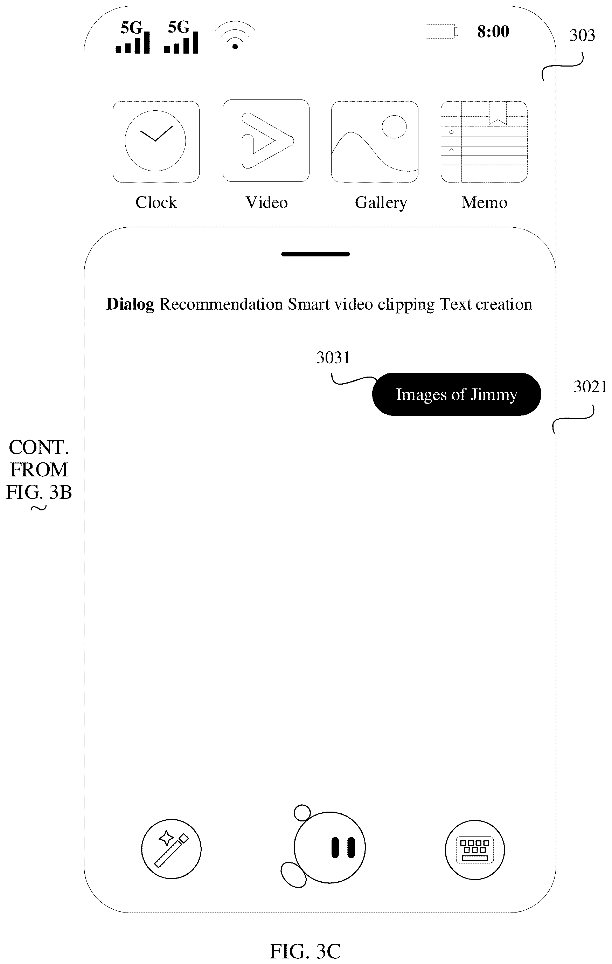

With reference to FIG. 3A, FIG. 3B, and FIG. 3C, the mobile phone may display an interface 301. The interface 301 is the desktop of the mobile phone. The interface 301 includes an icon 3011 of the voice assistant. In response to the tap operation of the user on the icon 3011, the mobile phone may display an interface 302, where the interface 302 includes a dialog box 3021.

In the dialog box, the user may also input the image search request. In response to inputting a request indicating image search in the dialog box, the mobile phone may also display the image search request in the dialog box, and search for image materials, that is, trigger to start image search.

Still using the example in which the voice indicating image search is "images of Jimmy", still with reference to FIG. 3A, FIG. 3B, and FIG. 3C, when the mobile phone displays the interface 302, the mobile phone may display an interface 303 (same as the foregoing interface 203) in response to inputting the voice "images of Jimmy" by the user, where the interface 303 also includes the dialog box 3021. The dialog box 3021 further includes a dialog "images of Jimmy" 3031.

It should be noted that, the dialog box (such as the dialog box 2031) in the foregoing Manner 1 and the dialog box (such as the dialog box 3021) in Manner 2 may be the same dialog box. Therefore, in the dialog box of Manner 1, the mobile phone may also start image search in response to inputting the image search request by the user. Details are not described herein again.

Manner 3: A topic of a video creation type is selected after a skill page of the voice assistant is entered.

In an interface including a dialog box, for example, the foregoing interface 203, interface 302, interface 303, or the like, the mobile phone may also provide a plurality of skill options. The plurality of skill options include a skill option (for example, denoted as "smart video clipping") including a topic of the video creation type. The image search and video creation functions of this specification are mainly focused on "smart video clipping". The plurality of skill options may further include at least one of the following: a skill option of a topic of a copy edit type (for example, denoted as "text creation"); a skill option of a topic of knowledge questions and answers (for example, denoted as "knowledge questions and answers"); and a skill option of a topic of convenient use of the mobile phone (for example, denoted as "device companion").

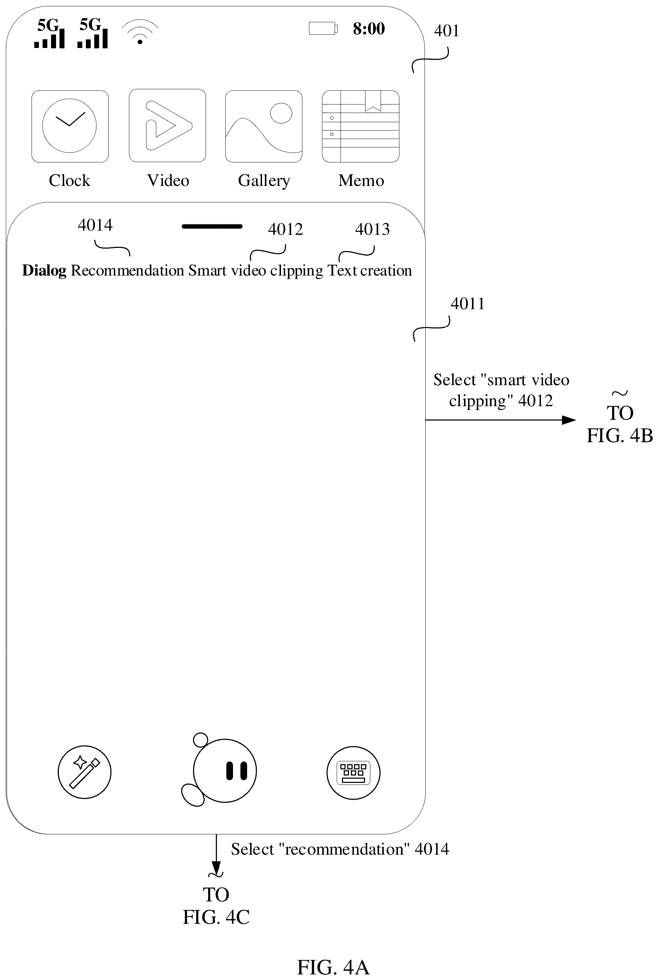

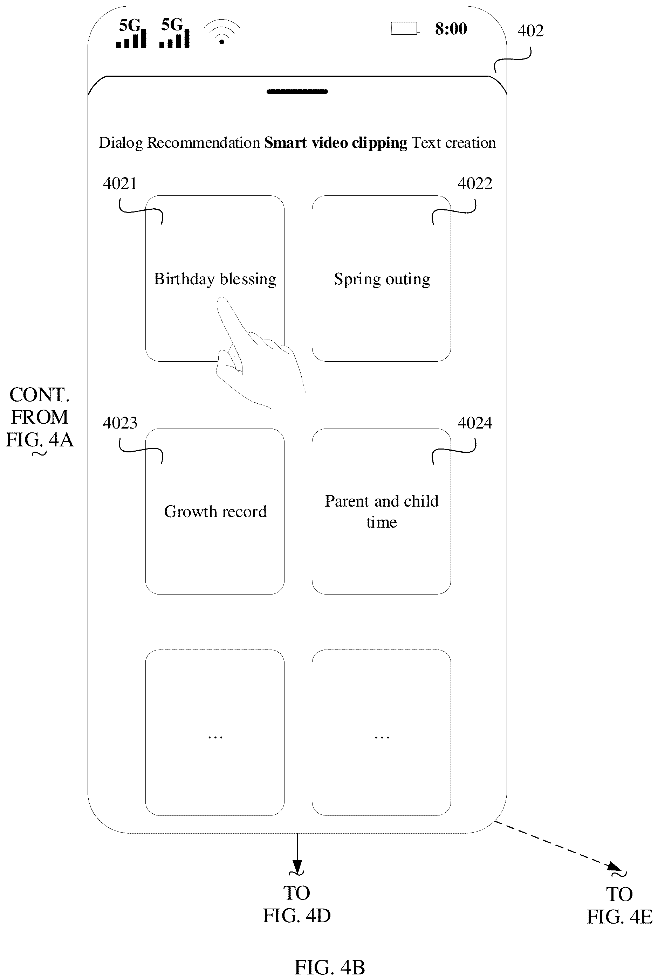

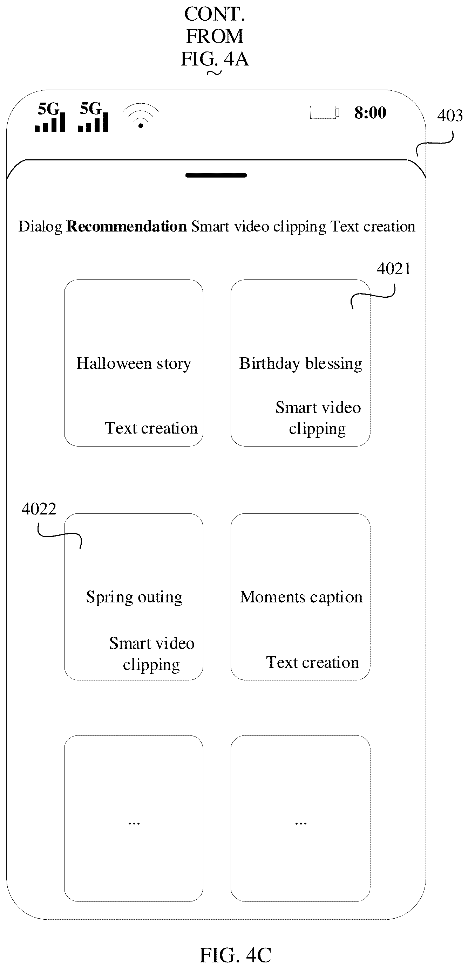

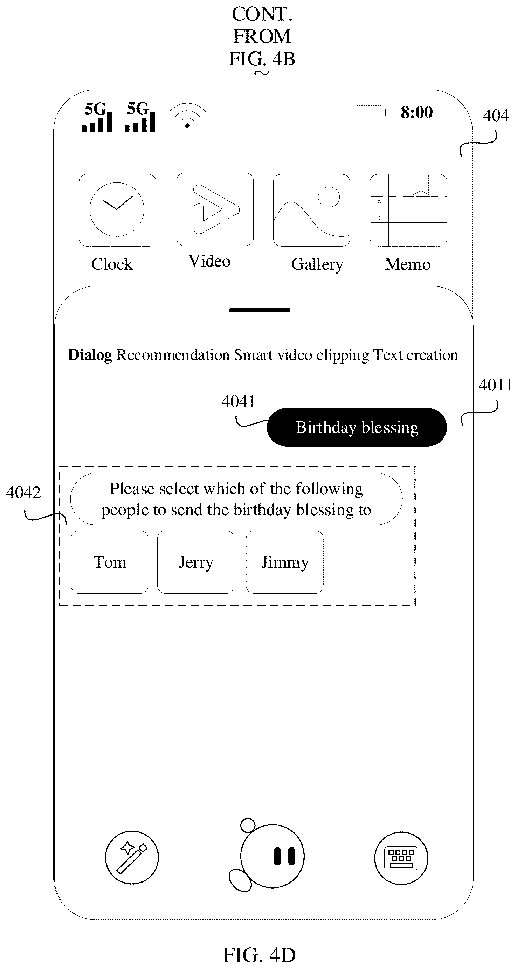

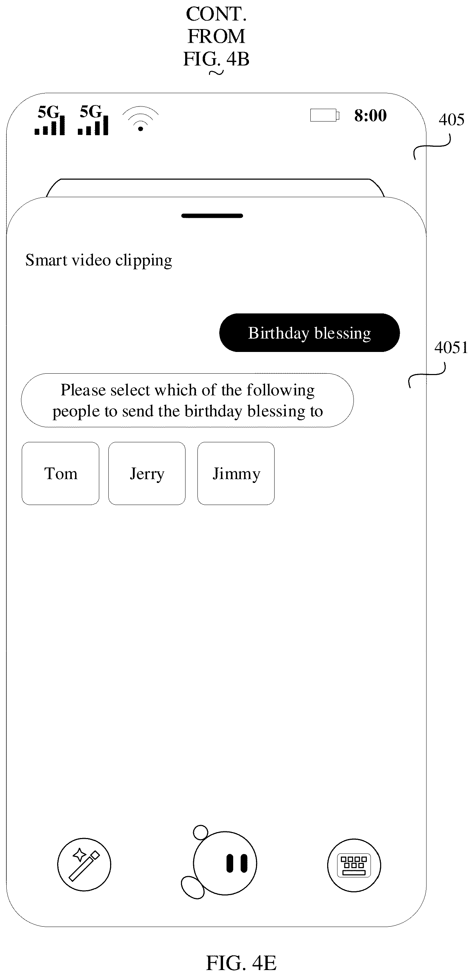

With reference to FIG. 4A, FIG. 4B, FIG. 4C, FIG. 4D, and FIG. 4E, the mobile phone may display an interface 401 (same as the foregoing interface 302), where the interface 401 includes a dialog box 4011. The interface 401 further includes skill options such as "smart video clipping" 4012 and "text creation" 4013.

"Smart video clipping" includes topic options of a plurality of topics of the video creation type. In response to a selection operation of the user on "smart video clipping", the mobile phone may display the topic options of the plurality of topics of the video creation type. Still with reference to FIG. 4A, FIG. 4B, FIG. 4C, FIG. 4D, and FIG. 4E, in response to the selection operation of the user on the "smart video clipping" 4012, the mobile phone may display an interface 402, where the interface 402 includes topic options of the plurality of topics of the video creation type, such as "birthday blessing" 4021, "spring outing" 4022, "growth record" 4023, and "parent and child time" 4024.

In addition, the interface of the dialog box further includes a recommendation option, where the recommendation option includes topic options of hot topics in various skill options, such as topic options including hot topics of the video creation type. In response to a selection operation of the user on the recommendation option, the mobile phone may display topic options of hot topics of the video creation type. Still with reference to FIG. 4A, FIG. 4B, FIG. 4C, FIG. 4D, and FIG. 4E, using an example in which the recommendation option is "recommendation" 4014 in the interface 401, in response to the selection operation of the user on the "recommendation" 4014, the mobile phone may display an interface 403, where the interface 403 includes topic options of the hot topics of the video creation type, such as "birthday blessing" 4021 and "spring outing" 4022.

The interface 403 includes the "birthday blessing" 4021, which is also a skill card corresponding to smart video clipping, and the effect of tapping the "birthday blessing" skill card in the interface 403 is the same as the effect of tapping the "birthday blessing" skill card in the interface 402.

After displaying the topic option of the topic of the video creation type, in response to a selection operation of the user on the topic option of the topic of the video creation type, the mobile phone may start a dialog of a target topic of the video creation type in a dialog box of video creation. It should be noted that, the dialog box of video creation may be a dialog box (shown in the following interface 404) the same as or different from the foregoing dialog box of the voice assistant. For example, the dialog box of video creation may be a dialog box 4051 in an interface 405, where the dialog box 4051 is a dialog box dedicated for a dialog of the topic of the video creation type. For example, "smart video clipping" is displayed at the top of the dialog box 4051, to identify a dialog dedicated for a topic of the video creation type. In this specification, the solutions of this application are described mainly by using the same dialog box, for example, the interface 404 as an example. Correspondingly, the dialog box of video creation may also be briefly referred to as a dialog box.

Still with reference to FIG. 4A, FIG. 4B, FIG. 4C, FIG. 4D, and FIG. 4E, using an example in which the topic option of the target topic of the video creation type is the "birthday blessing" 4021 in the interface 402, in response to the selection operation of the user on the "birthday blessing" 4021, the mobile phone may display the interface 404, where the interface 404 also includes the dialog box 4011, and the dialog box 4011 in interface 404 includes a dialog "birthday blessing" 4041 and a dialog 4042. The dialog 4042 is used to query whether an object of the birthday blessing is "Tom", "Jerry" or "Jimmy". This starts the dialog of "birthday blessing".

Certainly, if the target topic of the video creation type clearly indicates a search intention, the phone does not need to further query the search intention of the user. For example, the topic option of the target topic of the video creation type is the "spring outing" 4022 in the interface 402, the mobile phone can recognize that the search intention is to search for image materials of spring outings, and the search intention does not need to be queried.

In addition, in response to the selection operation of the user on the topic option of the target topic of the video creation type or any search intention (for example, "Jimmy" in the interface 404), the mobile phone may search for image materials, namely, trigger to start image search. In view of this, in Manner 3, the image search request includes the selection operation on the topic option of the target topic of the video creation type or the further selection operation on any search intention.

Manner 4: An image search request is input after a trigger operation is performed on a video creation entry.

The mobile phone may provide the video creation entry at a plurality of positions.

Position 1: global search interface.

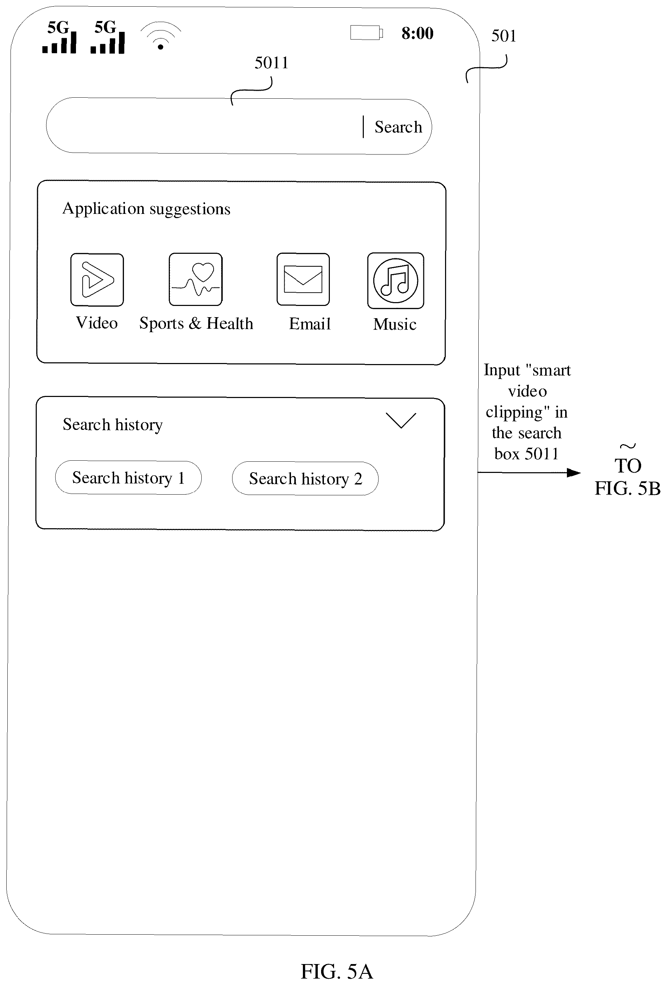

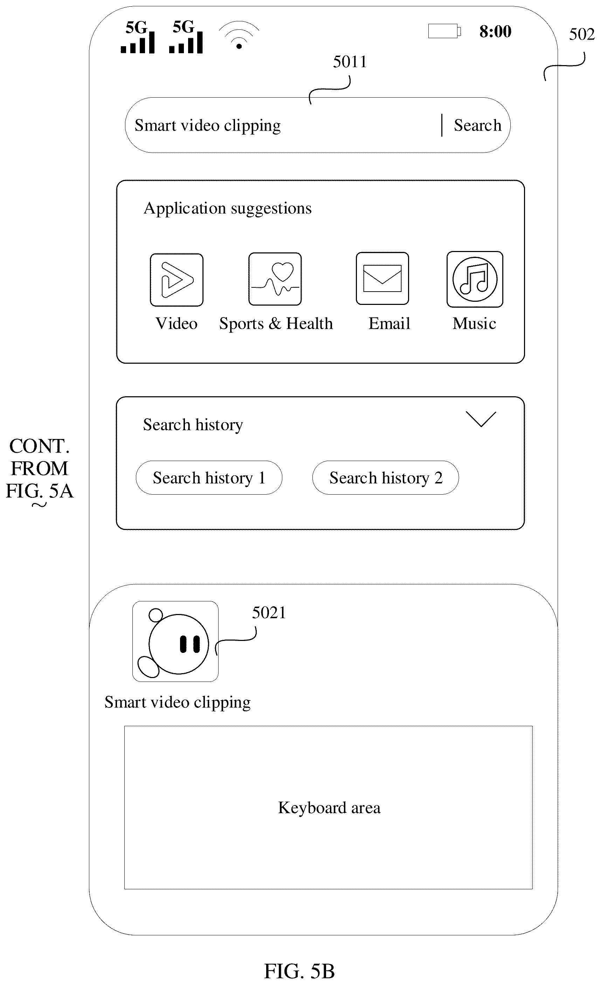

When the mobile phone displays the desktop (including a main screen and a leftmost home screen), in response to a downward sliding operation of the user from a middle area of the desktop, the mobile phone may display a global search interface 501 shown in FIG. 5A and FIG. 5B.

The global search interface 501 may be used for searching for information in the mobile phone. In response to searching, by the user, key words for video creation such as "smart video clipping", the mobile phone may display the video creation entry.

Still with reference to FIG. 5A and FIG. 5B, in response to inputting "smart video clipping" in a search box 5011 in the interface 501 by the user, the mobile phone may display an interface 502, where the search box 5011 in the interface 502 includes the search words "smart video clipping", and the interface 502 further includes "smart video clipping" 5021. The "smart video clipping" 5021 is the video creation entry.

Position 2: creation menu page of the gallery application.

When the mobile phone displays an application interface of the gallery application, the mobile phone may display the creation menu page in response to a selection operation of the user on a creation menu. The creation menu page includes the video creation entry.

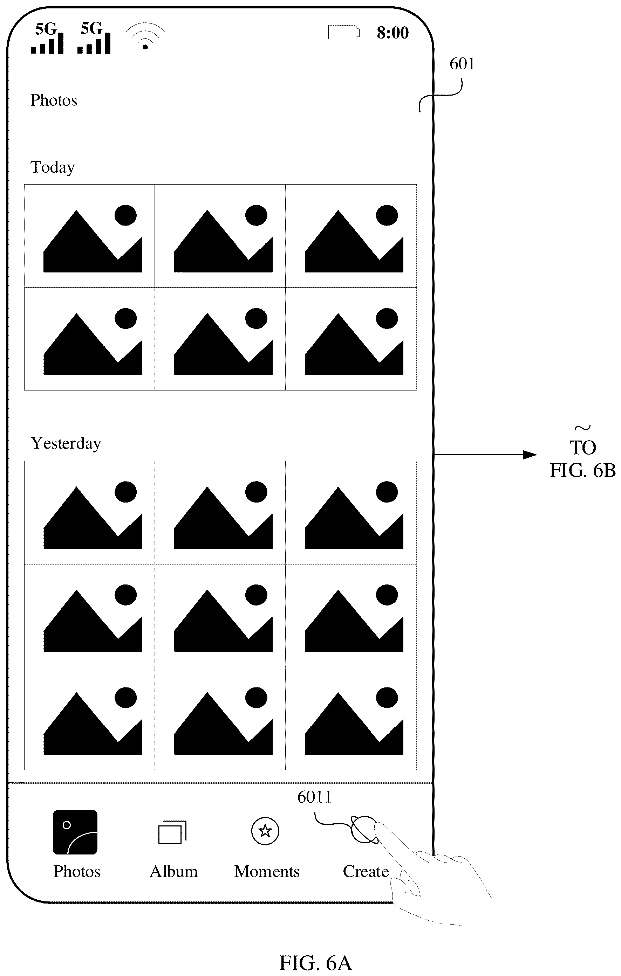

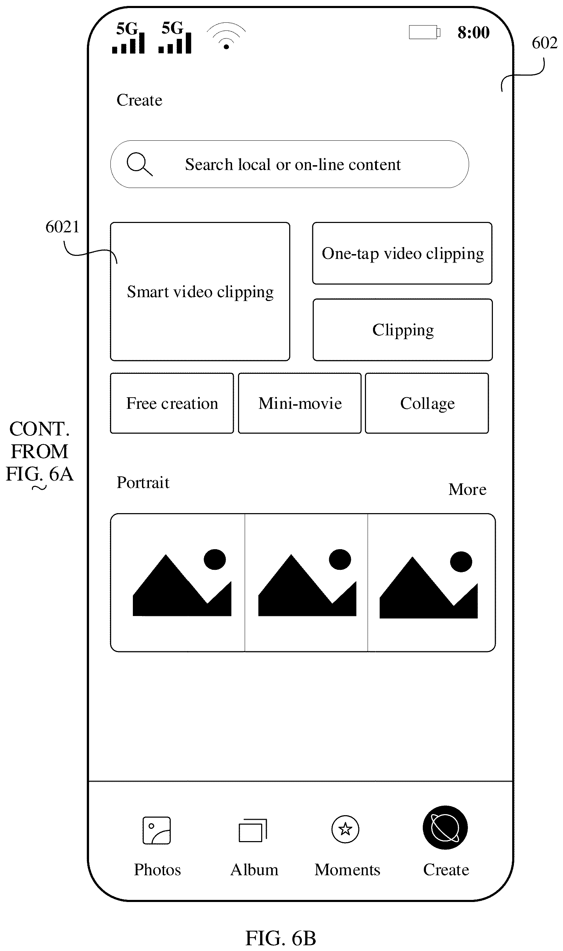

With reference to FIG. 6A and FIG. 6B, the mobile phone may display an interface 601, where the interface 601 is an application interface of the gallery application. Using an example in which the creation menu is "create" 6011 in the interface 601, the mobile phone may display an interface 602 in response to a selection operation of the user on the "create" 6011, where the interface 602 includes "smart video clipping" 6021. The "smart video clipping" 6021 is the video creation entry.

Position 3: desktop card.

When the mobile phone displays the desktop, in response to a trigger operation 1 of the user on the desktop, such as a two-finger pinching operation, the mobile phone may display a thumbnail of the desktop and a plurality of desktop setting items, where the plurality of desktop setting items include a setting item of the desktop card.

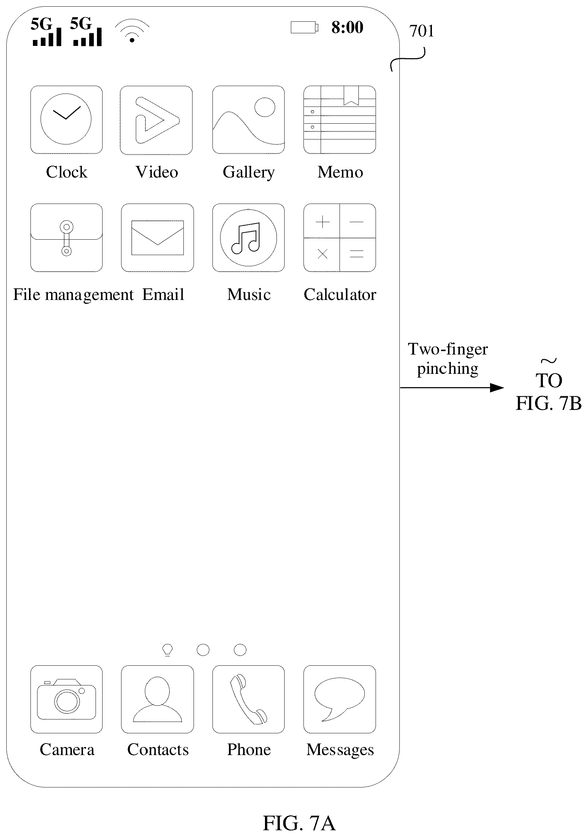

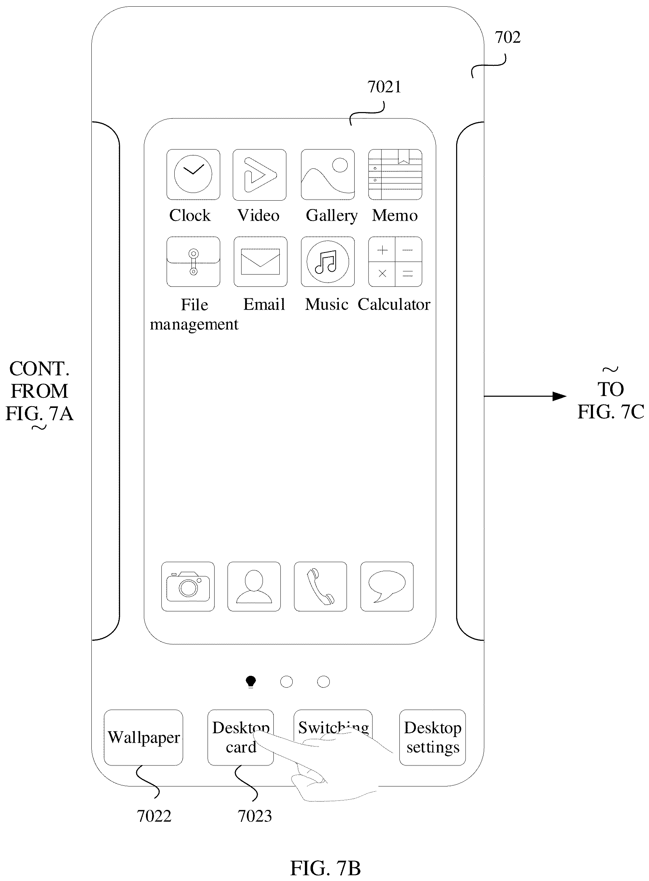

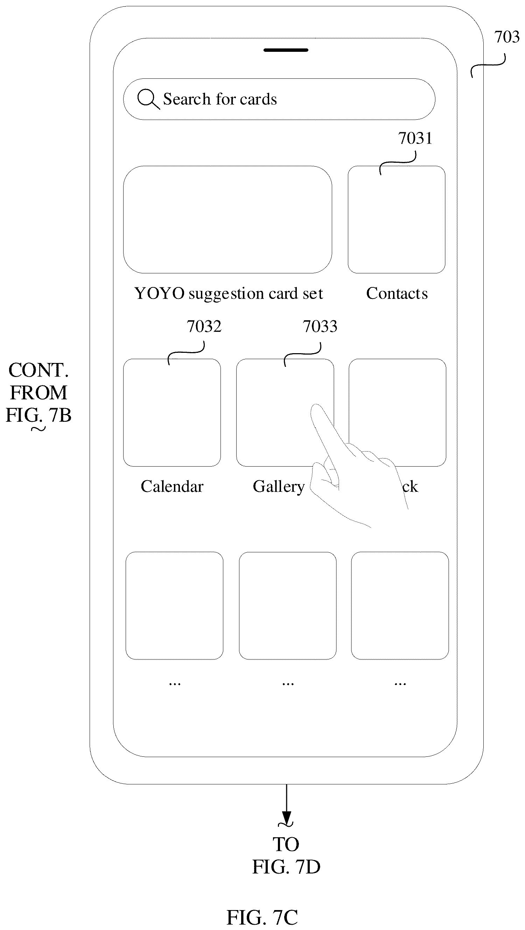

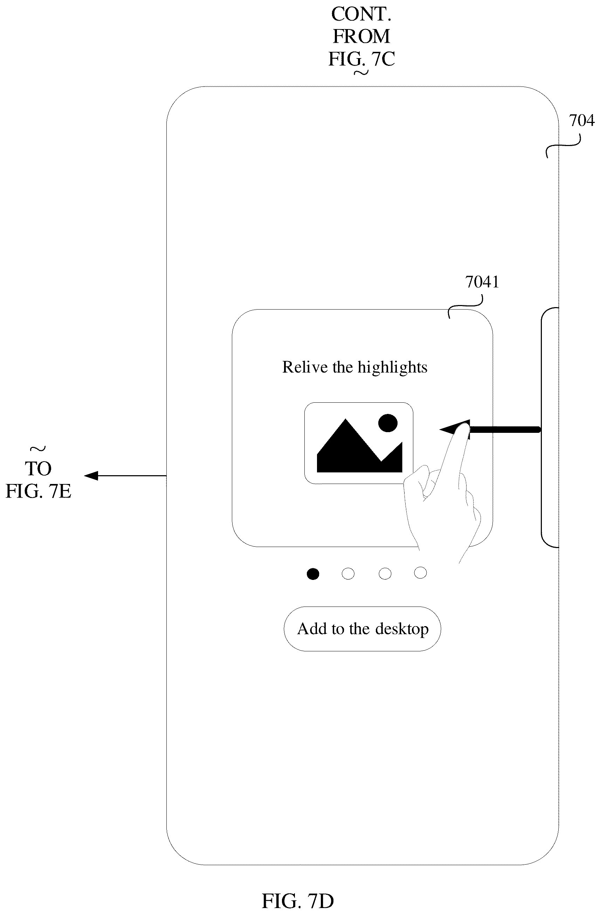

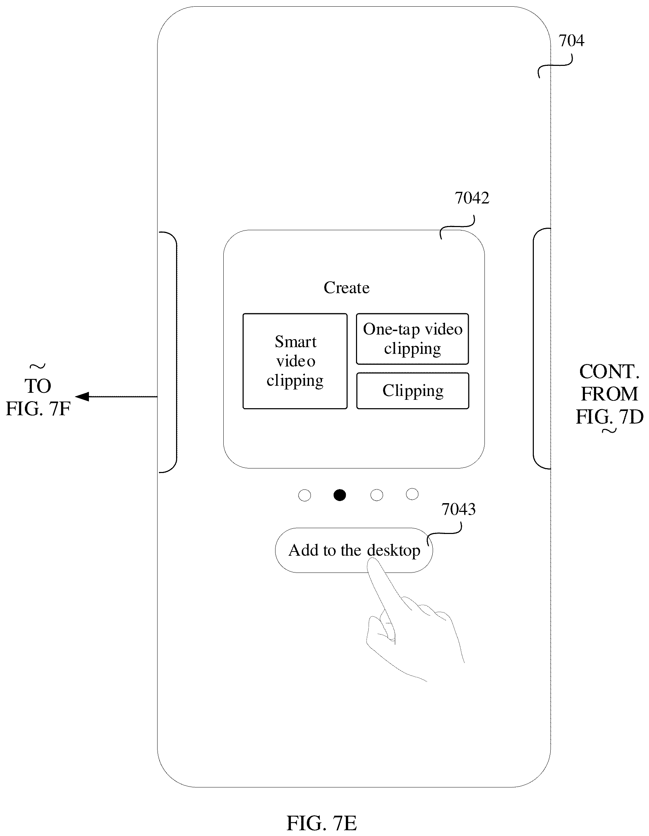

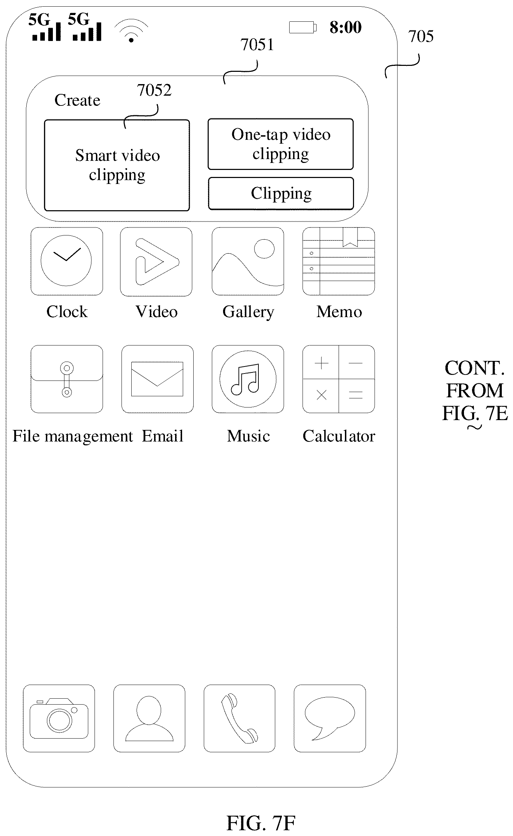

With reference to FIG. 7A, FIG. 7B, FIG. 7C, FIG. 7D, FIG. 7E, and FIG. 7F, the mobile phone may display an interface 701, where the interface 701 is the desktop of the mobile phone. In response to a two-finger pinching operation of the user in the interface 701, the mobile phone may display an interface 702. The interface 702 includes a thumbnail 7021 of the desktop. The interface 702 further includes a plurality of desktop setting items such as "wallpaper" 7022 and "desktop card" 7023. The "desktop card" 7023 is the setting item of the desktop card.

In response to a trigger operation of the user on the setting item of the desktop card, such as a tap operation, the mobile phone may display a plurality of application options, where each application option corresponds to one application. The plurality of application options include an application option of the gallery application.

Still with reference to FIG. 7A, FIG. 7B, FIG. 7C, FIG. 7D, FIG. 7E, and FIG. 7F, in response to a tap operation of the user on the "desktop card" 7023, the mobile phone may display an interface 703, where the interface 703 includes a plurality of application options such as "contacts" 7031, "calendar" 7032, and "gallery" 7033. The "gallery" 7033 is an application option of the gallery application.

The mobile phone may display a card layout interface of the gallery application in response to a selection operation of the user on the application option of the gallery application. The card layout interface includes a plurality of layout options. Some layout options (which may be briefly referred to as target layout items) include the video creation entry. In response to an operation of adding a target layout item to the desktop, the mobile phone may add the target layout item as a desktop card, so as to display the video creation entry in the desktop card.

Still with reference to FIG. 7A, FIG. 7B, FIG. 7C, FIG. 7D, FIG. 7E, and FIG. 7F, the mobile phone may display an interface 704 in response to the selection operation of the user on the "gallery" 7033. The interface 704 is the card layout interface. The interface 704 includes a layout option 7041. The mobile phone may display another layout item, such as a layout option 7042 in the interface 704 in response to a sliding operation of the user in the interface 704 (for example, reverse sliding along the arrow in the interface 704). The layout option 7042 includes key words "smart video clipping" for video creation. To be specific, the layout option 7042 includes the video creation entry, and the layout option 7042 is the target layout item. When the layout option 7042 is displayed in the interface 704, in response to a tap operation of the user on "add to the desktop" 7043, the mobile phone may add the layout option 7042 as a desktop card.

Subsequently, the mobile phone may display, in the desktop, a desktop card including the video creation entry. Still with reference to FIG. 7A, FIG. 7B, FIG. 7C, FIG. 7D, FIG. 7E, and FIG. 7F, after the user performs the tap operation on the "add to the desktop" 7042, the mobile phone may display an interface 705 when the mobile phone returns to the desktop again, where the interface 705 includes a desktop card 7051. The desktop card 7051 includes "smart video clipping" 7052. The "smart video clipping" 7052 is the video creation entry.

In response to the trigger operation of the user on any video creation entry in the position 1 to the position 3, such as the tap operation, the mobile phone may respond in the following two cases.

Case 1: The trigger operation is performed on the video creation entry for the first time, or images in the gallery application do not meet a creation condition.

The creation condition may correspond to a preset creation theme. For example, the preset creation theme includes "parent and child time", and the creation condition includes: The gallery application includes images of a child and that the gallery application includes group photos of a child and an elder.

In Case 1, in response to the trigger operation on any video creation entry in the position 1 to the position 3, the mobile phone may display a skill page of a topic of the video creation type, for the user to select a target topic of the video creation type to create a video. In this way, even if the video creation entry is triggered for the first time or the creation condition is not met, the mobile phone may also provide a topic of the video creation type for user selection and video creation. For the skill page and the target topic of the video type, refer to related descriptions in the foregoing "Manner 3", and details are not described herein again.

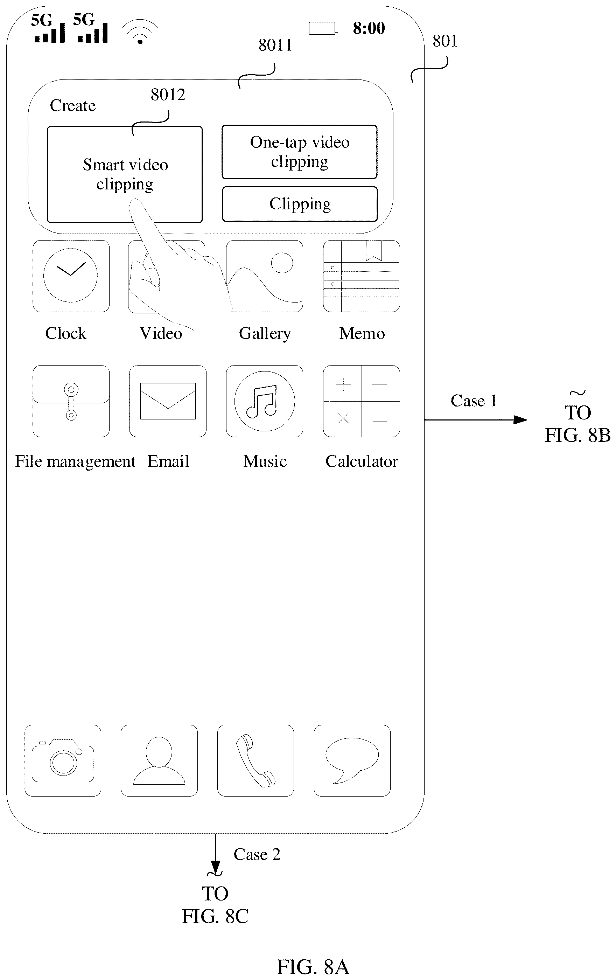

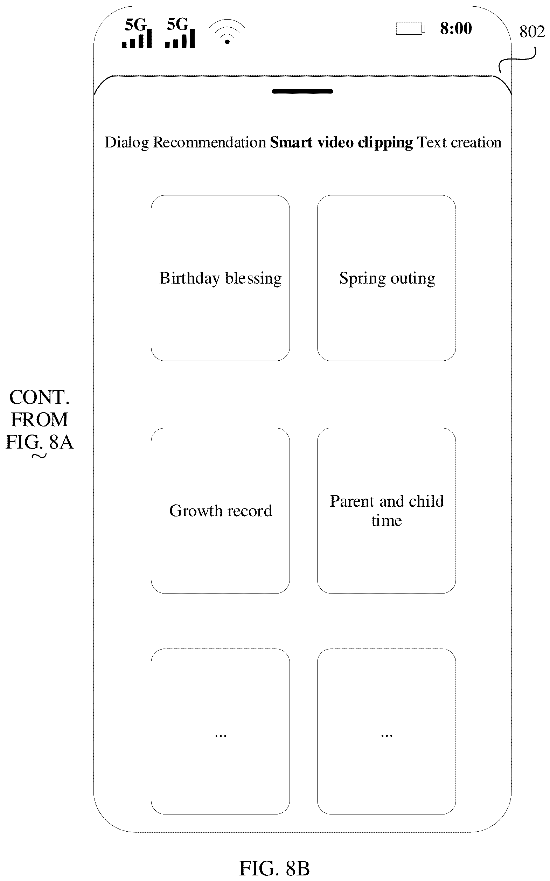

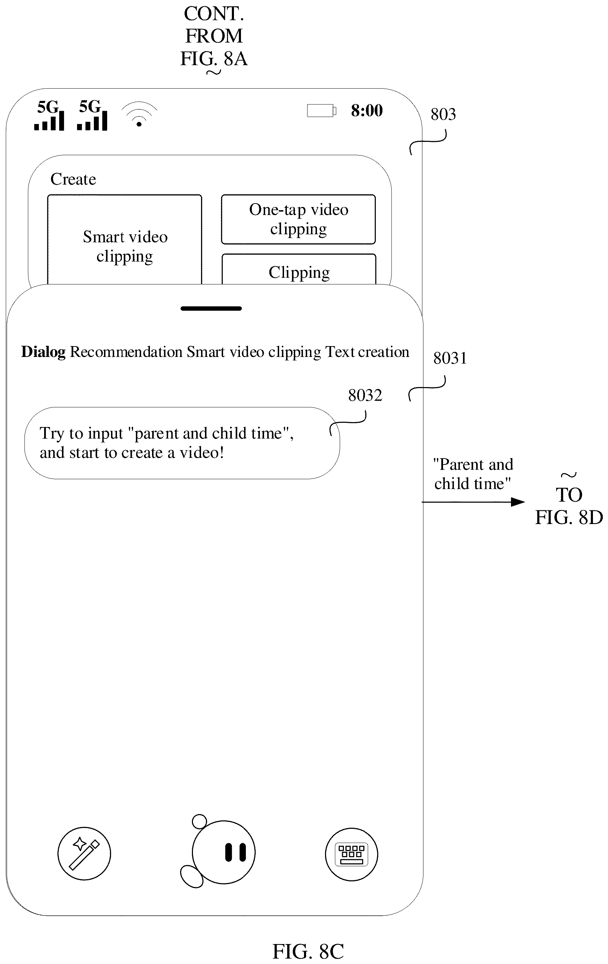

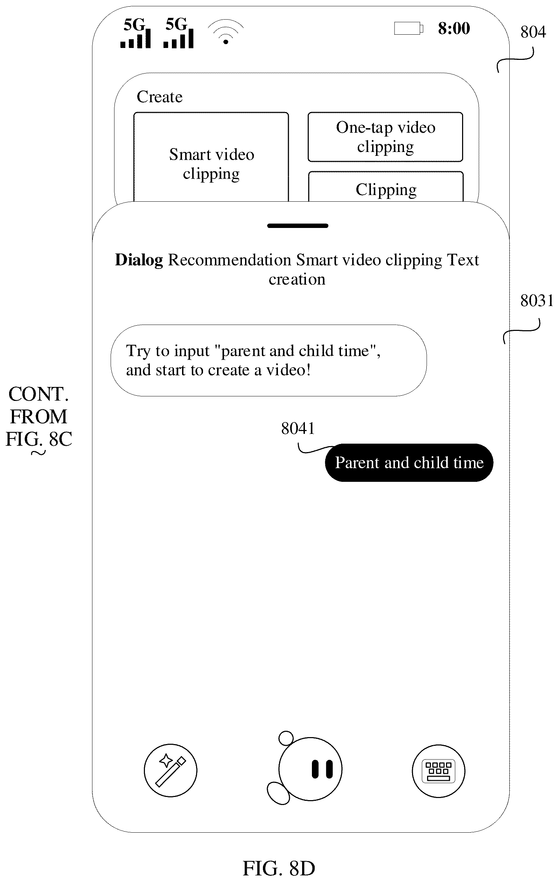

With reference to FIG. 8A, FIG. 8B, FIG. 8C, and FIG. 8D, using an example in which any video creation entry is "smart video clipping" 8012 in a desktop card 8011 in the interface 801 (same as the foregoing interface 705), in Case 1, in response to a tap operation of the user on the "smart video clipping" 8012, the mobile phone may display an interface 802 (same as the foregoing interface 402).

Case 2: The trigger operation is performed on the video creation entry not for the first time, and the images in the gallery application meet the creation condition.

In Case 2, in response to the trigger operation on any video creation entry in the position 1 to the position 3, the mobile phone may display a dialog box of video creation (which is also briefly referred to as a dialog box). In addition, in the dialog box, the mobile phone may provide a guiding script of the preset creation theme, to guide the user to create a video of the corresponding theme.

Still with reference to FIG. 8A, FIG. 8B, FIG. 8C, and FIG. 8D, still using the example in which any video creation entry is the "smart video clipping" 8012 in the desktop card 8011 in the interface 801, in Case 2, when the creation condition of "parent and child time" is met, in response to the tap operation of the user on the "smart video clipping" 8012, the mobile phone may display an interface 803, where the interface 803 includes a dialog box 8031. The dialog box 8031 includes a guiding script 8032, to guide the user to create a video of "parent and child time".

In the dialog box, the user may also input the image search request, for example, input the image search request based on the guiding script. In response to inputting the image search request in the dialog box, the mobile phone may also display the image search request in the dialog box, and start to search for image materials, that is, trigger to start image search. Still with reference to FIG. 8A, FIG. 8B, FIG. 8C, and FIG. 8D, when the mobile phone displays the interface 803, in response to inputting voice "parent and child time" by the user, the mobile phone may display an interface 804, where the interface 804 also includes the dialog box 8031. The dialog box 8031 further includes a dialog "parent and child time" 8041, namely, includes the image search request.

In the foregoing example of FIG. 8A, FIG. 8B, FIG. 8C, and FIG. 8D, an example in which any video creation entry is the video creation entry (such as "smart video clipping") in the desktop card in the position 3 is used. It should be understood that, when any video creation entry is the video creation entry in the global search interface in the position 1 or the video creation entry in the creation menu page of the gallery application in the position 2, an implementation of triggering to start image search is also similar. Details are not described herein again.

Manner 5: A trigger operation is performed on the creation recommendation card.

The mobile phone may display the creation recommendation card after recognizing that at least one of current time, a current place, and images in the gallery application meets a condition of video creation. The mobile phone may display the creation recommendation card on any user interface. Any user interface may be the desktop, the leftmost home screen, a lock screen interface, an application interface of a video application, an application interface of a chatting application, or the like. The following describes the solutions of this application mainly by using an example in which the mobile phone displays the creation recommendation card on the desktop.

The following lists several specific implementations of recognizing and displaying the creation recommendation card.

In a specific implementation, the condition of video creation includes that the current time is within a time range 1. After recognizing that the current time is within the time range 1, the mobile phone may display a creation recommendation card of a birthday blessing video.

The time range 1 may be determined based on a birthday of a person included in the gallery application. For example, start time of the time range 1 may be time before the birthday and a preset quantity of days away from the birthday, and end time may be an end moment of the birthday. For example, if the preset quantity of days is 3 and the birthday is October 4, the start time of the time range 1 may be October 1, and the end time of the time range 1 may be 24:00 on October 4.

It should be noted that the gallery application may include a plurality of people. Correspondingly, the mobile phone may determine a plurality of time ranges 1, and each time range 1 corresponds to a birthday of one person. In this case, when the current time is within any time range 1, the mobile phone my display the creation recommendation card of the birthday blessing video.

The creation recommendation card of the birthday blessing video may include an image of a person and/or a name of the person, to indicate an object to which the birthday blessing video is directed.

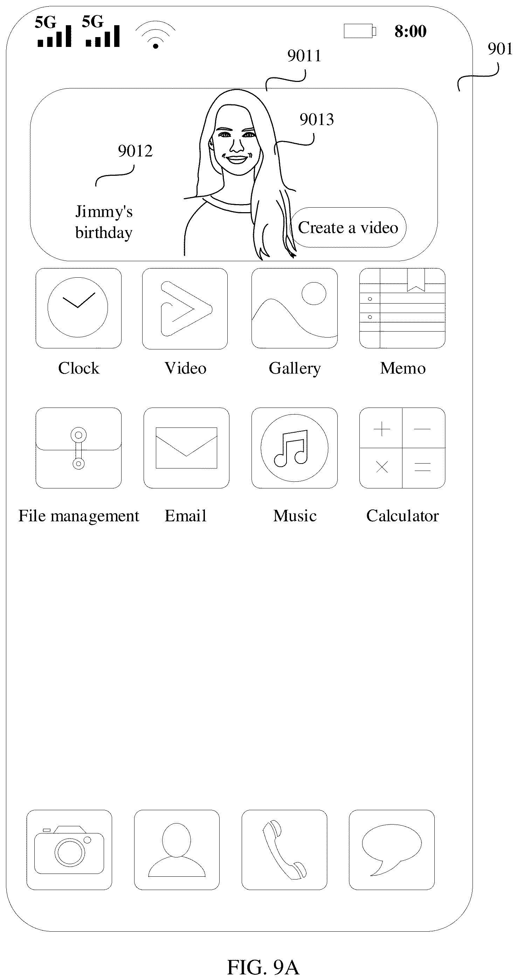

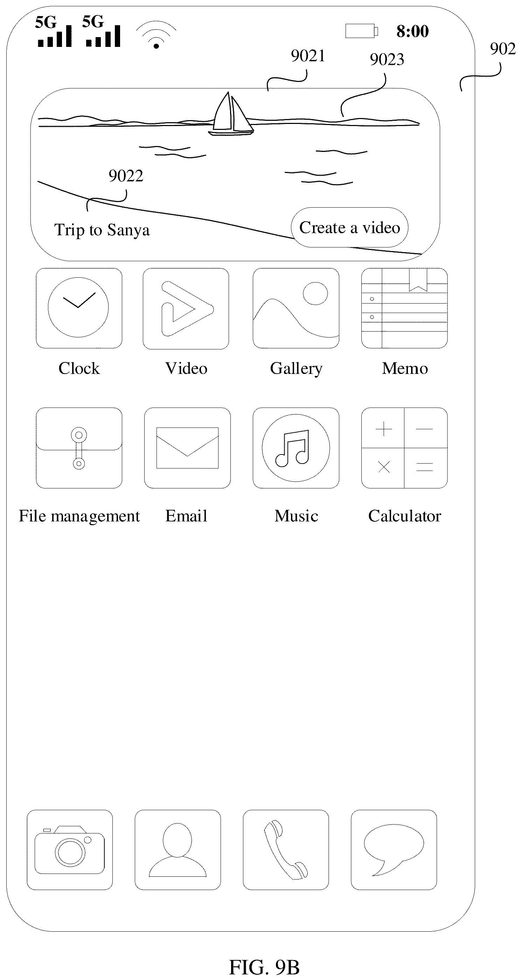

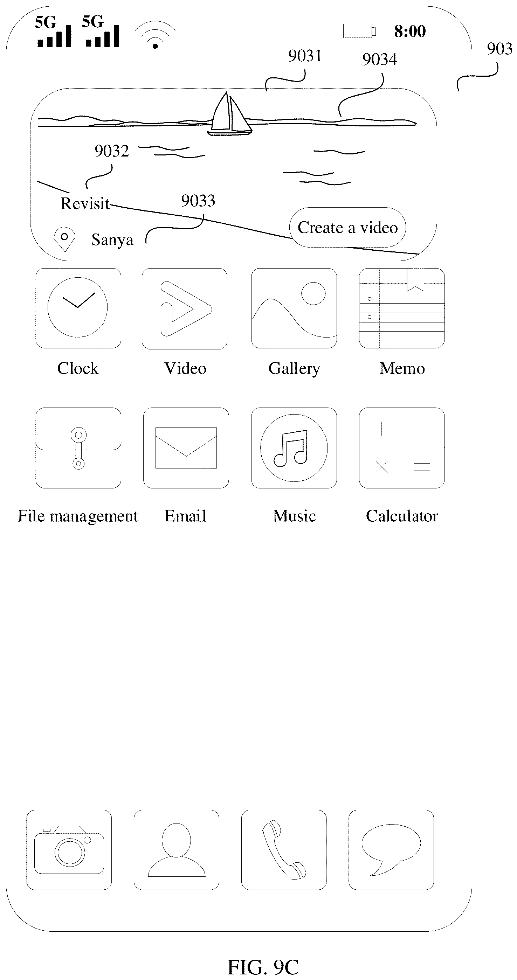

For example, after recognizing that the current time is within the time range 1, the mobile phone may display an interface 901 shown in FIG. 9A, FIG. 9B, and FIG. 9C. The interface 901 includes a creation recommendation card 9011 of the birthday blessing video. The creation recommendation card 9011 includes text "Jimmy's birthday" 9012, where "Jimmy" is the name of the person. In addition, the creation recommendation card 9011 also includes an image 9013 of Jimmy.

In another specific implementation, the condition of video creation includes that the current time is within a time range 2. After recognizing that the current time is within the time range 2, the mobile phone may display a creation recommendation card of an anniversary video. An anniversary includes an acquaintance anniversary, a wedding anniversary, or the like.

The time range 2 may be determined based on an anniversary in a memo application or a note application. For a process of determining the time range 2, refer to the foregoing specific specifications about determining the time range 1, provided that the birthday is replaced with the anniversary.

Similarly, there may be a plurality of anniversaries, and correspondingly, the mobile phone may determine a plurality of time ranges 2, and each time range 2 corresponds to one anniversary. In this case, when the current time is within any time range 2, the mobile phone my display the creation recommendation card of the anniversary blessing video.

In another specific implementation, the condition of video creation includes at least one of the following conditions 1 and 2:

Condition 1: There is a journey 1 leaving residence within a time range 3 (such as 3 days or a week) before the current time, and the current place is not a destination 1 of the journey 1.

If there is the journey 1 leaving residence within the time range 3 before the current time, it indicates that the user went to the destination 1 not long ago; and if the current place is not the destination 1, it indicates that the current user has left the destination 1. In this case, the mobile phone may determine that there is a requirement of creating a video for the journey 1, so as to display a creation recommendation card of the journey 1.

Condition 2: There is a journey 1 leaving residence within a time range 3 before the current time, the current time is within a time range 4, and the time range 4 is related to a journey 2 leaving a destination 1. For example, start time of the time range 4 is start time of the journey 2, and end time is time after the journey 2 ends and a preset interval (such as 12 hours or 24 hours) away from the end time of the journey 2. In other words, if the current time is within the time range 4, it indicates that the user is about to leave or has left the destination 1. In this case, the mobile phone may determine that there is a requirement of creating a video for the journey 1, so as to display a creation recommendation card of the journey 1.

The creation recommendation card of the journey 1 may include a name of the destination 1 and/or an image shot at the destination 1, to indicate creation of a video of the journey 1.

For example, after recognizing that at least one of the foregoing conditions 1 and 2 is met, the mobile phone may display an interface 902 shown in FIG. 9A, FIG. 9B, and FIG. 9C. The interface 902 includes a creation recommendation card 9021 of the journey 1. The creation recommendation card 9021 includes text "Trip to Sanya" 9022, where "Sanya" is the name of the destination 1. In addition, the creation recommendation card 9021 also includes an image 9023 shot in Sanya.

In another specific implementation, the condition of video creation includes that the current position is at the destination 2, the destination 2 is not the residence of the user, and the user had arrived at the destination 2 historically. In other words, the destination 2 at which the user is located at present is a place that the user had visited historically. In this case, the mobile phone may determine that there is a requirement of viewing images shot historically at the destination 2 and manufacturing a video, so as to display a creation recommendation card of the revisited destination 2.

The mobile phone may determine, based on a shooting place of images in the gallery application, whether the user has arrived at the destination 2. Using an example in which the destination 2 is Sanya, if the gallery application includes images shot in Sanya, the mobile phone may determine that the user had arrived in Sanya.

The creation recommendation card of the revisited destination 2 may include the name of the destination 2 and/or a historical image shot at the destination 2, to indicate creation of a video of the revisited destination 2.

For example, after recognizing that the current location is at destination 2 and the user has been to destination 2 historically, the mobile phone may display interface 903 shown in FIG. 9A, FIG. 9B, and FIG. 9C. The interface 903 includes a creation recommendation card 9031 of the revisited destination 2. The creation recommendation card 9031 includes text "revisit" 9032, "Sanya" 9033, and a historical image 9034 shot in Sanya.

In another specific implementation, the condition of video creation includes that a quantity of newly added images in the gallery application in one time period exceeds a first quantity. One time period may be one day, three days, one week, or the like. The first quantity may be 10, 30, 50, or the like.

If the quantity of newly added images in the gallery application in one time period exceeds the first quantity, it indicates that a large quantity of new images are generated. In this case, the mobile phone may determine that there is a requirement of creating a video by using the newly added images, so as to display a creation recommendation card of the newly added images. The creation recommendation card may include one or more newly added images.

At this point, it should be noted that the conditions of video creation in the foregoing implementations may also be combined for use. For example, when the mobile phone recognizes that the foregoing condition 1 is met and the quantity of newly added images exceeds the first quantity within one time period, such as a time period of staying at the destination 1, the mobile phone displays the creation recommendation card of the journey 1.

After displaying the creation recommendation card in the foregoing manner, in response to a trigger operation of the user on any creation recommendation card, such as a tap operation, the mobile phone may display a dialog box of video creation (which is also briefly referred to as a dialog box), and start a dialog of video creation in the dialog box.

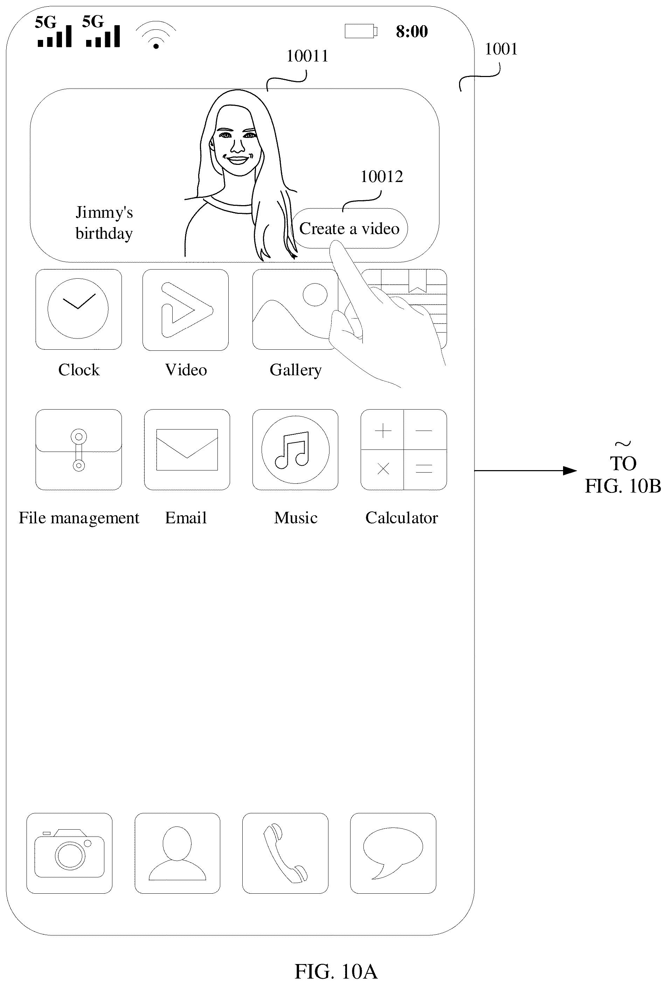

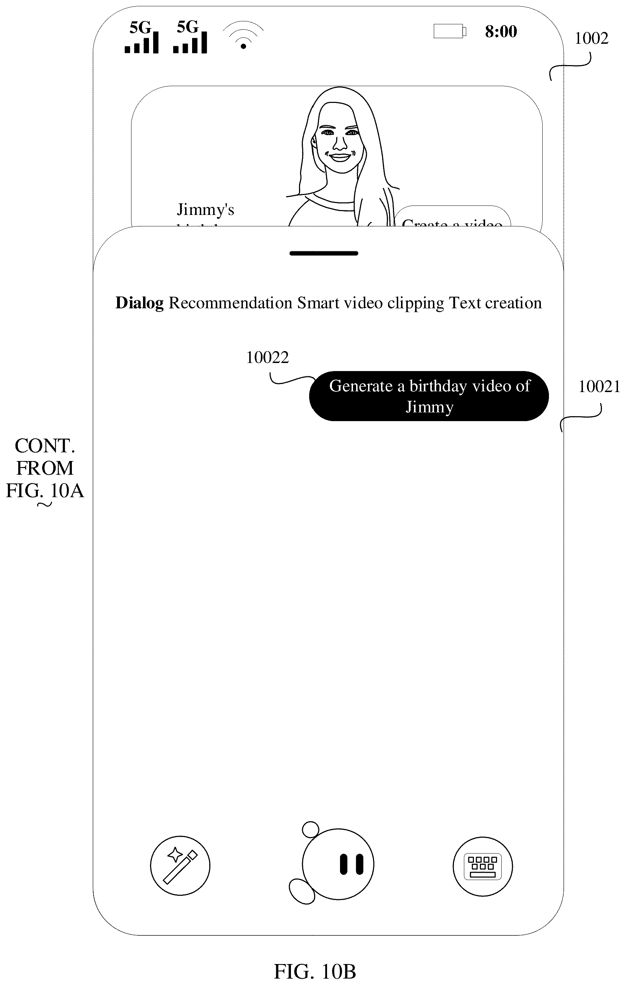

With reference to FIG. 10A and FIG. 10B, using an example in which any creation recommendation card is a creation recommendation card 10011 of a birthday blessing video in an interface 1001 (same as the foregoing interface 901), in response to a tap operation of the user on "create a video" 10012 in the creation recommendation card 10011, the mobile phone may display an interface 1002, where the interface 1002 includes a dialog box 10021. The dialog box 10021 includes a dialog "generate a birthday video of Jimmy" 10022.

In addition, in response to a trigger operation of the user on the creation recommendation card, the mobile phone may also search for image materials matching the creation recommendation card, namely, trigger to start image search. In view of this, in Manner 5, the image search request is the trigger operation on the creation recommendation card.

In the foregoing example of FIG. 10A and FIG. 10B, an example in which any creation recommendation card is the creation recommendation card of the birthday blessing video is used. It should be understood that when any creation recommendation card is the creation recommendation card of the journey 1, the creation recommendation card of the anniversary video, or the like, an implementation of triggering to start image search is also similar. Details are not described herein again.

Manner 6: An image search request is input after a trigger operation is performed on a floating image search entry in the gallery application.

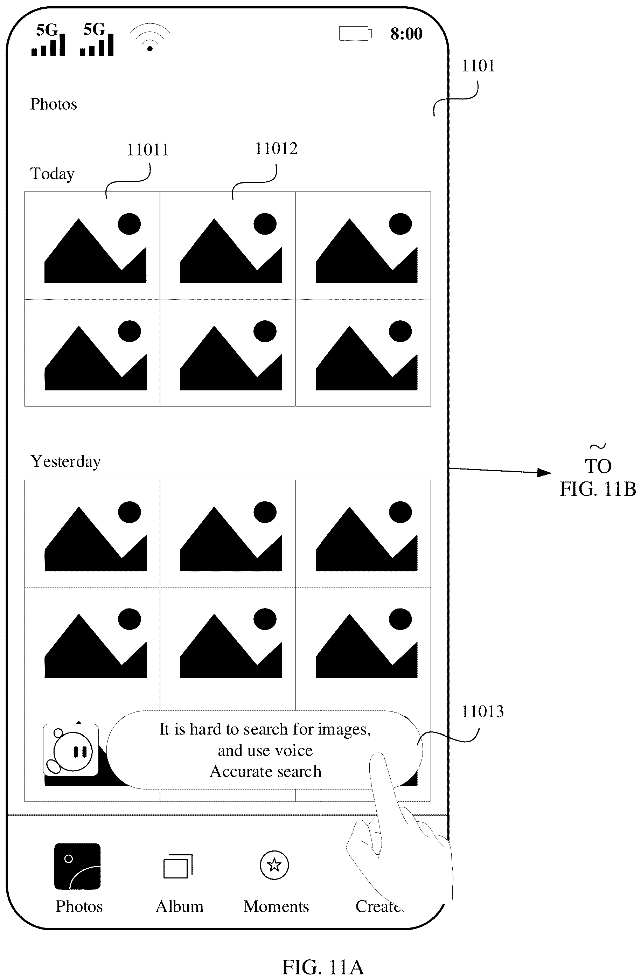

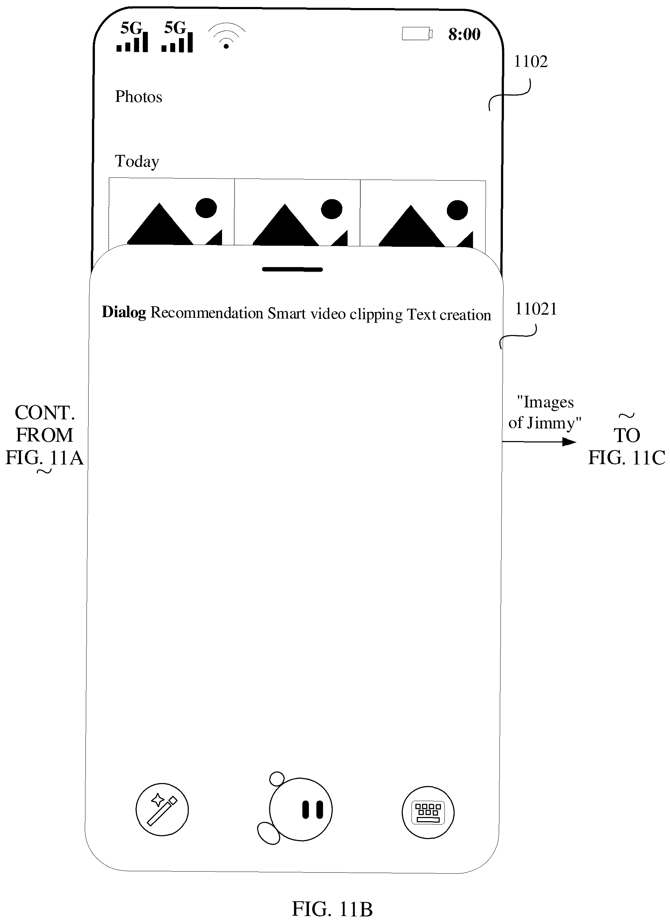

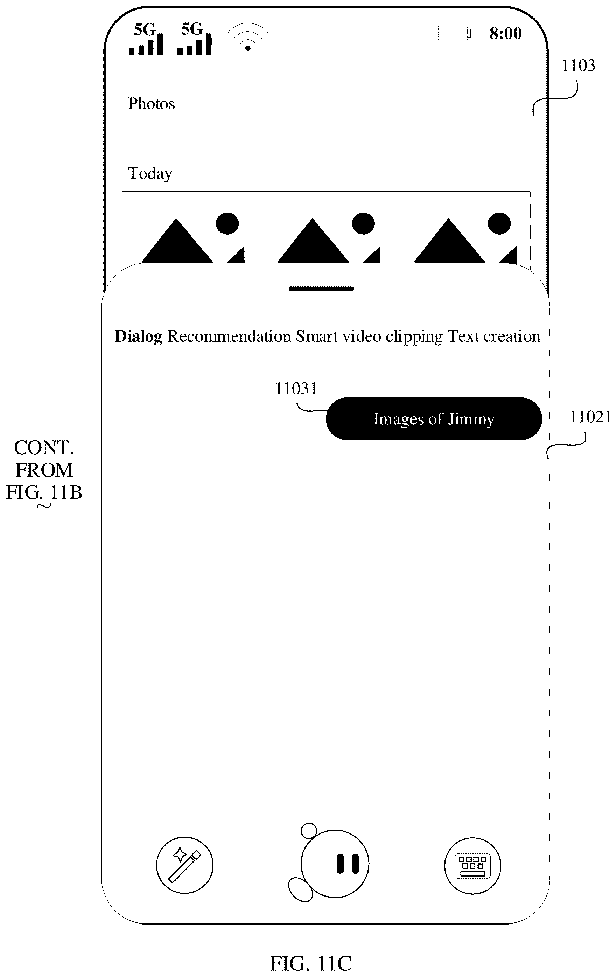

The mobile phone may display the floating image search entry in a main interface of the gallery application. The main interface is an interface that displays thumbnails of all image materials in the gallery application. With reference to FIG. 11A, FIG. 11B, and FIG. 11C, the mobile phone may display an interface 1101, where the interface 1101 is the main interface of the gallery application. The interface 1101 includes the thumbnails of all the image materials in the gallery application, such as a thumbnail 11011 and a thumbnail 11012. In addition, the interface 1101 further includes a floating image search entry 11013.

In some embodiments, in response to an operation of starting the gallery application, the mobile phone may display the main interface of the gallery application, and display the floating image search entry in the main interface, for example, display the interface 1101.

In some other embodiments, when the mobile phone displays the main interface of the gallery application, the mobile phone may detect a sliding operation of the user in the main interface. In response to the sliding operation, the mobile phone may slide the main interface to display different thumbnails, and present the different thumbnails to the user to facilitate the user in image search. If a sliding speed of the main interface exceeds a speed 1 and/or a sliding displacement exceeds a displacement 1, it indicates that the user quickly slides in the main interface to search for image materials. The mobile phone may display the floating image search entry in the main interface, for example, display the interface 1101. In this way, the floating image search entry can be displayed for an image search requirement of the user.

Further, after display time of the floating image search entry reaches duration 1, the mobile phone cancels display of the floating image search entry.

In response to a trigger operation of the user on the floating image search entry, the mobile phone may display a dialog box. In the dialog box, the user may also input the image search request. In response to inputting the image search request in the dialog box, the mobile phone may start a dialog of image search in the dialog box.

Using an example in which search voice indicating image search is "images of Jimmy", still with reference to FIG. 11A, FIG. 11B, and FIG. 11C, when the mobile phone displays the interface 1101, the mobile phone may display an interface 1102 in response to a tap operation of the user on the floating image search entry 11013, where the interface 1102 includes a dialog box 11021. In response to inputting the voice "images of Jimmy" by the user, the mobile phone may display an interface 1103, where the interface 1103 also includes the dialog box 11021. The dialog box 11021 in the interface 1103 further includes a dialog "images of Jimmy" 11031.

In addition, in response to inputting the image search request in the dialog box, the mobile phone may search for matching image materials, namely, trigger to start image search.

After any one of the foregoing Manners 1 to 6 is used to trigger to start image search, the mobile phone may display some or all of the found image materials in a dialog box. In a specific implementation, after finding image materials, the mobile phone may select some image materials with higher quality and display the image materials with higher quality in the dialog box, to facilitate direct use of high-quality image materials to create a video.

Further, a form of displaying an image material includes: presenting the image material in a form of a thumbnail of the image material.

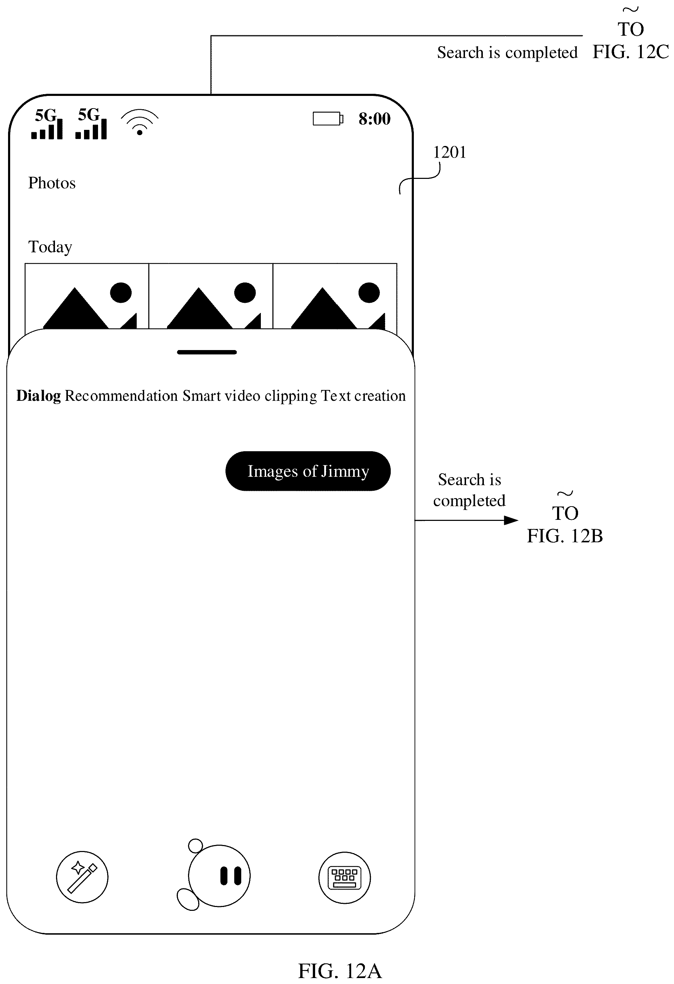

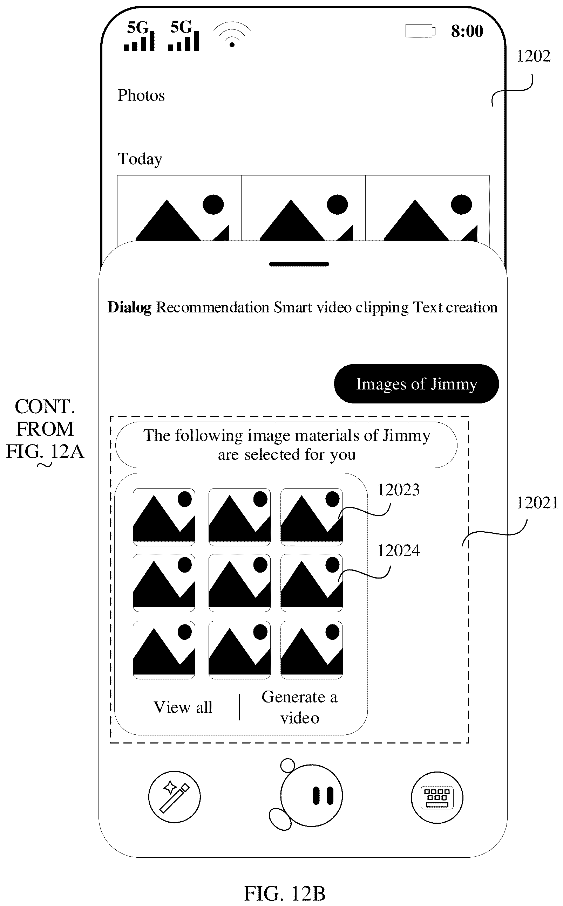

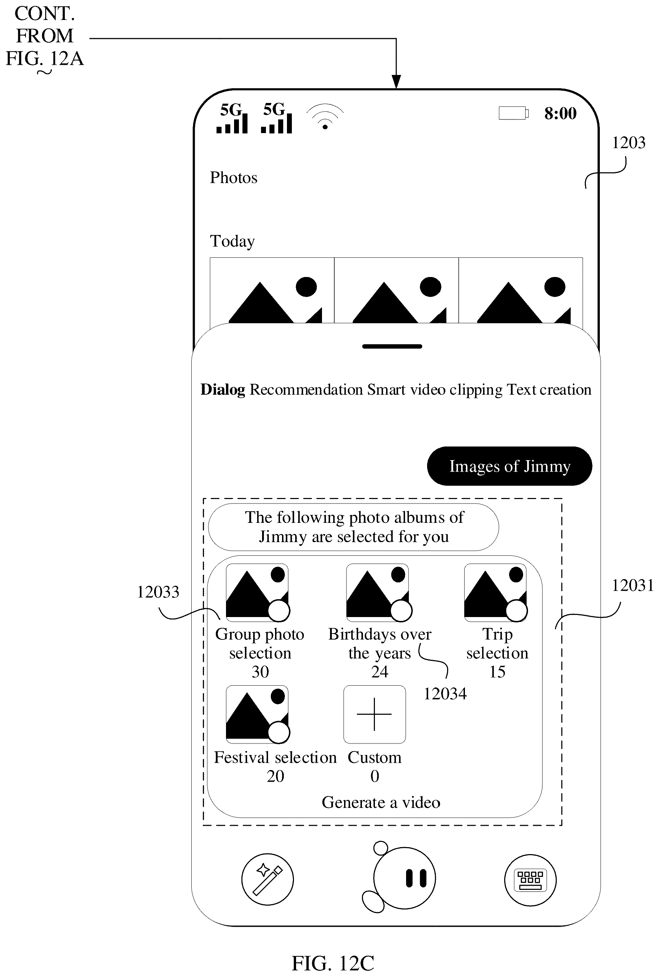

With reference to FIG. 12A, FIG. 12B, and FIG. 12C, when starting image search is triggered, the mobile phone may display an interface 1201 (same as the foregoing interface 1103). The mobile phone may display an interface 1202 after search is completed. The interface 1202 includes a dialog 12021 of a search result. The dialog 12021 includes thumbnails of the found image materials, such as a thumbnail 12023 and a thumbnail 12024. To be specific, the image materials are presented in the form of thumbnails of the image materials.

Alternatively, the form of presenting the image materials includes: presenting the image materials in the form of photo albums, where one photo album includes a plurality of image materials.

Still with reference to FIG. 12A, FIG. 12B, and FIG. 12C, when the mobile phone displays the interface 1201, the mobile phone may display an interface 1203 after search is completed. The interface 1203 includes a dialog 12031 of a search result. The dialog 12031 includes photo albums of the found image materials, such as "group photo selection" 12033 and "birthdays over the years" 12034. To be specific, the image materials are presented in the form of photo albums.

Specifically, after finding the image materials, the mobile phone may classify the image materials, and one category forms one photo album. The mobile phone may perform classification based on at least one of the following dimensions: shooting time, a shooting place, whether it is a group photo, and image content.

Using searching for image materials of people as an example, the mobile phone may classify the found image materials into one or more of a group photo type, a birthday type, a trip type, and a festival type. For example, the "group photo selection" 12033 in the interface 1203 is a photo album of the group photo type, and the "birthdays over the years" 12034 is a photo album of the birthday type.

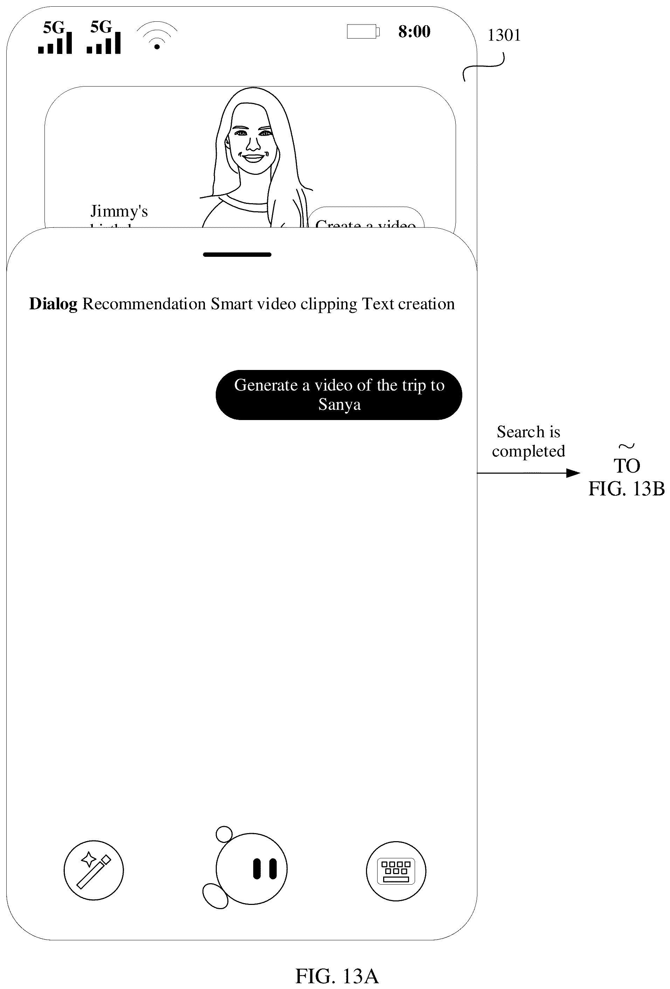

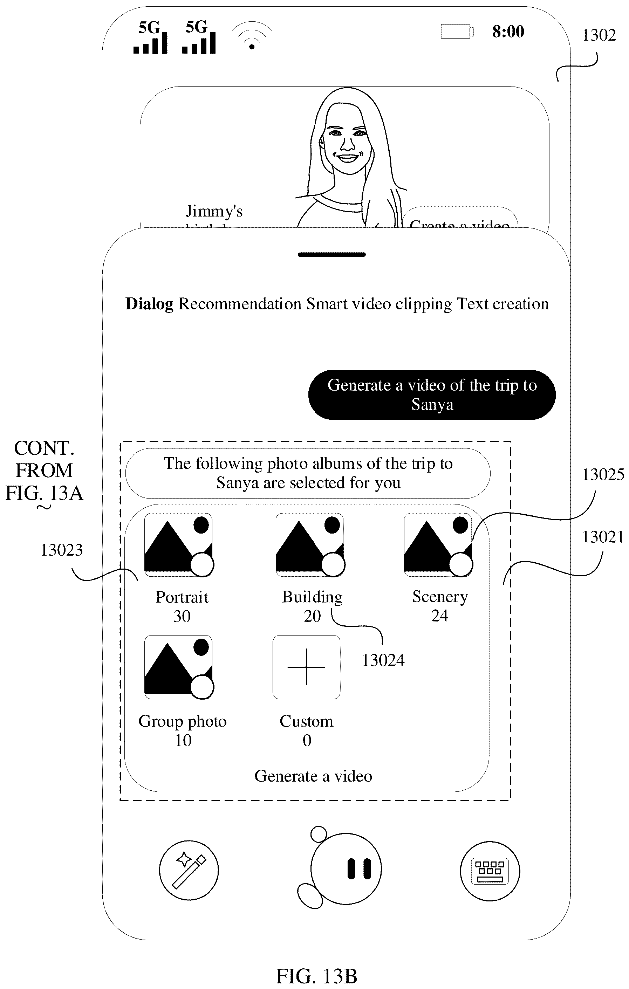

Using searching for image materials of trips (such as the journey 1 and the revisited destination 2) as an example, the mobile phone may classify the found image materials into photo albums of one or more of a portrait type, a scenery type, a building type, and a group photo type. With reference to FIG. 13A and FIG. 13B, the mobile phone may display an interface 1301 when starting image search is triggered (for example, in response to the trigger operation of the user on the creation recommendation card 9011 in the foregoing interface 901). The mobile phone may display an interface 1302 after search is completed. The interface 1302 includes a dialog 13021 of a search result. The dialog 13021 includes photo albums of the found image materials, such as "portrait" 13023, "building" 13024, and "scenery" 13025. The "portrait" 13023 is a photo album of the portrait type, the "building" 13024 is a photo album of the building type, and the "scenery" 13025 is a photo album of the scenery type.

In some embodiments, the mobile phone may present the found image materials in different forms based on a length of a timeline corresponding to the image search request.

Birthdays, anniversaries, and holidays usually span years and have a relatively long timeline, such as a birthday once a year, National Day once a year, and a wedding anniversary once a year. Trips usually happen only two or three times a year, or even less, and also have a relatively long timeline. In addition, growth records and memoirs usually have a long timeline. For example, a growth record of a child usually starts from the birth of the child to the present. Correspondingly, for image search requests related to birthdays, anniversaries, holidays, trips, growth records, and memoirs (which may be collectively referred to as a target search request), the mobile phone may present the found image materials in the form of photo albums. In addition, for another image search request, the mobile phone may present the found image materials in the form of thumbnails.

In the foregoing Manner 3, the image search request is a selection operation of the user on the target topic of the video creation type. If the target topic of the video creation type is a topic related to the target image search request, the mobile phone may present the found image materials in the form of photo albums. If the target topic of the video creation type is not a topic related to the target image search request, the mobile phone may present the found image materials in the form of thumbnails of the images.

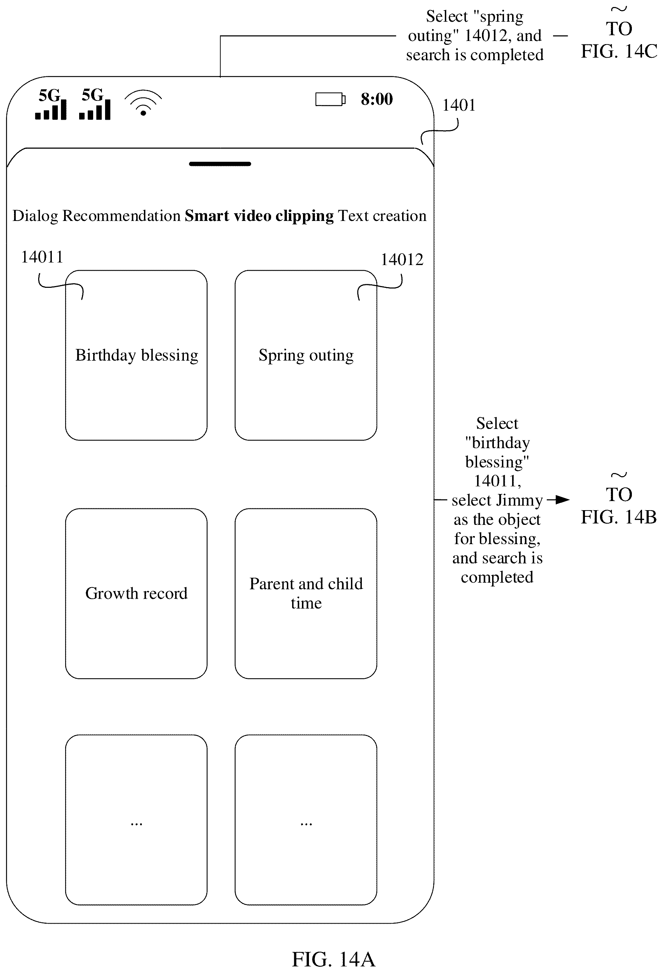

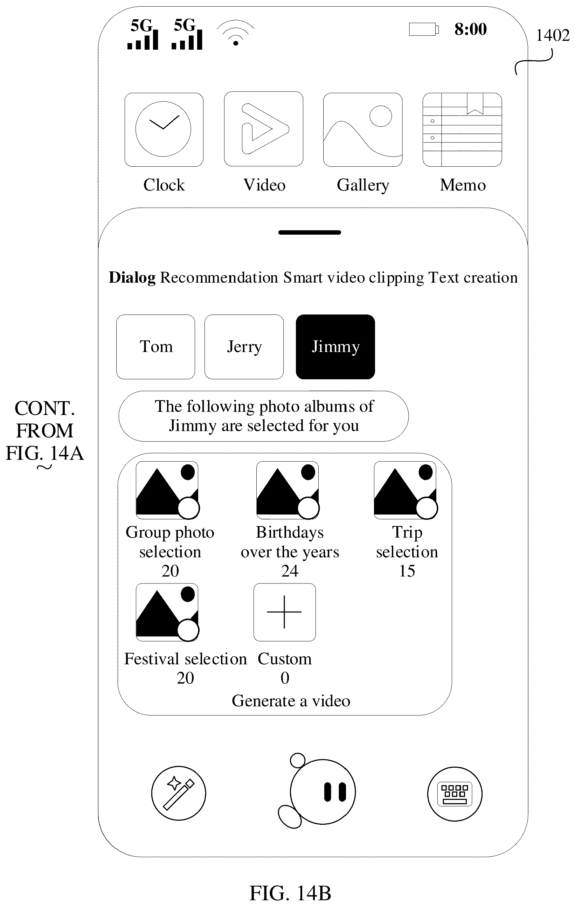

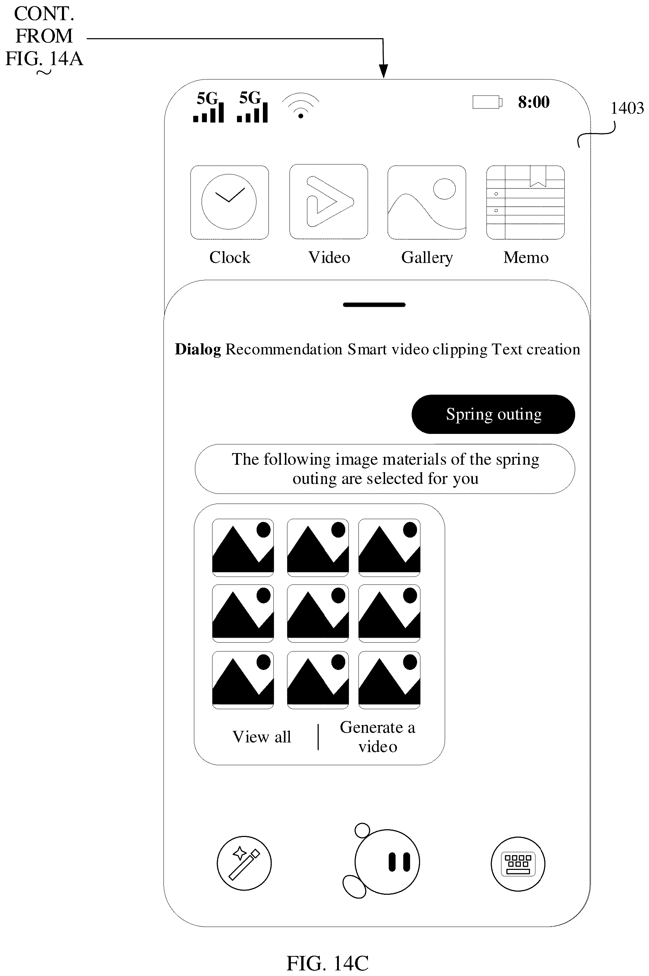

With reference to FIG. 14A, FIG. 14B, and FIG. 14C, the mobile phone may display an interface 1401 (same as the foregoing interface 402), where the interface 1401 includes topic options of a plurality of topics of the video creation type such as "birthday blessing" 14011 and "spring outing" 14012.

Using an example in which the topic option of the target topic of the video creation type is the "birthday blessing" 14011, because the "birthday blessing" 14011 indicates a topic related to the birthday, after the user selects the "birthday blessing" 14011 and selects Jimmy as the object of the blessing, and after the mobile phone completes the search, the mobile phone may display an interface 1402. The found image materials are presented in the interface 1402 in the form of photo albums.

Using an example in which the topic option of the target topic of the video creation type is the "spring outing" 14012, because the "spring outing" 14012 indicates a topic not related to the target image search request, after the user selects the "spring outing" 14012 and after the mobile phone completes the search, the mobile phone may display an interface 1403. The found image materials are presented in the interface 1403 in the form of thumbnails.

In the foregoing Manner 5, the image search request is the trigger operation of the user on the creation recommendation card. Based on the foregoing descriptions of Manner 5, it can be learned that, the creation recommendation card includes the creation recommendation card of the birthday blessing video, the creation recommendation card of the anniversary video, the creation recommendation card of the journey 1, the creation recommendation card of the revisited destination 2, the creation recommendation card of the newly created images, and the like. The creation recommendation card of the journey 1 and the creation recommendation card of the revisited destination 2 correspond to the creation requirement of trips.

If the creation recommendation card is a card of the target image search request, the mobile phone may present the found image materials in the form of photo albums.

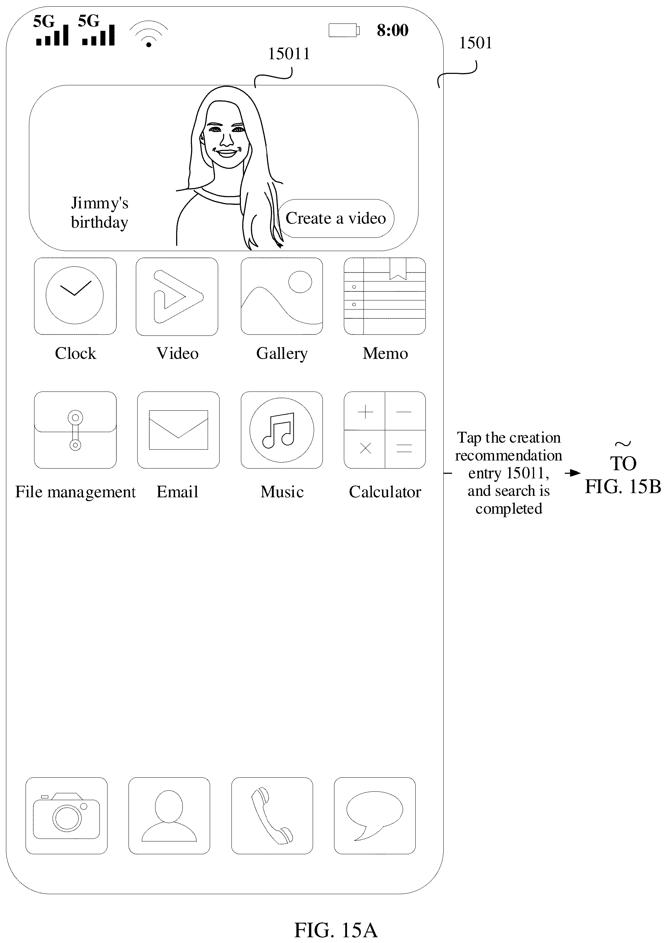

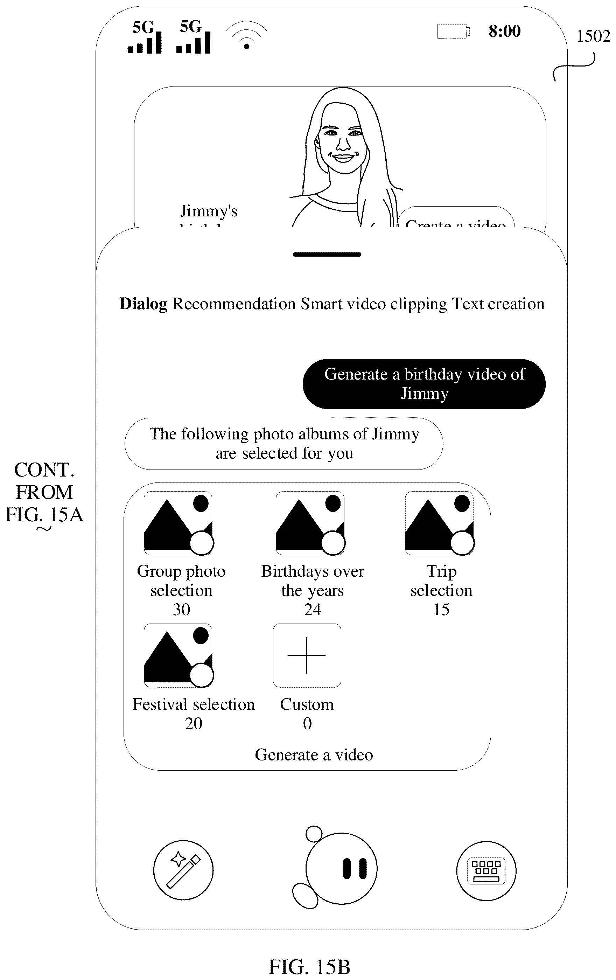

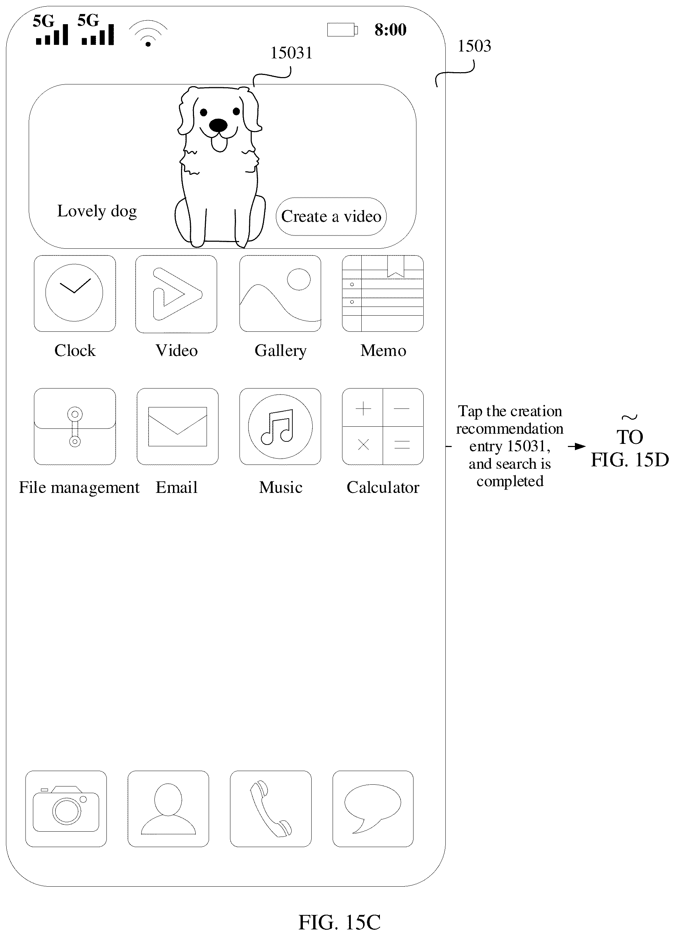

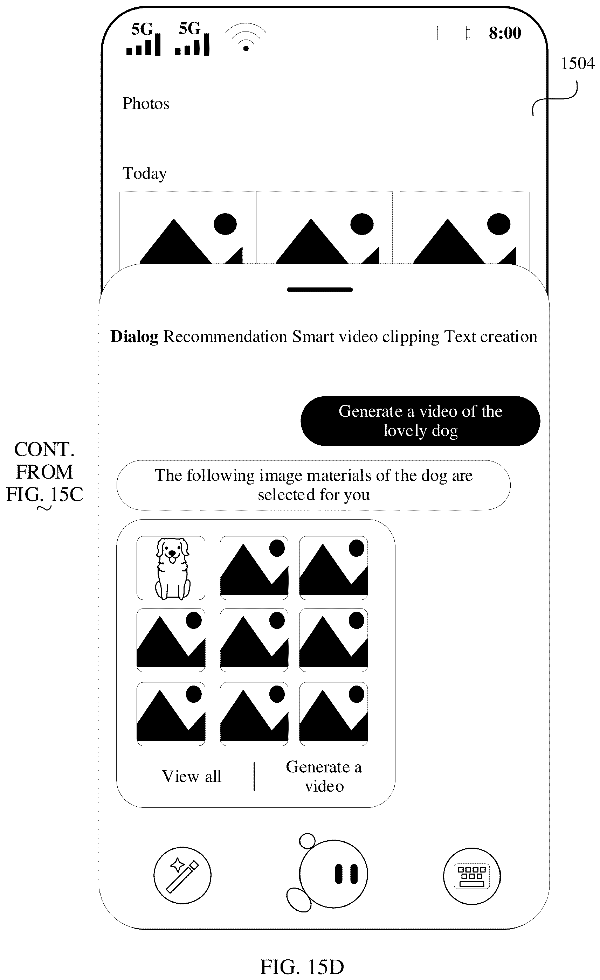

With reference to FIG. 15A, FIG. 15B, FIG. 15C, and FIG. 15D, the mobile phone may display an interface 1501 (same as the foregoing interface 901), where the interface 1501 includes a creation recommendation card 15011 of the birthday blessing video. Because the creation recommendation card 15011 is a card of an image search request related to the birthday, after the user taps the creation recommendation card 15011 and after the mobile phone completes the search, the mobile phone may display an interface 1502. The found image materials are presented in the interface 1502 in the form of photo albums.

If the creation recommendation card is not a card of the target image search requirement, the mobile phone may present the found image materials in the form of thumbnails.

Still with reference to FIG. 15A, FIG. 15B, FIG. 15C, and FIG. 15D, the mobile phone may display an interface 1503, where the interface 1503 includes a creation recommendation card 15031 of newly added images (such as "lovely dog"). Because the creation recommendation card 15031 of the newly added images is not an entry of the target image search request, in response to a tap operation of the user on the creation recommendation card 15031, the mobile phone may display an interface 1504 after finding the image materials. The found image materials are presented in the interface 1504 in the form of thumbnails.

Except the foregoing Manners 3 and 5, in the foregoing Manners 1, 2, 4, and 6, the image search request is that the user inputs voice or text indicating image search in the dialog box. The mobile phone may determine, through semantic analysis, whether the voice or text input by the user in the dialog box corresponds to the target image search request. Similarly, if it is determined that the voice or text input by the user in the dialog box corresponds to the target image search request, for example, the user inputs "images of National Day", the mobile phone may present the found image materials in the form of photo albums. If it is determined that the voice or text input by the user in the dialog box does not correspond to a target creation requirement, for example, the user inputs "dance competition images", the mobile phone may present the found image materials in the form of thumbnails.

In this embodiment, for an image search request with a long timeline, the mobile phone may present the found image materials in the form of photo albums, so as to present the image materials to the user by types, thereby facilitating the user in viewing and selecting photo albums to create a video.

In some other embodiments, the mobile phone may present the found image materials in different forms based on a quantity of found images. If the quantity of found images is greater than the quantity 1, for example, 30 or 50, the found image materials are presented in the form of the photo albums; or if the quantity of found images is less than or equal to the quantity 1, the found image materials are presented in the form of thumbnails. In this way, when the quantity of the found image materials is relatively large, the mobile phone may present the image materials based on classification. For a specific implementation of obtaining the photo albums, refer to the foregoing related descriptions. Details are not described herein again.

In this embodiment, for different image search requests, quantities of images found by the mobile phone may be different, and the found image materials are presented in different forms. Further, at different time points, for a same image search request, quantities of images found by the mobile phone may also be different, and the found image materials are also presented in different forms.

Using an example in which the quantity 1 is 50, when the child is just born, the quantity of images shot by the mobile phone is only ten, which is less than the quantity 1. In this case, in response to a requirement of creating a growth record video of the child, for example, "growth record of the child" is input in the dialog box, if the quantity of images found by the mobile phone is less than the quantity 1, the found image materials are presented in the form of thumbnails of the image materials. When the child is two years old, the quantity of images of the child that are shot by the mobile phone exceeds 50, which is greater than the quantity 1. In this case, in response to the requirement of creating a growth record video of the child, if the quantity of images found by the mobile phone is greater than the quantity 1, the found image materials are presented in the form of photo albums.

Certainly, the mobile phone may alternatively not distinguish between lengths of timelines and between quantities of found images, but may present the found image materials in the same form, such as the form of thumbnails.

The mobile phone may create a video by using the found image materials. In some embodiments, the mobile phone may also adjust image materials for creating a video, such as adding or deleting image materials, and then creating a video by using image materials obtained after adjustment. The following is separately described for the form of the thumbnails and the form of the photo albums.

Form 1: form of the thumbnails.

The search result further includes an entry 1 for viewing all selected materials. In response to a trigger operation of the user on the entry 1, such as a tap operation, the mobile phone may display thumbnails of all currently selected image materials, and display an entry 2 for adding more selected materials.

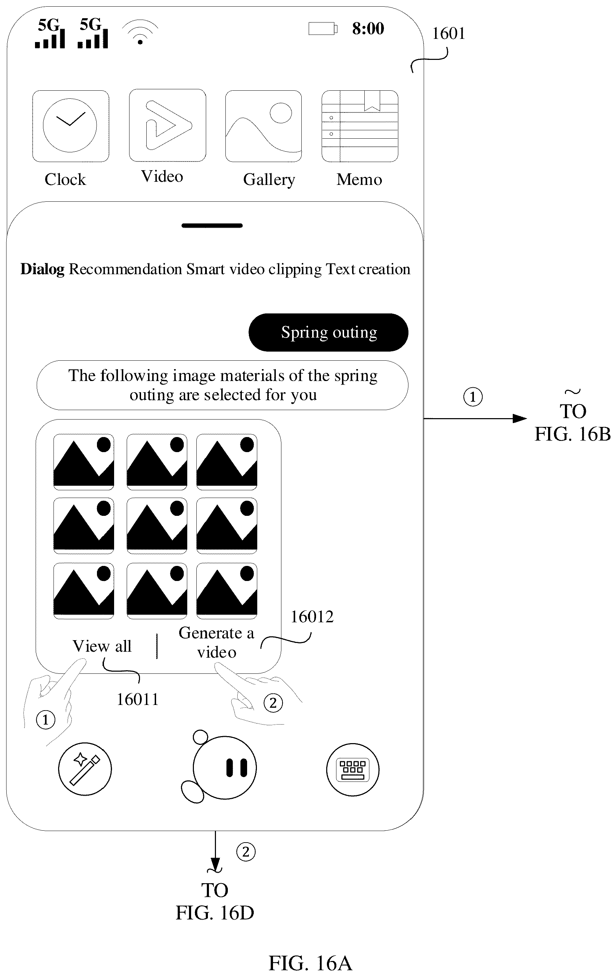

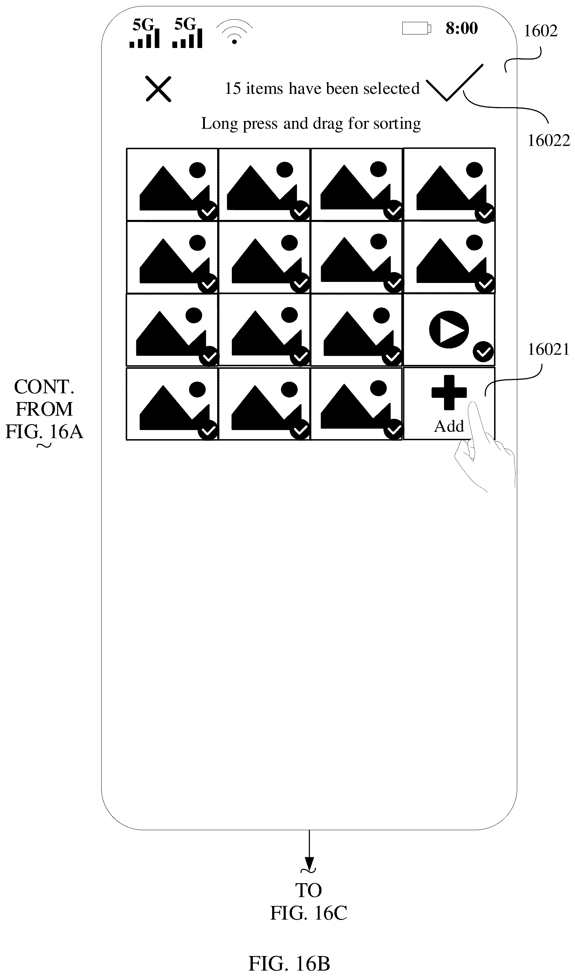

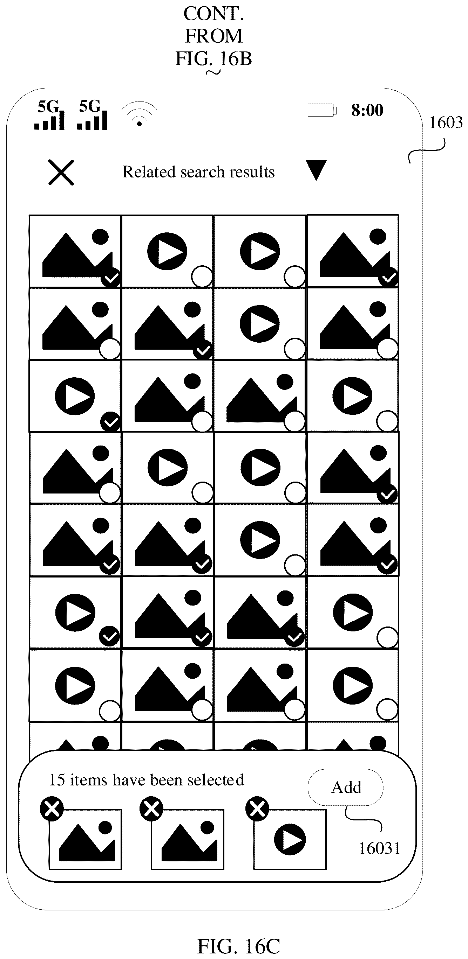

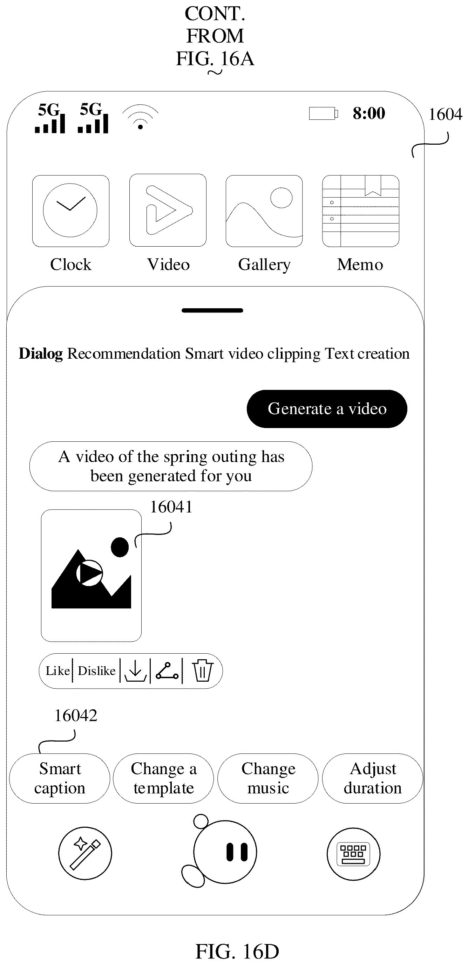

With reference to FIG. 16A, FIG. 16B, FIG. 16C, and FIG. 16D, using an example in which the entry 1 is "view all" 16011 in an interface 1601 (same as the foregoing interface 1403), the mobile phone may display an interface 1602 in response to a tap operation of the user on the "view all" 16011. The interface 1602 includes thumbnails of 15 selected image materials. The thumbnails of the interface 1602 all have a mark "√", indicating being selected. In addition, the interface 1602 further includes "add" 16021, where the "add" 16021 is the entry 2 for adding more selected materials.

In response to a deselection operation of the user on one or more of thumbnails of all the currently selected image materials, such as a tap operation, the mobile phone may deselect one or more image materials to delete some of the selected image materials. Subsequently, in response to a confirmation operation, for example, a tap operation on "√" 16022 in the interface 1602, the mobile phone may return to the dialog box, for example, return to the interface 1601.

In response to a trigger operation of the user on the entry 2, the mobile phone may display a search result page. The search result page includes thumbnails of all the found image materials. Using an example in which the entry 2 is the "add" 16021 in the interface 1602, the mobile phone may display an interface 1603 in response to a tap operation of the user on the "add" 16021, where the interface 1603 is the search result page. The interface 1603 includes all the found image materials matching the "spring outing".

In the search result page, thumbnails of the selected image materials have a mark 1, for example, "√", and thumbnails of unselected image materials do not have the mark 1. In response to a deselection operation of the user on one or more thumbnails having the mark 1 in the search result page, the mobile phone may deselect one or more corresponding image materials, for example, cancel the mark 1 of the thumbnail, to delete some of the selected image materials. In response to a selection operation of the user on the one or more thumbnails that do not have the mark 1 in the search result page, the mobile phone may select one or more corresponding image materials, for example, add the mark 1 to the thumbnail, to add the selected image materials. Subsequently, in response to a confirmation operation, for example, a tap operation on "add" 16031 in the interface 1603, the mobile phone may return to the dialog box, for example, return to the interface 1601.

In addition, in a case of displaying the dialog box, the user may further input voice or text indicating to add selected image materials (an adding instruction for short), for example, input voice "add five image materials" or "add some images". The mobile phone may add the selected image materials in response to the adding instruction. Similarly, in a case of displaying the dialog box, the user may further input voice or text indicating to reduce selected image materials (a reduction instruction for short), for example, input voice "reduce three image materials" or "reduce a large quantity of images". The mobile phone may deselect the image materials in response to the reduction instruction.

In should be noted that, in Form 1, the thumbnails displayed by the mobile phone in the search result are all thumbnails of the selected image materials.

The mobile phone may create a video by using the selected image materials in response to an operation of creating the video. Still with reference to FIG. 16A, FIG. 16B, FIG. 16C, and FIG. 16D, using an example in which the operation of creating the video is a tap operation of the user on "generate a video" 16012 in the search result, the mobile phone may display an interface 1604 in response to the tap operation of the user on the "generate a video" 16012, where the interface 1604 includes a video 16041 obtained through creation.

Form 2: form of the photo albums.

In the search result, image materials in each photo album are selected by default. In the form 2, the mobile phone may adjust image materials selected in each photo album, and may further add a photo album. The following is separately described:

First, selected image materials in each photo album are adjusted.

In response to a trigger operation 1 of the user on a target photo album, such as a tap operation, the mobile phone may display thumbnails of all image materials included in the target photo album. In response to a deselection operation of the user on one or more thumbnails, such as a tap operation, the mobile phone may deselect one or more corresponding image materials, to adjust the image materials selected in the target photo album.

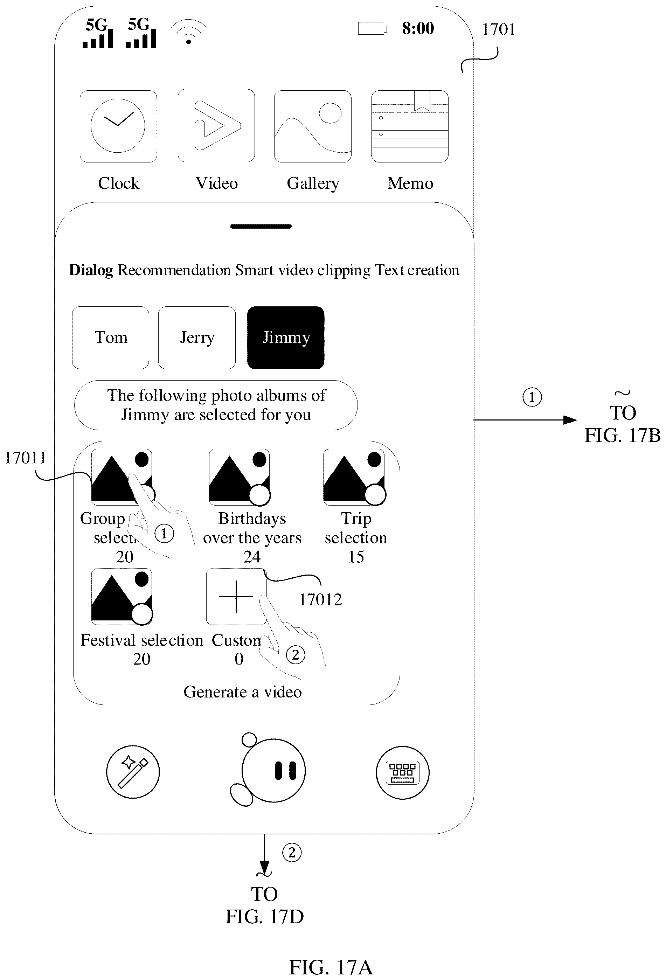

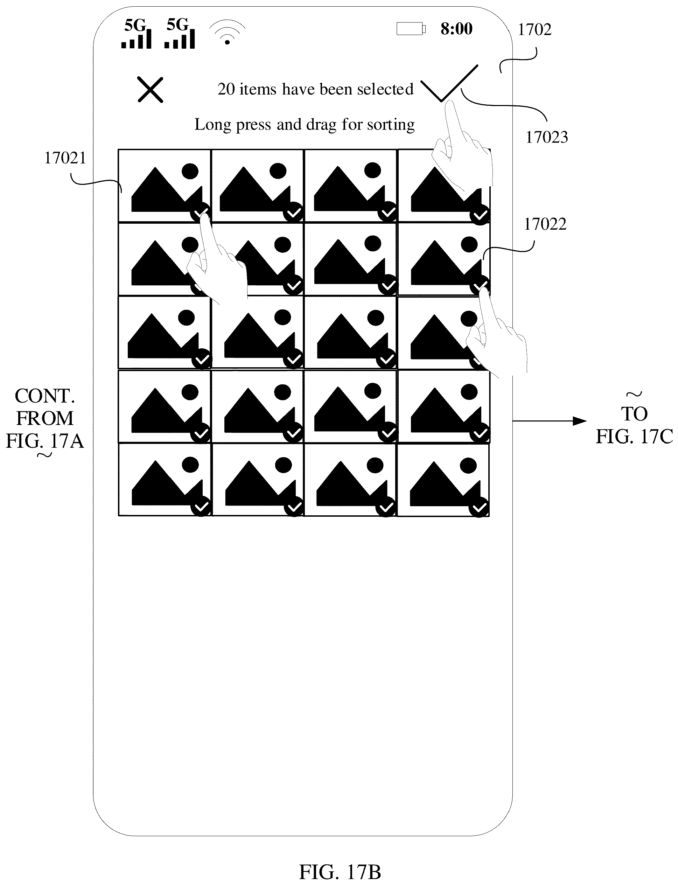

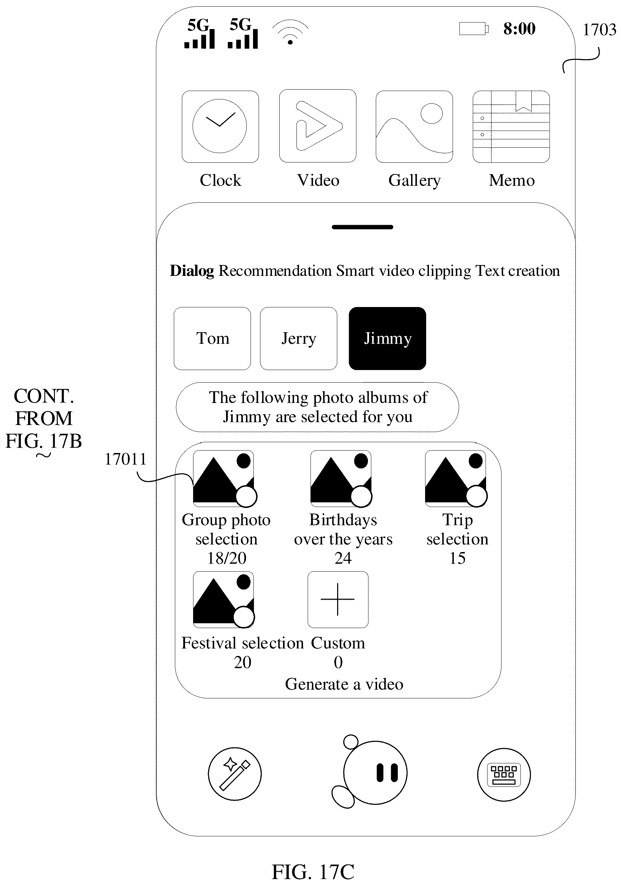

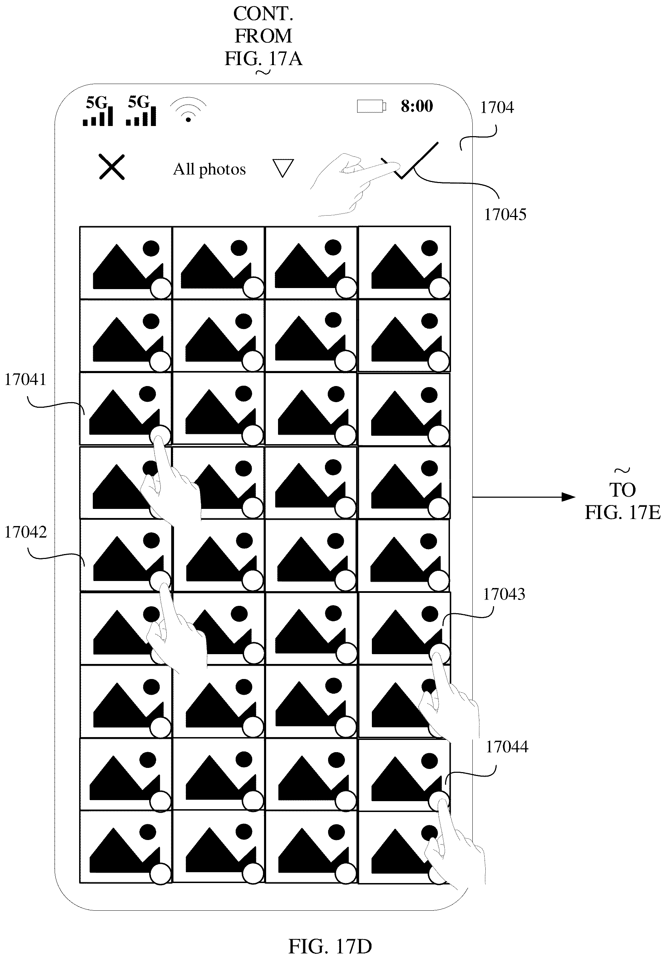

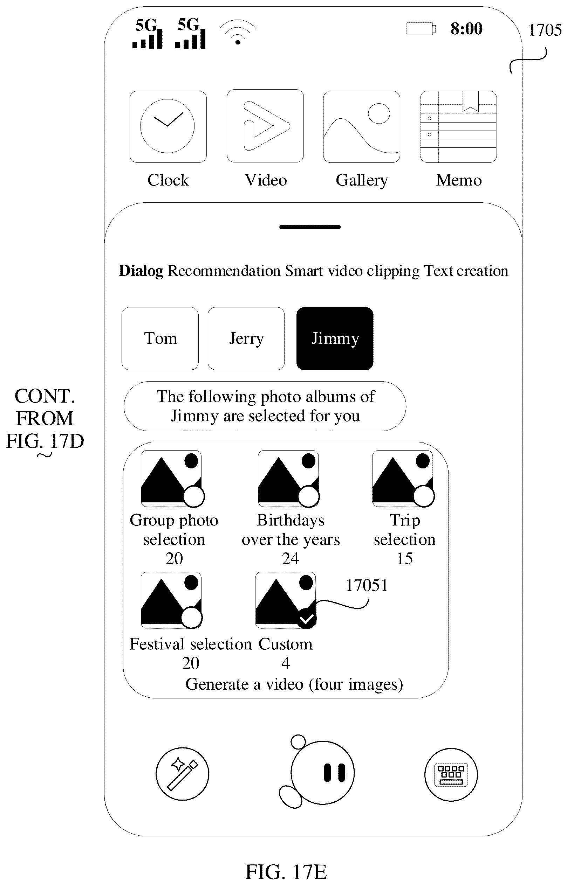

With reference to FIG. 17A, FIG. 17B, FIG. 17C, FIG. 17D, and FIG. 17E, using an example in which the target photo album is "group photo selection" 17011 in an interface 1701 (same as the foregoing interface 1402), the mobile phone may display an interface 1702 in response to a tap operation of the user on the "group photo selection" 17011, where the interface 1702 includes thumbnails of image materials in the photo album "group photo selection" 17011, such as a thumbnail 17021 and a thumbnail 17022. The thumbnails in the interface 1702 all have a mark "√", indicating being selected. In response to a tap operation of the user on the thumbnail 17011 and the thumbnail 17022, the mobile phone may deselect corresponding image materials.

Subsequently, in response to a confirmation operation, the mobile phone may return to the dialog box again, but a quantity of images selected in the target photo album in the dialog box changes. Still with reference to FIG. 17A, FIG. 17B, FIG. 17C, FIG. 17D, and FIG. 17E, using an example in which the confirmation operation is a tap operation on "√" 17023 in the interface 1702, the mobile phone may display an interface 1703 in response to the tap operation on the "√" 17023 in the interface 1702. The number below the "group photo selection" 17011 in the interface 1703 changes from "20" in the interface 1701 to "18/20", indicating that 18 image materials in the "group photo selection" 17011 are in a selected state, and the remaining two (such as two image materials corresponding to the thumbnail 17021 and the thumbnail 17022) are deselected.

Similarly, in a case of displaying the dialog box, the user may further input voice or text indicating to reduce image materials selected in the target photo album (a classification reduction instruction for short), for example, input voice "reduce three image materials in the group photo selection" or "reduce a large quantity of images in the group photo selection". In response to the classification reduction instruction, the mobile phone may deselect image materials selected in the target photo album.

Second, a photo album is added.

The search result further includes an entry 3 for a custom photo album. In response to a trigger operation of the user on the entry 3, such as a tap operation, the mobile phone may display thumbnails of a plurality of image materials in the gallery application. In response to a selection operation of the user on one or more thumbnails, the mobile phone may select one or more corresponding image materials.

Still with reference to FIG. 17A, FIG. 17B, FIG. 17C, FIG. 17D, and FIG. 17E, using an example in which the entry 3 is "custom" 17012 in the interface 1701, the mobile phone may display an interface 1704 in response to a tap operation of the user on the "custom" 17012, where the interface 1704 includes thumbnails of image materials in the album "all photos" in the gallery application, such as a thumbnail 17041, a thumbnail 17042, a thumbnail 17043, and a thumbnail 17044. In response to a selection operation of the user on four thumbnails: the thumbnail 17041, the thumbnail 17042, the thumbnail 17043, and the thumbnail 17044 in the interface 1704, the mobile phone may select four image materials corresponding to the thumbnail 17041, the thumbnail 17042, the thumbnail 17043, and the thumbnail 17044 in the interface.

Subsequently, the mobile phone may return to the dialog box in response to a confirmation operation, and display a custom photo album at the position of the entry 3 in the dialog box, where the custom photo album includes one or more selected image materials. Still with reference to FIG. 17A, FIG. 17B, FIG. 17C, FIG. 17D, and FIG. 17E, using an example in which the confirmation operation is a tap operation on "√" 17045 in the interface 1704, the mobile phone may display an interface 1705 in response to the tap operation on the "√" 17045 in the interface 1704, where the interface 1705 includes a custom photo album 17051. The custom photo album 17051 includes one or more selected image materials. For example, "4" is displayed below the custom photo album 17051, indicating that the custom photo album 17051 includes four selected image materials.

The custom photo album is selected by default. For example, the custom photo album in the interface 1705 has a mark "√", indicating being selected. The custom photo album is selected by default. To be specific, image materials in the custom photo album are used by default to create a video.

A cover of the custom photo album may be the first thumbnail selected from thumbnails of a plurality of image materials in the gallery application.

Similarly, in a case of displaying the dialog box, the user may further input voice or text for adding a custom photo album (a photo album adding instruction for short), for example, input voice "add a custom photo album" or "add five images to the custom photo album". The mobile phone may create the custom photo album in response to the photo album adding instruction.

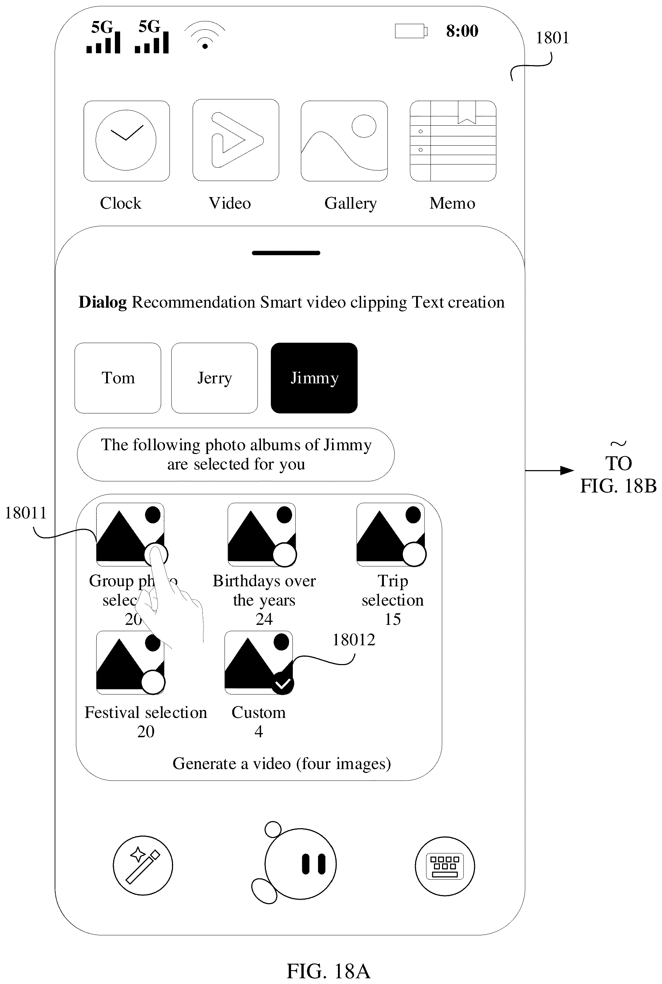

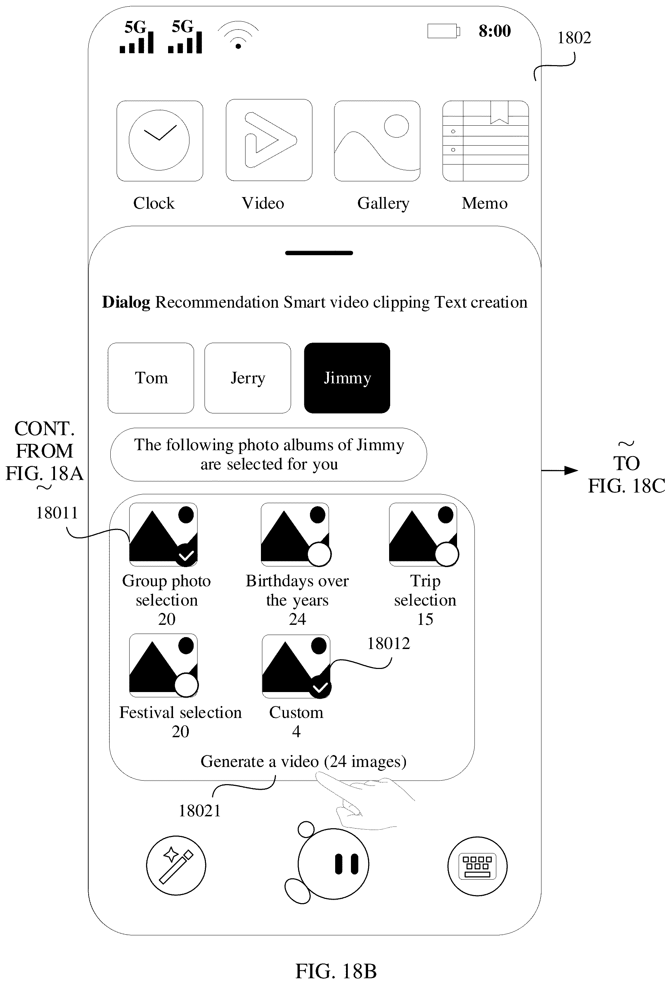

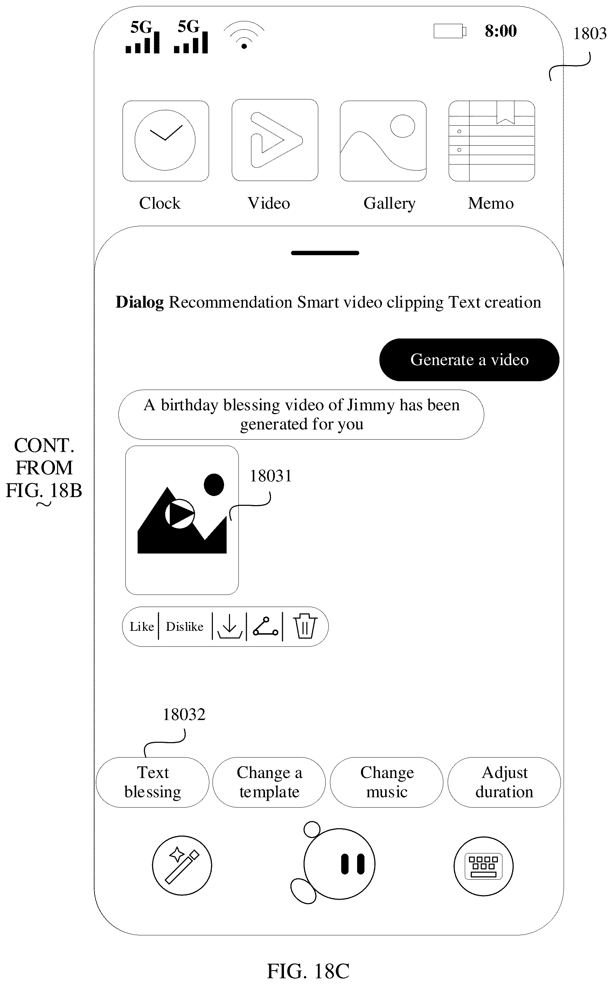

In the form 2, image materials selected in the selected photo album are used to create a video. The mobile phone may select a photo album in response to an operation of selecting the photo album. With reference to FIG. 18A, FIG. 18B, and FIG. 18C, using "group photo selection" 18011 in an interface 1801 (same as the foregoing interface 1705) as an example, the mobile phone may display an interface 1802 in response to a selection operation of the user on the "group photo selection" 18011. Different from the interface 1801, the "group photo selection" 18011 in the interface 1802 is in a selected state. To be specific, image materials selected in the "group photo selection" 18011 are used to create a video.

The mobile phone may create a video by using the image materials selected in the selected photo album in response to an operation of creating the video. Still with reference to FIG. 18A, FIG. 18B, and FIG. 18C, using an example in which the operation of creating the video is a tap operation of the user on "generate a video" 18021 in the interface 1802, the mobile phone may display an interface 1803 in response to the tap operation of the user on the "generate a video" 18021, where the interface 1803 includes a video 18031 obtained through creation. Because the "group photo selection" 18011 and the custom photo album 18012 in the interface 1802 are in a selected state, the video 18031 includes image materials (for example, a total of 20) selected in the "group photo selection" 18011 and image materials (for example, a total of 4) selected in the custom photo album 18012, a total of 24 image materials.

The mobile phone may perform secondary editing on the video after creation is completed.

In some embodiments, the mobile phone may provide one or more edit controls in the dialog box, for secondary editing on the video obtained through creation. For example, the edit control includes at least more of the following: a control for changing a video template, for example, "change a template" in the interface 1604 and the interface 1803; a control for changing background music, for example, "change music" in the interface 1604 and the interface 1803; and a control for adjusting duration of a video, such as "adjust duration" in the interface 1604 and the interface 1803.

Further, the mobile phone may provide different edit controls for different videos, to edit videos in a targeted manner.

In a specific implementation, for a video obtained through creation under an image search request related to the birthday, the anniversary, or the holiday, the mobile phone may provide a control 1 for editing a text blessing, to edit a blessing for the video. Still with reference to FIG. 18A, FIG. 18B, and FIG. 18C, using an example in which the video 18031 in the interface 1803 is a birthday blessing video, correspondingly, the interface 1803 further includes "text blessing" 18032, where the "text blessing" 18032 is the control 1.

For a video obtained through creation under an image search request not related to the birthday, the anniversary, or the holiday, for example, an image search request related to the trips or the growth record, the mobile phone may provide a control 2 for captioning, for adding text to the video. Still with reference to FIG. 16A, FIG. 16B, FIG. 16C, and FIG. 16D, using an example in which the video 16041 in the interface 1604 is a trip video, correspondingly, the interface 1604 further includes "smart caption" 16042, where the "smart caption" 16042 is the control 2.

It should be noted that, for determining the image search request, refer to the foregoing related descriptions of presenting image materials based on the length of the timeline. Details are not described herein again.

The following separately describes specific functions of the control 1 and the control 2.

First, the control 1 is used to add a blessing for a video.

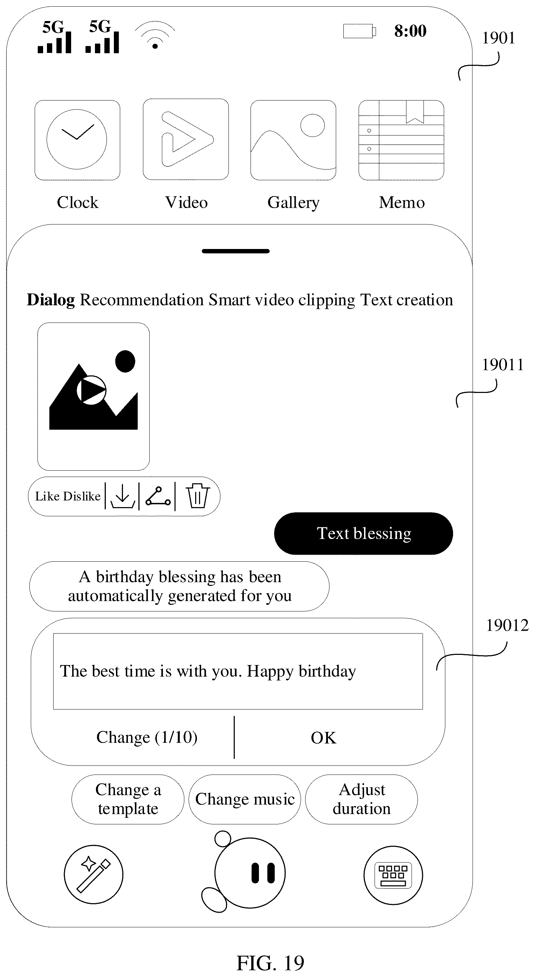

In response to a trigger operation of the user on the control 1, such as a tap operation, the mobile phone may display a blessing card, where the blessing card includes a default blessing. Using an example in which the control 1 is the "text blessing" 18032 in the interface 1803 shown in FIG. 18A, FIG. 18B, and FIG. 18C, the mobile phone may display an interface 1901 shown in FIG. 19 in response to a tap operation of the user on the "text blessing" 18032. A dialog box 19011 in the interface 1901 includes a blessing card 19012, where the blessing card 19012 includes a default blessing "The best time is with you. Happy birthday".

Further, for videos created under different image search requests, the mobile phone may provide different default blessings, to make the default blessings match the image search requests. For example, for a video created under a birthday-related image search request, the mobile phone may provide a default blessing including "Happy birthday"; and for a video created under an anniversary-related image search request, the mobile phone may provide a default blessing including "on this memorable day".

Further, for videos created for different photo albums, the mobile phone may also provide different default blessings, so that the default blessings match image materials for creating the videos. In this way, even for same image search requests, such as birthday-related image search requests, the mobile phone creates videos by using different photo albums, and default blessings provided in blessing cards are also different.

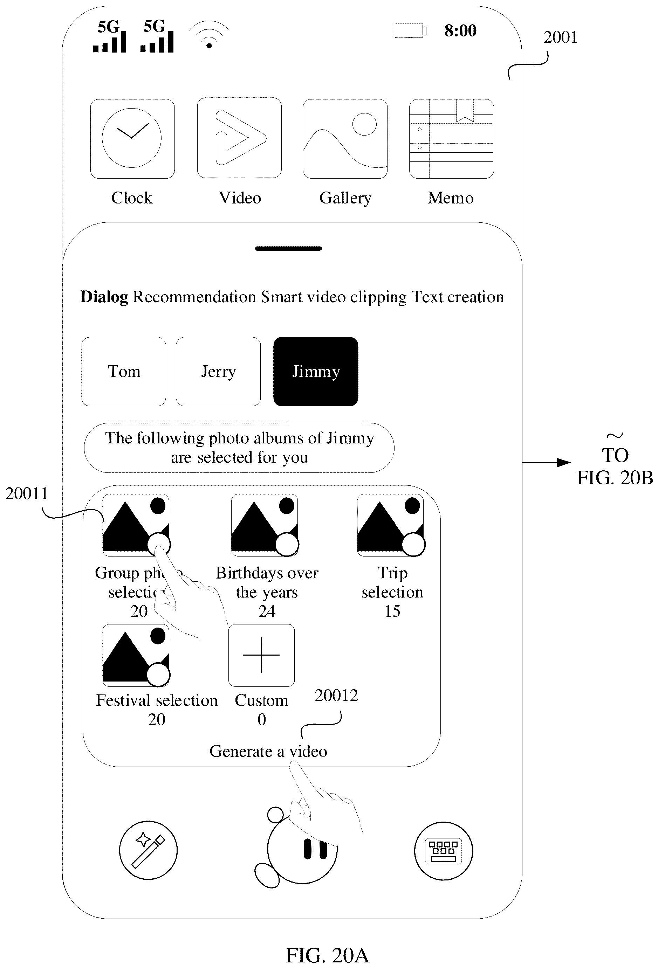

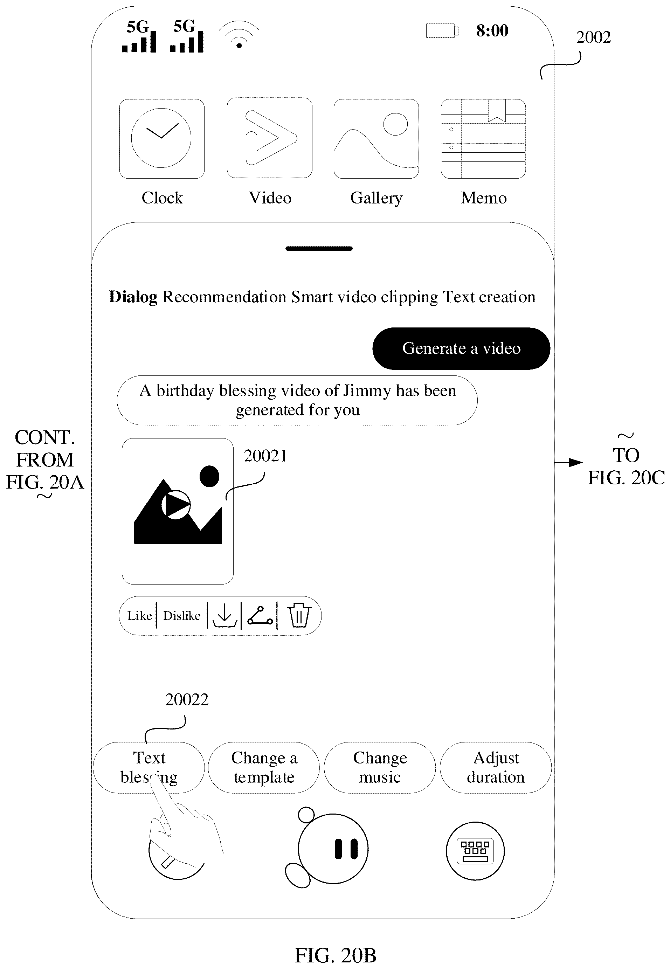

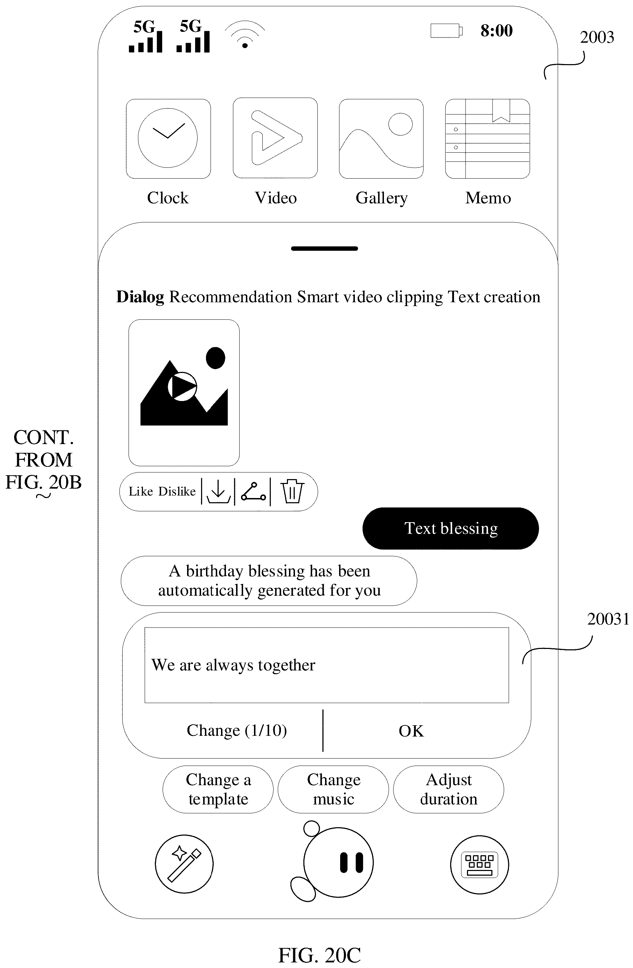

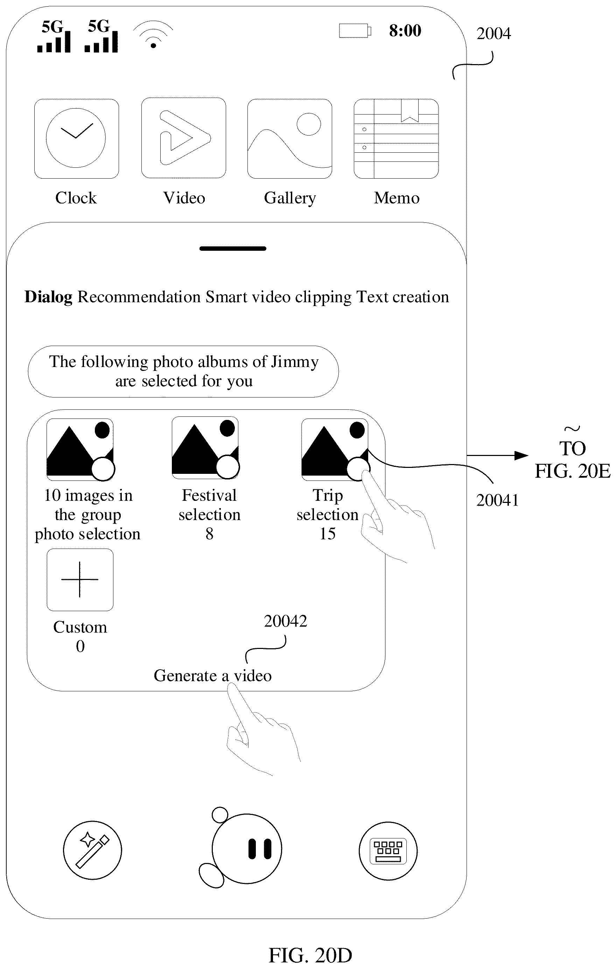

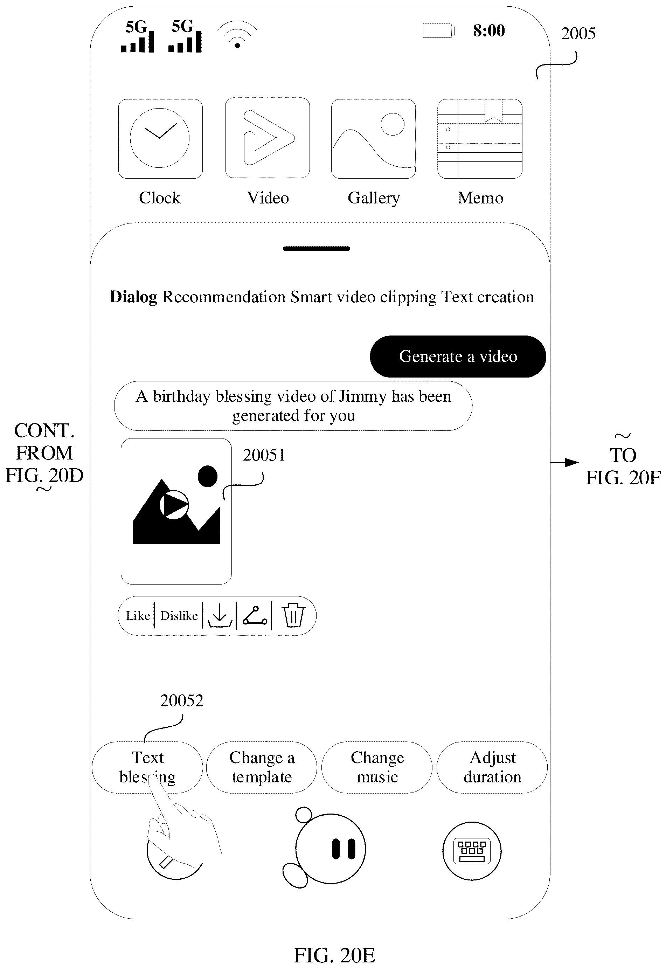

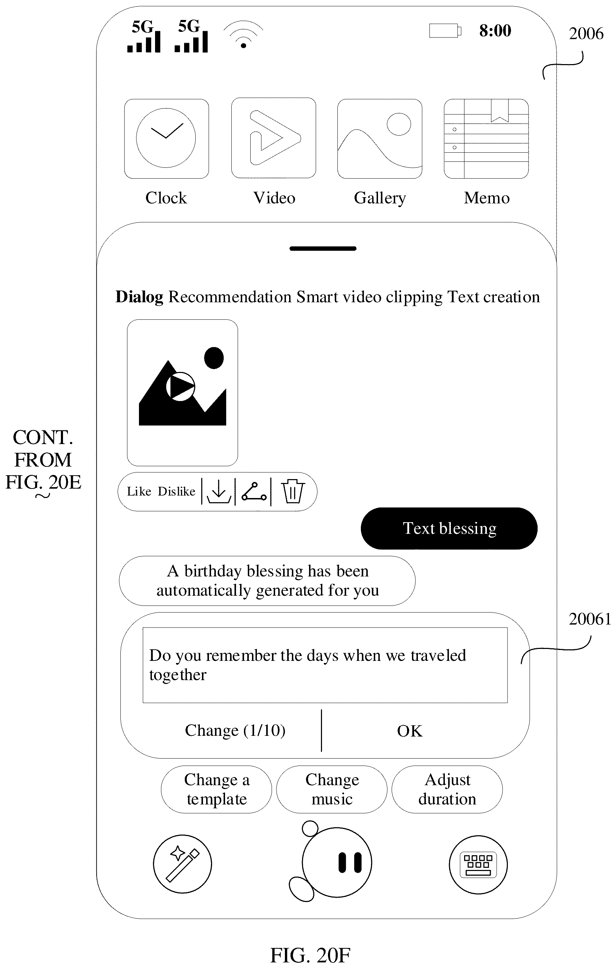

Using an image search request 1 and an image search request 2 that are related to the birthday as an example, refer to FIG. 20A, FIG. 20B, FIG. 20C, FIG. 20D, FIG. 20E, and FIG. 20F.

For the image search request 1, the mobile phone displays an interface 2001 (same as the foregoing interface 1701) after finding image materials. When the user selects "group photo selection" 20011 (a photo album of a group photo type) in the interface 2001 and taps "generate a video" 20012, the mobile phone creates a video 20021 in an interface 2002 (same as the interface 1803). In response to a tap operation of the user on "text blessing" 20022 in the interface 2002, the mobile phone may display an interface 2003, where the interface 2003 includes a blessing card 20031, and the blessing card 20031 includes a default blessing "We are always together". In view of this, the meaning of the default blessing matches the photo album of the group photo type, both of which mean "together".

For the image search request 2, the mobile phone displays an interface 2004 after finding image materials. When the user selects "trip selection" 20041 (a photo album of a trip type) in the interface 2004 and taps "generate a video" 20042, the mobile phone creates a video 20051 in an interface 2005. In response to a tap operation of the user on "text blessing" 20052 in the interface 2005, the mobile phone may display an interface 2006, where the interface 2006 includes a blessing card 20061, and the blessing card 20061 includes a default blessing "Do you remember the days when we traveled together". In view of this, the meaning of the default blessing matches the trips, both of which mean "outing".

In the blessing card, the mobile phone may further change a blessing in at least one of the following manners:

Manner 1: The blessing is changed by using a switching control in the blessing card.

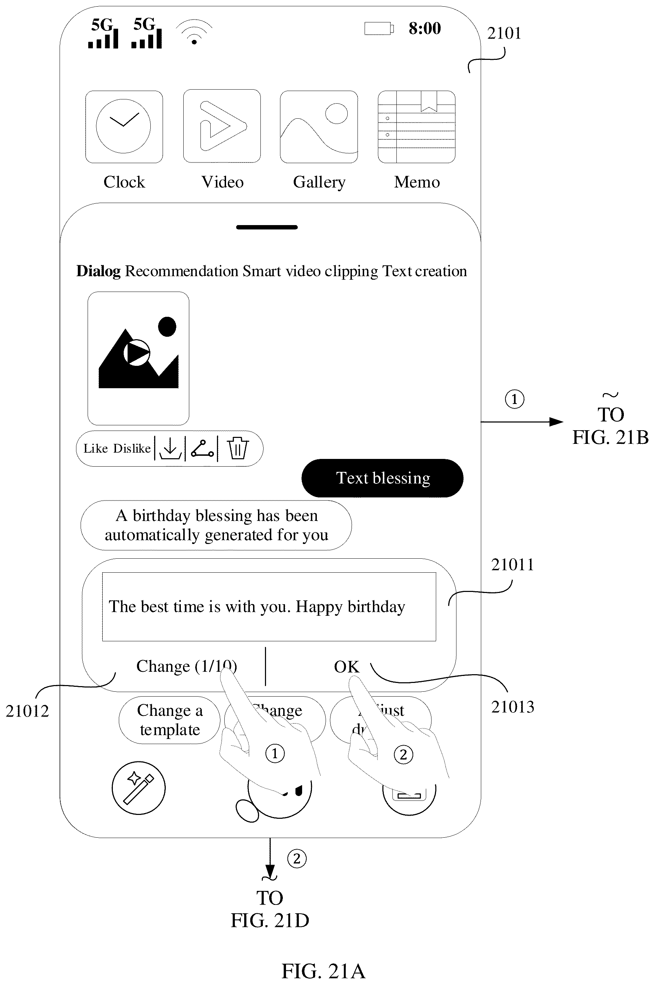

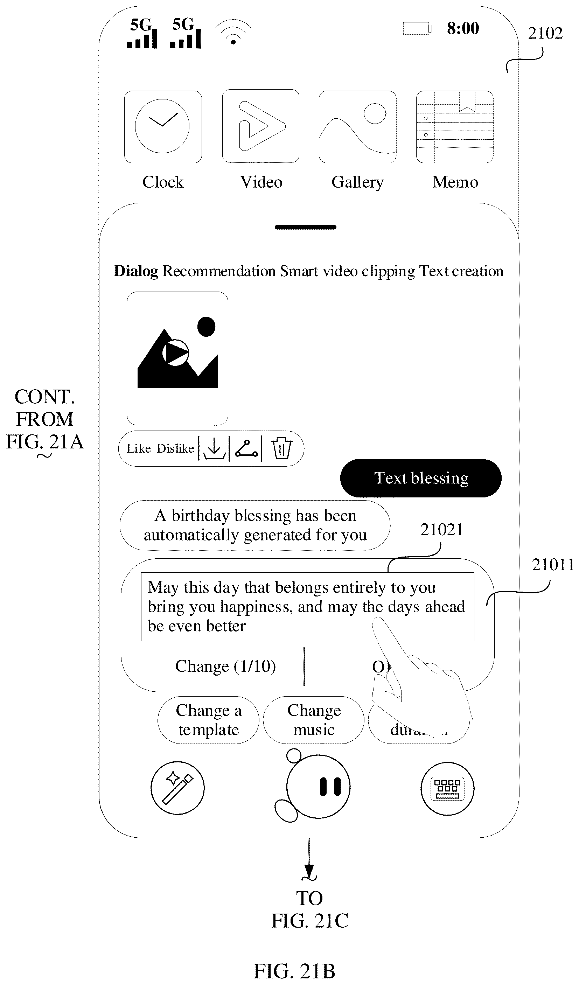

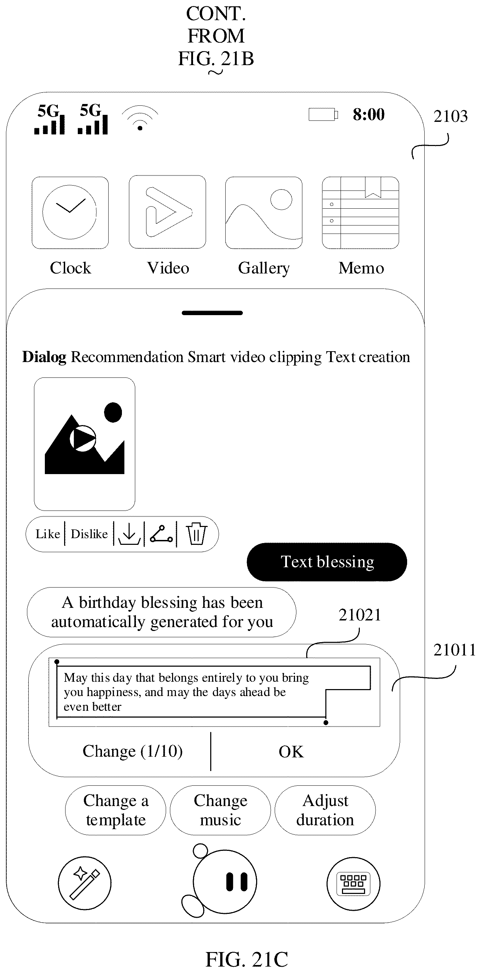

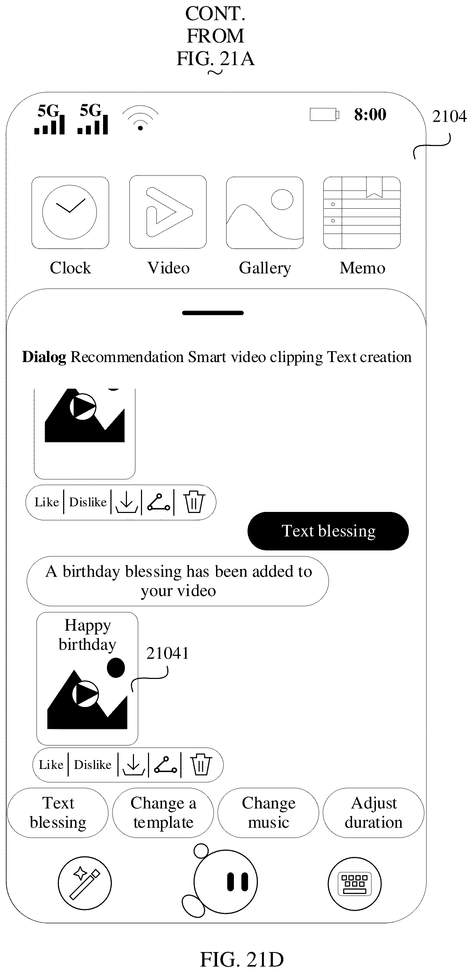

The blessing card includes the switching control, and the mobile phone may change the blessing in the blessing card in response to a trigger operation of the user on the switching control. With reference to FIG. 21A, FIG. 21B, FIG. 21C, and FIG. 21D, using an example in which the switching control is "change" 21012 in the blessing card 21011 in an interface 2101 (same as the foregoing interface 1901), the mobile phone may display an interface 2102 in response to a tap operation of the user on the "change" 21012, where the blessing in the blessing card 21011 in the interface 2102 is changed as "May this day that belongs entirely to you bring you happiness, and may the days ahead be even better".

Manner 2: A blessing is edited in a text box of the blessing card.

The blessing card includes the text box, and the text box includes the blessing. The mobile phone may activate the text box in response to a trigger operation of the user on the text box, to be specific, make the text box in an editable state. Subsequently, the user may edit text in the text box, to change the blessing.

Still with reference to FIG. 21A, FIG. 21B, FIG. 21C, and FIG. 21D, using an example in which a text box 21021 in the blessing card 21011 in the interface 2102 as an example, a blessing is displayed in the text box 21021. The mobile phone may display an interface 2103 in response to a tap operation of the user on the text box 21021. The text box 21021 in the blessing card 21011 in the interface 2103 is in an editable state. For example, the blessing "May this day that belongs entirely to you bring you happiness, and may the days ahead be even better" is selected. The user may edit the blessing in the text box 21021 in the interface 2103, and the mobile phone may receive the blessing edited by the user and display the blessing in the text box 21021.

When the blessing is changed or not changed, in response to a confirmation operation of the user in the blessing card, the mobile phone may apply the current blessing in the text box to the video, to obtain a video 1 obtained after the blessing is added, and display the video 1 in the text box. Still with reference to FIG. 21A, FIG. 21B, FIG. 21C, and FIG. 21D, using an example in which the confirmation operation is a tap operation of the user on "OK" 21013 in the blessing card 21011 in the interface 2101, the mobile phone may display an interface 2104 in response to the tap operation of the user on the "OK" 21013, where the interface 2104 further includes a video 21041. The blessing "The best time is with you. Happy birthday" is added to the video 21041. To be specific, the video 21041 is the video 1.

Second, the control 2 is used to add text to the video.

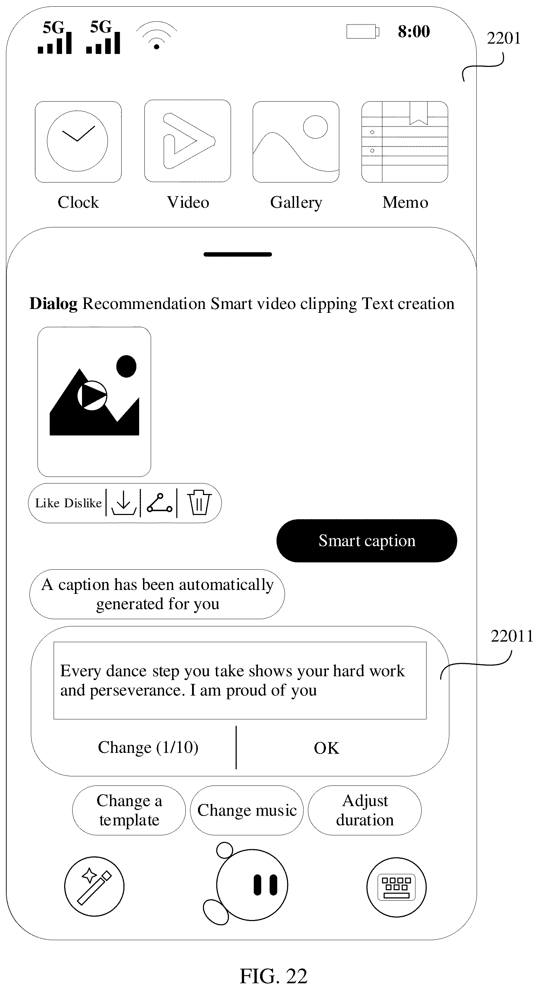

In response to a trigger operation of the user on the control 2, such as a tap operation, the mobile phone may display a caption card, where the caption card includes a default caption. Using an example in which the control 2 is the "smart caption" 16042 in the interface 1604 shown in FIG. 16A, FIG. 16B, FIG. 16C, and FIG. 16D, the mobile phone may display an interface 2201 shown in FIG. 22 in response to a tap operation of the user on the "smart caption" 16042. The interface 2201 includes a caption card 22011, where the caption card 22011 includes a default caption "Every dance step you take shows your hard work and perseverance. I am proud of you"

Further, for videos created under different image search requests, the mobile phone may provide different default captions, to make the default captions match the image search requests. For videos created for different photo albums, the mobile phone may also provide different default captions, so that the default captions match image materials for creating the videos. The principle of this part of content is similar to that of the foregoing default blessing. For details, refer to the foregoing related descriptions of the default blessing. Details are not described herein again.

In the caption card, the mobile phone may also change the caption in at least one of the following manners. Manner 1: The caption is changed by using a switching control in the caption card. Manner 2: The blessing is edited in a text box of the caption card. The principle of this part of content is similar to that of changing the blessing in the foregoing description. For details, refer to the foregoing related descriptions of changing the blessing. Details are not described herein again.

When the caption is changed or not changed, in response to a confirmation operation of the user in the caption card, the mobile phone may apply the current caption in the text box to the video, to obtain a new video, and display the new video in the text box. The principle of this part of content is similar to that of applying the blessing in the foregoing description. For details, refer to the foregoing related descriptions of applying the blessing. Details are not described herein again.

In some other embodiments, in response to a tap operation of the user on the video, the mobile phone may display a video playback interface and play the video. In response to a tap operation of the user on the video playback interface, the mobile phone may display a video edit interface, and complete secondary editing of the video in the video edit interface.

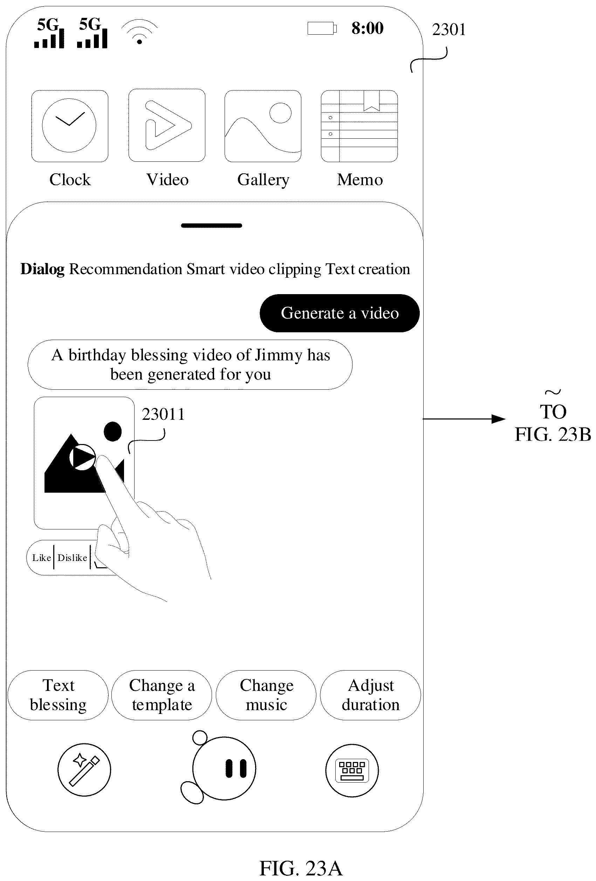

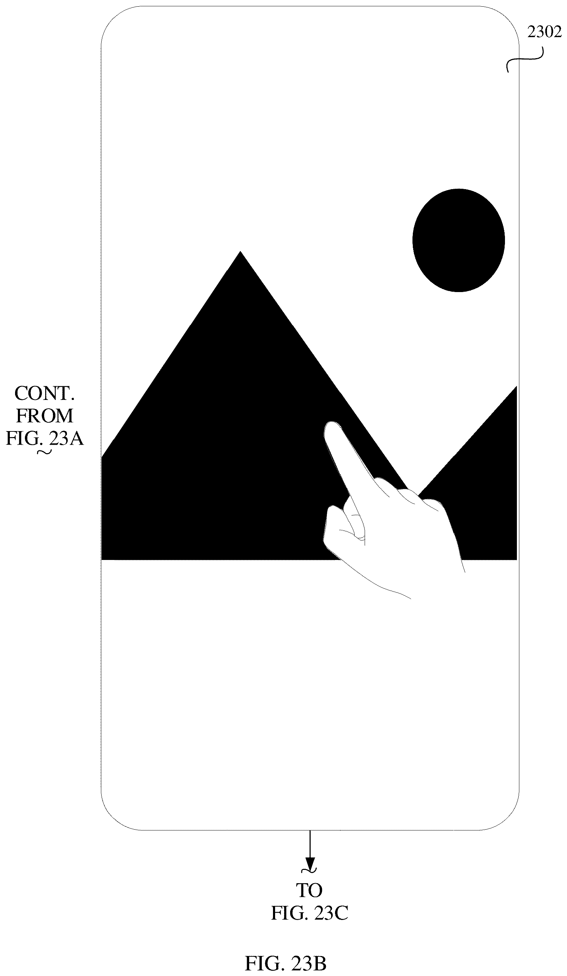

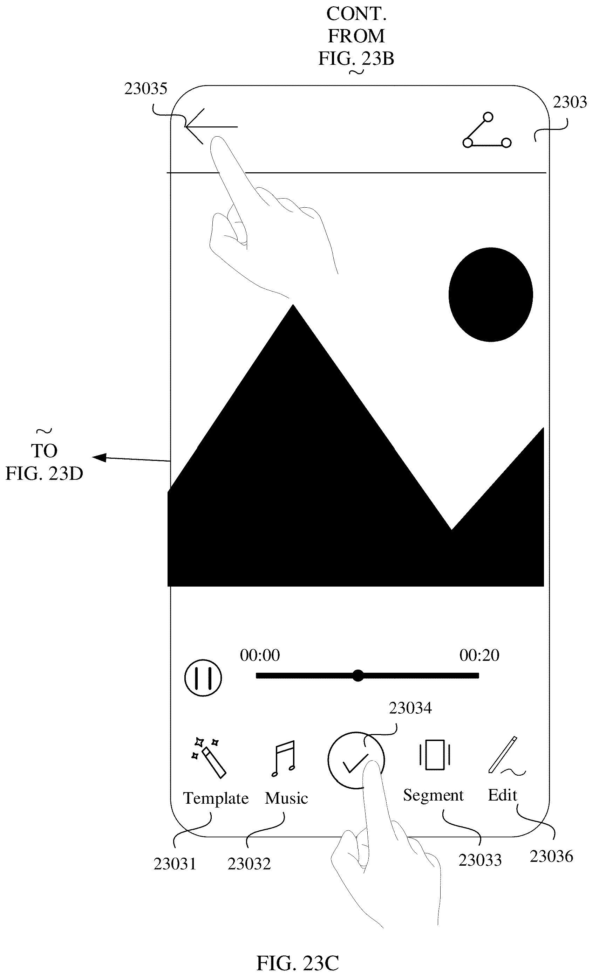

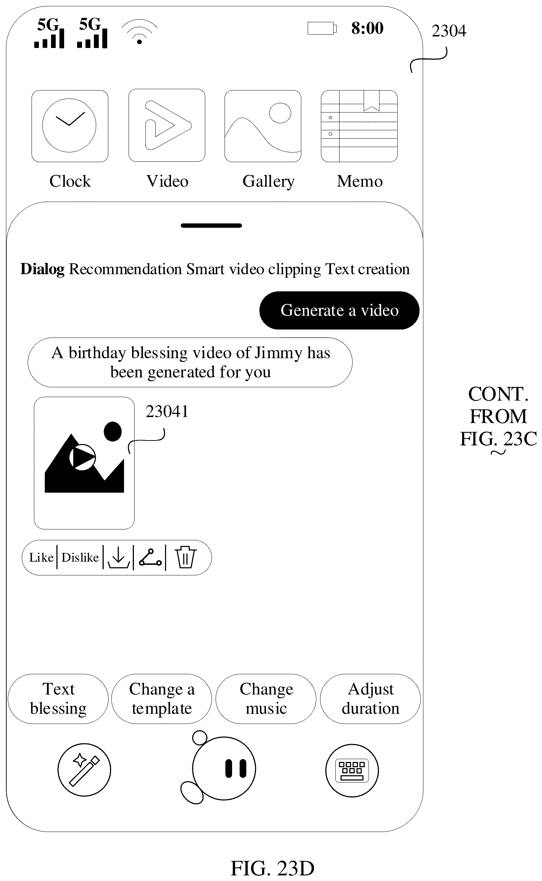

With reference to FIG. 23A, FIG. 23B, FIG. 23C, and FIG. 23D, using a video 23011 in an interface 2301 (same as the foregoing interface 1803) as an example, the mobile phone may display an interface 2302 in response to a tap operation of the user on the video 23011. The interface 2302 is the video playback interface. The video 23011 is being played in the interface 2302. The mobile phone may display an interface 2303 in response to a tap operation of the user in the interface 2302, where the interface 2303 is the video edit interface. The interface 2303 includes a plurality of edit items such as "template" 23031, "music" 23032, "segment" 23033, and "edit" 23036. The "template" 23031 may be used to trigger the mobile phone to change the template of the video; the "music" 23032 may be used to trigger the mobile phone to add background music to the video; the "segment" 23033 may be used to trigger the mobile phone to crop the video; the "edit" 23036 may be used to trigger the mobile phone to perform in-depth editing on the video, such as adding background music to each image in the video or changing the template.

Certainly, the mobile phone may also directly display the video edit interface in response to a tap operation of the user on the video (for example, the video 23011). This is not specifically limited in this embodiment.

After completing editing in the video edit interface, in response to a save operation of the user, the mobile phone may save the editing operation on the video in the video edit interface. After saving editing, in response to a return operation, the mobile phone may display the dialog box again, and replace the video in the dialog box with a video 2 obtained after editing.

Still with reference to FIG. 23A, FIG. 23B, FIG. 23C, and FIG. 23D, using an example in which the save operation is a tap operation on "√" 23034 in the interface 2303, in response to the tap operation of the user on the "√" 23034, the mobile phone may save the editing operation of the user on the video in the video edit interface in the interface. Using an example in which the return operation is a tap operation on a return control 23035 in the interface 2303, after saving editing, the mobile phone may display an interface 2304 in response to the tap operation of the user on the return control 23035. The interface 2304 includes a video 23041, where the video 23041 replaces the video 23011 in the interface 2301.

In other words, in this embodiment, when editing of the video is completed and the dialog box is displayed again, the video in the dialog box is replaced with the video 2 obtained after editing, and is no longer additionally displayed after the original video like the video 1 obtained through editing by the edit control in the dialog box. In this way, the mobile phone can ensure that when editing is triggered from the video (namely, the video is tapped to trigger editing), the video before editing is replaced by the video 2 obtained after editing; and when editing is triggered from the edit control in the dialog box, the video 1 obtained after editing is additionally displayed in the dialog box, namely, a dialog is added.

Certainly, in response to the save operation of the user, the mobile phone may also save editing and directly return to the dialog box, and replace the video in the dialog box with the video 2 obtained after editing. This is not specifically limited in this embodiment.

Around the video in the dialog box, the mobile phone further provides a plurality of quick controls, such as a download control, a share control, and a delete control. The mobile phone may perform corresponding processing on the video in response to a trigger operation of the user on the quick controls.

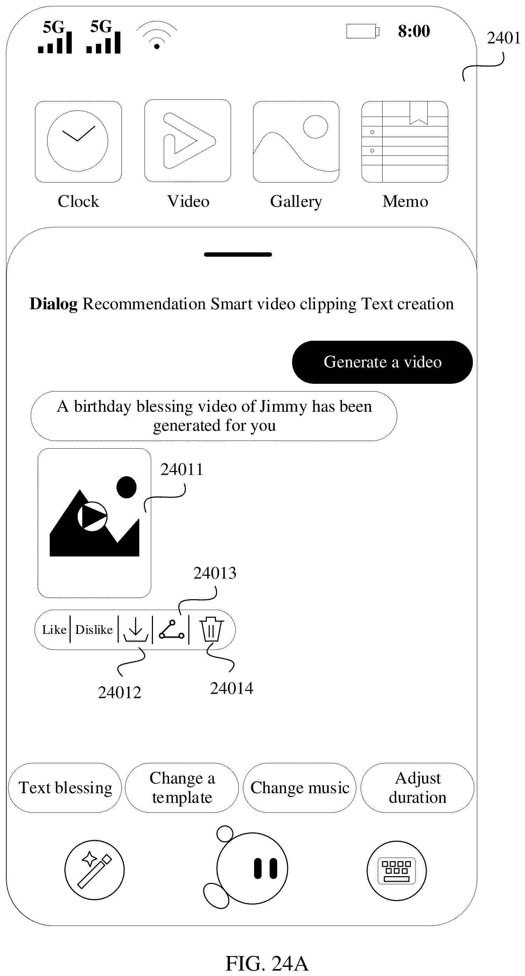

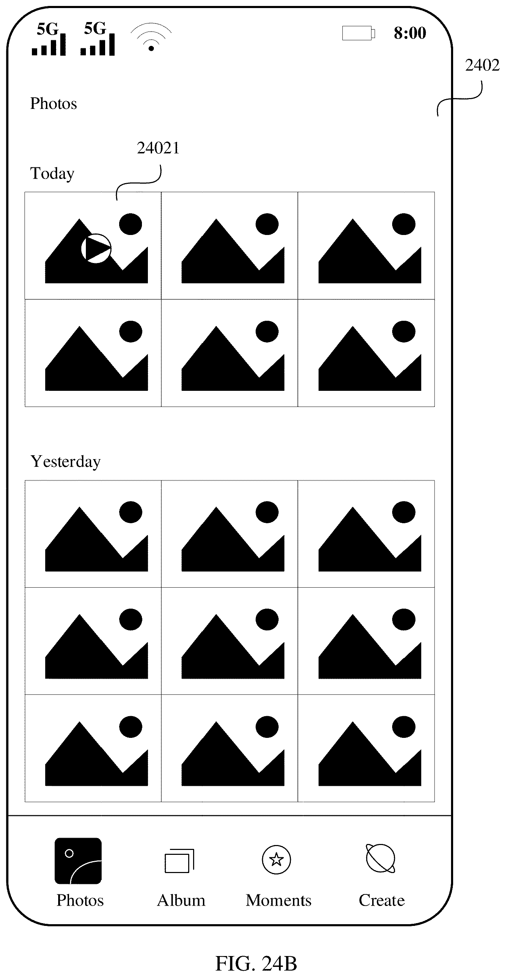

With reference to FIG. 24A and FIG. 24B, using a video 24011 in an interface 2401 as an example, "download" 24012, "share" 24013, and "delete" 24014 are displayed below the video 24011.

The "download" 24012 is a download control, and in response to a tap operation of the user on the "download" 24012, the mobile phone may download the video 24011 and save the video 24011 to the gallery application. For example, after saving the video 24011 to the gallery application, the mobile phone may display an interface 2402, where the interface 2402 is the main interface of the gallery application. The interface 2402 includes a thumbnail 24021 of the video 24011.

The "share" 24013 is a share control, and in response to a tap operation of the user on the "share" 24013, the mobile phone may first download the video 24011 and save the video 24011 to the gallery application, and then continue to perform a share operation. In other words, the share control may also trigger to save the video.

The "delete" 24014 is a delete control, and in response to a tap operation of the user on the "delete" 24014, the mobile phone may delete the video 24011 in the dialog box.

An embodiment of this application further provides an electronic device. The electronic device may include: a display, a memory, and one or more processors (for example, a CPU, a GPU, and an NPU). The display, the memory, and the processors are coupled together. The memory is configured to store computer program code, where the computer program code includes computer instructions. When the processor executes the computer instructions, the electronic device may perform the functions or the steps performed by the devices in the foregoing method embodiments.

An embodiment of this application further provides a chip system. The chip system includes at least one processor and at least one interface circuit. The processor and the interface circuit may be interconnected through a line. For example, the interface circuit may receive a signal from another apparatus (for example, a memory of an electronic device). For another example, the interface circuit may be configured to transa signal to another apparatus (for example, a processor). For example, the interface circuit may read instructions stored in the memory and send the instructions to the processor. When the instructions are executed by the processor, the electronic device can be enabled to perform the steps in the foregoing embodiments. Certainly, the chip system may further include another discrete component. This is not specifically limited in this embodiment of this application.

An embodiment further provides a computer storage medium. The computer storage medium stores computer instructions. When the computer instructions are run on an electronic device, the electronic device is enabled to perform the foregoing related method steps, to implement the image processing method in the foregoing embodiments.

An embodiment further provides a computer program product. When the computer program product is run on a computer, the computer is enabled to perform the foregoing related steps, to implement the image processing method in the foregoing embodiments.

In addition, an embodiment of this application further provides an apparatus. The apparatus may be specifically a chip, a component, or a module. The apparatus may include a processor and a memory that are connected. The memory is configured to store computer executable instructions. When the apparatus runs, the processor may execute the computer executable instructions stored in the memory, so that the chip performs the image processing method in the foregoing method embodiments.

The electronic device, the computer storage medium, the computer program product, or the chip provided in this embodiment is configured to perform the corresponding methods provided above. Therefore, for beneficial effects that can be achieved, refer to beneficial effects in the corresponding methods provided above. Details are not described herein again.

Based on the descriptions of the foregoing implementations, a person skilled in the art may clearly understand that, for a purpose of convenient and brief description, division into the foregoing functional modules is used as an example for illustration. In actual application, the foregoing functions may be allocated to different functional modules and completed based on requirements. In other words, an inner structure of an apparatus is divided into different functional modules to complete all or some of the functions described above.

In the several embodiments provided in this application, it should be understood that the disclosed apparatuses and methods may be implemented in other manners. For example, the described apparatus embodiments are merely examples. For example, division into the modules or units is merely logical function division, and may be other division during actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed in a plurality of different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be reflected in a form of a software product. The software product is stored in a storage medium and includes several instructions for enabling a device (which may be a single-chip microcomputer, a chip, or the like) or a processor (processor) to perform all or some of steps of methods in embodiments of this application. The foregoing storage medium includes: any medium that can store program code, for example, a USB flash drive, a removable hard disk, a read-only memory (Read-Only Memory, ROM), a random access memory (Random Access Memory, RAM), a magnetic disk, or an optical disc.

Finally, it should be noted that the foregoing embodiments are merely intended for describing the technical solutions of this application rather than limiting this application. Although this application is described in detail with reference to preferred embodiments, persons of ordinary skill in the art should understand that modification or equivalent replacement can be performed on the technical solutions of this application without departing from the spirit and the scope of the technical solutions of this application.

## Claims

1. A video creation method, applied to an electronic device, wherein the method comprises:
displaying a first search result in response to a first image search request, wherein the first search result comprises first thumbnails of a plurality of first image materials and a first control;
displaying a first video in response to a trigger operation on the first control in the first search result, wherein the first video comprises the plurality of first image materials;
displaying a second search result in response to a second image search request, wherein the second search result comprises options of a plurality of first photo albums and the first control, the plurality of first photo albums comprise a second photo album, and the second photo album comprises a plurality of second image materials;
selecting the second photo album in response to a selection operation on an option of the second photo album; and
displaying a second video in response to a trigger operation on the first control in the second search result, wherein the second video comprises the plurality of second image materials.

2. The method according to claim 1, wherein the second image search request comprises a selection operation on an option of a second topic, or the second image search request comprises a trigger operation on a second creation recommendation card; and
the second topic is a topic of a video creation type, the second creation recommendation card is a creation recommendation card of video creation, and topic content of the second topic and a recommendation theme of the second creation recommendation card comprise at least one of the following: birthday, holiday, anniversary, trip, and growth record.

3. The method according to claim 2, wherein the first image search request comprises a selection operation on an option of a first topic, or the first image search request comprises a trigger operation on a first creation recommendation card; and
the first topic is a topic of the video creation type, the first creation recommendation card is a creation recommendation card of video creation, and topic content of the first topic and a recommendation theme of the first creation recommendation card do not comprise the birthday, the holiday, the anniversary, the trip, or the growth record.

4. The method according to any one of claims 1 to 3, wherein displaying the first search result in response to the first image search request comprises:
displaying the first search result in response to the first image search request when a quantity of image materials that are found by the electronic device and that match the first image search request is less than a first quantity; and
displaying the second search result in response to the second image search request comprises:
displaying the second search result in response to the second image search request when a quantity of image materials that are found by the electronic device and that match the second image search request is greater than or equal to a second quantity.

5. The method according to any one of claims 1 to 4, wherein displaying the second search result in response to the second image search request, wherein the second search result comprises the options of the plurality of first photo albums comprises:
the plurality of first photo albums comprising photo albums of at least two of the following types: a group photo type, a portrait photo type, a birthday type, a festival type, and a trip type in response to the second image search request when the second image search request comprises searching for image materials of people; and
the plurality of first photo albums comprising photo albums of at least two of the following types: a portrait type, a building type, a scenery type, and a group photo type in response to the second image search request when the second image search request comprises searching for image materials of trips.

6. The method according to any one of claims 1 to 5, wherein the second search result further comprises an add entry for a custom photo album; and
before displaying the second video in response to the trigger operation on the first control in the second search result, the method further comprises:
displaying thumbnails of a plurality of image materials in a gallery application of the electronic device in response to a trigger operation on the add entry for the custom photo album; and
displaying the second search result in response to a selection operation and an add confirmation operation on at least one second thumbnail, wherein the add entry for the custom photo album in the second search result is updated as the custom photo album, the custom photo album is selected, and the at least one second thumbnail corresponds to at least one third image material in the gallery application, wherein
the second video further comprises the at least one third image material.

7. The method according to any one of claims 1 to 6, wherein the method further comprises:
displaying a first edit control of the second video in response to the trigger operation on the first control in the second search result when the second image search request meets a first condition; and
displaying a second edit control of the second video in response to the trigger operation on the first control in the second search result when the second image search request does not meet the first condition, wherein
the first condition comprises: the image search request comprises a selection operation on an option of a third topic, wherein the third topic is a topic of the video creation type; or the image search request comprises a trigger operation on a third creation recommendation card, wherein the third creation recommendation card is a creation recommendation card of video creation; and topic content of the third topic and a recommendation theme of the third creation recommendation card comprise at least one of the following: the birthday, the holiday, and the anniversary.

8. The method according to claim 7, wherein after displaying the first edit control of the second video, the method further comprises:
displaying a first blessing in response to a trigger operation on the first edit control of the second video; and
displaying a third video in response to a confirmation operation, wherein the third video comprises the plurality of second image materials and the first blessing.

9. The method according to claim 8, wherein after displaying the third video response to the confirmation operation or before displaying the second search result in response to the second image search request, the method further comprises:
displaying a third search result in response to a third image search request, wherein the third search result comprises options of a plurality of third photo albums and the first control, the plurality of third photo albums comprise a fourth photo album, and the fourth photo album comprises a plurality of fourth image materials;
selecting the fourth photo album in response to a selection operation on an option of the fourth photo album;
displaying a fourth video and the first edit control of the fourth video in response to a trigger operation on the first control in the third search result when the third image search request meets the first condition, wherein the fourth video comprises the plurality of fourth image materials;
displaying a second blessing in response to a trigger operation on the first edit control of the fourth video, wherein the second blessing is different from the first blessing; and
displaying a fifth video in response to a confirmation operation, wherein the fifth video comprises the plurality of fourth image materials and the second blessing, wherein
the third image search request is different from the second image search request, and/or, the fourth photo album and the first photo album are photo albums of different types.

10. The method according to claim 8 or 9, wherein displaying the third video in response to the confirmation operation comprises:
displaying the third video after the second video in response to the confirmation operation.

11. The method according to any one of claims 1 to 10, wherein after displaying the second video, the method further comprises:
displaying an edit interface of the second video in response to a trigger operation on the second video; and
replacing the second video with a sixth video in response to a return operation after editing is completed and saved in the edit interface, wherein the sixth video is a video obtained after the editing is saved.

12. The method according to any one of claims 1 to 11, wherein the method further comprises:
displaying a creation recommendation card when at least one of a time of the electronic device, a place of the electronic device, and a newly added image material in the gallery application meets a second condition, wherein the first image search request and/or the second image search request comprise/comprises a trigger operation on the creation recommendation card.

13. The method according to any one of claims 1 to 12, wherein the method further comprises:
displaying a first interface of the gallery application in response to starting the gallery application, wherein the first interface comprises a floating image search entry; or displaying the first interface of the gallery application in response to starting the gallery application; and displaying the floating image search entry in the first interface when a sliding speed of the first interface exceeds a first speed and/or a sliding displacement of the first interface exceeds a first displacement; and
displaying a dialog box in response to a trigger operation on the floating image search entry, wherein
the first image search request and/or the second image search request comprise/comprises inputting image search voice or image search text in the dialog box.

14. A video creation method, applied to an electronic device, wherein a voice assistant application and a gallery application are installed in the electronic device, and the method comprises:
starting the voice assistant application and displaying a dialog box;
displaying a search result in the dialog box in response to an image search request, wherein the search result comprises information about at least one image material in image materials found in the gallery application and a first control; and
displaying a first video in the dialog box in response to a trigger operation on the first control, wherein the first video comprises one or more found image materials.

15. The method according to claim 14, wherein starting the voice assistant application comprises:
starting the voice assistant application in response to a first operation, wherein
the first operation comprises any one of the following: an operation of waking up the voice assistant application; a trigger operation on an application icon of the voice assistant application; a trigger operation on a creation recommendation card; and a trigger operation on a floating image search entry in the gallery application.

16. The method according to claim 14, wherein starting the voice assistant application and displaying the dialog box comprises:
starting the voice assistant application in response to a trigger operation on a video creation entry in a first case, displaying topic options of a plurality of topics of a video creation type, wherein the topic options of the plurality of topics of the video creation type comprise a target topic option, and displaying the dialog box in response to a selection operation of a user on the target topic option; and
starting the voice assistant application in response to the trigger operation on the video creation entry in a second case, and displaying the dialog box, wherein the dialog box comprises a guiding script, and the guiding script is used to guide the user to input the image search request, wherein
the first case comprises: the trigger operation on the video creation entry is not received, or an image in the gallery application does not meet a creation condition; and the second case comprises: the trigger operation on the video creation entry is received, and the image in the gallery application meets the creation condition.

17. The method according to any one of claims 14 to 16, wherein the image search request comprises any one of the following: the trigger operation on the creation recommendation card, the selection operation on the target topic option, and inputting voice or text indicating image search in the dialog box.

18. The method according to claim 17, wherein the image search request comprises a selection operation on a target topic option of a second topic, or the image search request comprises a trigger operation on a second creation recommendation card, and the information about the at least one image material comprises a thumbnail of the at least one image material, wherein
the second topic is a topic of the video creation type, the second creation recommendation card is a creation recommendation card of video creation, and topic content of the second topic and a recommendation theme of the second creation recommendation card comprise at least one of the following: birthday, holiday, anniversary, trip, and growth record.

19. The method according to claim 17, wherein the image search request comprises a selection operation on a target topic option of a first topic, or the image search request comprises a trigger operation on a first creation recommendation card, the search result further comprises options of a plurality of photo albums, one photo album comprises one or more image materials, the information about the at least one image material comprises option covers of the plurality of photo albums, and the option cover of each photo album is a thumbnail of one image material comprised in the photo album, wherein
the first topic is a topic of the video creation type, the first creation recommendation card is a creation recommendation card of video creation, and topic content of the first topic and a recommendation theme of the first creation recommendation card do not comprise the birthday, the holiday, the anniversary, the trip, or the growth record.

20. The method according to claim 19, wherein the plurality of photo albums comprise a second photo album; and
before displaying the first video obtained through creation in the dialog box in response to the trigger operation on the first control, the method further comprises:
selecting the second photo album in response to a selection operation on an option of the second photo album, wherein
the first video obtained through creation comprises an image material in the second photo album.

21. The method according to any one of claims 14 to 20, wherein the method further comprises:
displaying a first edit control in response to the trigger operation on the first control when the image search request meets a first condition; and
displaying a second edit control in response to the trigger operation on the first control when the image search request does not meet the first condition, wherein
the first condition comprises: the image search request comprises a selection operation on an option of a third topic, wherein the third topic is a topic of the video creation type; or the image search request comprises a trigger operation on a third creation recommendation card, wherein the third creation recommendation card is a creation recommendation card of video creation; and topic content of the third topic and a recommendation theme of the third creation recommendation card comprise at least one of the following: the birthday, the holiday, and the anniversary.

22. The method according to claim 21, wherein after displaying the first edit control, the method further comprises:
displaying a first blessing in response to a trigger operation on the first edit control; and
displaying a second video in response to a confirmation operation, wherein the second video comprises the one or more found image materials and the first blessing.

23. The method according to claim 22, wherein displaying the second video in response to the confirmation operation comprises:
displaying the second video after the first video in response to the confirmation operation.

24. The method according to any one of claims 14 to 23, wherein after displaying the first video in the dialog box, the method further comprises:
displaying an edit interface of the first video in response to a trigger operation on the first video; and
replacing the first video with a third video in response to a return operation after editing is completed and saved in the edit interface, wherein the third video is a video obtained after the editing is saved.

25. An electronic device, comprising: a display, one or more processors, and one or more memories, wherein the one or more processors are coupled to the display and the one or more memories, the one or more memories are configured to store computer program code, the computer program code comprises computer instructions, and when the one or more processors execute the computer instructions, the electronic device is enabled to perform the method according to any one of claims 1 to 24.

26. A computer-readable storage medium, storing computer instructions, wherein when the computer instructions are run on an electronic device, the electronic device is enabled to perform the method according to any one of claims 1 to 24.

27. A computer program product, comprising computer instructions, wherein when the computer program product is run on a computer, the computer is enabled to perform the method according to any one of claims 1 to 24.
